(19) Europäisches Patentamt
European Patent Office
Office européen des brevets

(11) EP 0 996 047 B1

(12) **EUROPEAN PATENT SPECIFICATION**

(45) Date of publication and mention of the grant of the patent:
**02.05.2003 Bulletin 2003/18**

(51) Int Cl.[7]: **G05D 1/02**

(21) Application number: **00100132.0**

(22) Date of filing: **10.12.1990**

(54) **Integrated vehicle positioning and navigation system, apparatus and method**

Integriertes Fahrzeugpositionier- und -navigationssystem, dessen Vorrichtung und Verfahren

Procédé, appareil et système de navigation et de positionnement intégrés pour véhicules et de positionnement

(84) Designated Contracting States:
**DE FR GB SE**

(30) Priority: **11.12.1989 WOPCT/US89/05580**

(43) Date of publication of application:
**26.04.2000 Bulletin 2000/17**

(62) Document number(s) of the earlier application(s) in accordance with Art. 76 EPC:
**95110798.6 / 0 679 974**
**91902277.2 / 0 507 845**

(73) Proprietor: **CATERPILLAR INC.**
**Peoria Illinois 61629-6490 (US)**

(72) Inventors:
- **Kyrtsos, Christos T.**
  **Peoria, Illinois 61615 (US)**
- **Gudat, Adam J.**
  **Edelstein, Illinois 61616 (US)**
- **Christensen, Dana A.**
  **Derby DE12 7DB (GB)**
- **Friedrich, Douglas W.**
  **Pekin, Illinois 61554 (US)**
- **Stafford, Darrell E.**
  **Grants Pass Oregon 97527-6151 (US)**
- **Sennott, James W.**
  **Bloomington, Illinois 61701 (US)**
- **Bradbury, Walter J.**
  **Peoria, Illinois 61614 (US)**
- **Clow, Richard G.**
  **Phoenix, Arizona 85027 (US)**
- **Devier, Lonnie J.**
  **Tarumi KU 655 0872 Kobe (JP)**
- **Kemner, Carl A.**
  **Peoria Heights, Illinois 61614 (US)**
- **Kleimenhagen, Karl W.**
  **Peoria, Illinois 61614 (US)**
- **Koehrsen, Craig L.**
  **Peoria, Illinois 61604 (US)**
- **Lay, Norman K.**
  **Peoria, Illinois 61615 (US)**
- **Peterson, Joel L.**
  **Peoria, Illinois 61615 (US)**
- **Rao, Prithvi N.**
  **Pittsburgh, Pennsylvania 15206 (US)**
- **Schmidt, Larry E.**
  **Peoria, Illinois 61614 (US)**
- **Shaffer, Gary K.**
  **Butler, Pennsylvania 16001 (US)**
- **Shi, WenFan**
  **Pittsburgh, Pennsylvania 15213 (US)**
- **Shin, Dong Hun**
  **Dong Dae Mun-Gu Jen Nong-Dong 90 (KR)**
- **Singh, Sanjiv J.**
  **Pittsburgh, Pennsylvania 15217 (US)**
- **Weinbeck, Louis J.**
  **Livingston Texas 77399-1036 (US)**
- **West, Jay H.**
  **Junction City, Kansas 66441 (US)**
- **Whittaker, William L.**
  **Pittsburgh, Pennsylvania 15207 (US)**
- **Wu, BaoXin**
  **Pittsburgh, Pennsylvania 15213 (US)**

(74) Representative: **Haley, Stephen et al**
**Gill Jennings & Every,**
**Broadgate House,**
**7 Eldon Street**
**London EC2M 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

(56) References cited:
**GB-A- 2 158 965** **US-A- 4 700 302**
**US-A- 4 860 209**

- **NELSON W L: "CONTINUOUS STEERING-FUNCTION CONTROL OF ROBOT CARTS" IEEE TRANSACTIONS ON INDUSTRIAL ELECTRONICS,US,IEEE INC. NEW YORK, vol. 36, no. 3, 1 August 1989 (1989-08-01), pages 330-337, XP000047822 ISSN: 0278-0046**

## Description

Background of the Invention

1. Field of the Invention

The present invention relates to positioning systems, and more particularly, to a positioning system and method for determining the terrestrial position of an autonomous vehicle on or near the planet Earth's surface.

2. Related Art

Several national governments, including the United States (U.S.) of America, are presently developing a terrestrial position determination system, referred to generically as a global positioning system (GPS). In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined.

The U.S. government has designated its GPS the "NAVSTAR." The NAVSTAR GPS will be declared operational by the U.S. government in 1993. Moreover, the government of the Union of Soviet Socialist Republics (U.S.S.R.) is currently developing a GPS known as "GLONASS," which is substantially similar to the NAVSTAR GPS.

In the NAVSTAR GPS, it is envisioned that four orbiting GPS satellites will exist in each of six separate orbits. A total of 24 GPS satellites will be in orbit at any given time with 21 GPS satellites in operation and 3 GPS satellites serving as spares. The three GPS satellite orbits will have mutually orthogonal planes relative to the Earth. The GPS satellite orbits will be neither polar orbits nor equatorial orbits. Moreover, the GPS satellites will orbit the Earth once every 12 hours.

Using the NAVSTAR GPS, the relative position of orbiting GPS satellites with respect to any Earth receiver can be determined from the electromagnetic signals. The relative position is commonly referred to as a "pseudorange." Moreover, the relative position can be calculated by two methods.

One method is to measure the propagation time delays between transmission and reception of the emanating electromagnetic signals. In the NAVSTAR GPS, the electromagnetic signals are encoded continuously with the time at which the signals are transmitted from the GPS satellites. Needless to say, one can make note of the reception time and subtract the encoded transmission time in order to derive time delays. From the calculated time delays and from knowing the speed at which electromagnetic waves travel through the atmosphere, pseudoranges can be accurately derived. Pseudoranges computed using the foregoing method are referred to in the context of this document as "actual" pseudoranges.

Another method involves satellite position data that is encoded in the electromagnetic signals being transmitted from the orbiting satellites. Almanac data relating to the satellite position data of the NAVSTAR GPS is publicly available. Reference to this almanac data in regard to data encoded in the electromagnetic signals allows for an accurate derivation of pseudoranges. Pseudoranges computed using the foregoing method are referred to in the context of this document as "estimated" pseudoranges.

However, with respect to the previous method of deriving estimated pseudoranges, it should be noted that the satellite position data is updated at the GPS satellite only once an hour on the hour. Consequently, an estimated pseudorange decreases in accuracy over time after each hour until the next hour, when a new estimated pseudorange is computed using updated satellite position data.

Furthermore, by knowing the relative position of at least three of the orbiting GPS satellites, the absolute terrestrial position (that is, longitude, latitude, and altitude with respect to the Earth's center) of any Earth receiver can be computed via simple geometric theory involving triangulation methods. The accuracy of the terrestrial position estimate depends in part on the number of orbiting GPS satellites that are sampled. Usiny more GPS satellites in the computation can increase the accuracy of the terrestrial position estimate.

Conventionally, four GPS satellites are sampled to determine each terrestrial position estimate because of errors contributed by circuit clock differentials among the Earth receiver and the various GPS satellites. Clock differentials could be several milliseconds. If the Earth receiver's clock were synchronized with that of the GPS satellites, then only three GPS satellites would need to be sampled to pinpoint the location of the Earth receiver.

In the NAVSTAR GPS, electromagnetic signals are continuously transmitted from all of the GPS satellites at a single carrier frequency. However, each of the GPS satellites has a different modulation scheme, thereby allowing for differentiation of the signals. In the NAVSTAR GPS, the carrier frequency is modulated using a pseudorandom signal which is unique to each GPS satellite. Consequently, the orbiting GPS satellites in the NAVSTAR GPS can be identified when the carrier frequencies are demodulated.

Furthermore, the NAVSTAR *GPS* envisions two modes of modulating the carrier wave using pseudorandom

number (PRN) signals. In one mode, referred to as the "coarse/acquisition" (C/A) mode, the PRN signal is a gold code sequence having a chip rate of 1.023 MHz. The gold code sequence is a well-known conventional pseudorandom sequence in the art. A chip is one individual pulse of the pseudorandom code. The chip rate of a pseudorandom code sequence is the rate at which the chips in the sequence are generated. Consequently, the chip rate is equal to the code repetition rate divided by the number of members in the code. Accordingly, with respect to the coarse/acquisition mode of the NAVSTAR GPS, there exists 1,023 chips in each gold code sequence and the sequence is repeated once every millisecond. Use of the 1.023 MHz gold code sequence from four orbiting GPS satellites enables the terrestrial position of an Earth receiver to be determined to an approximate accuracy of within 60 to 300 meters.

The second mode of modulation in the NAVSTAR GPS is commonly referred to as the "precise" or "protected" (P) mode. In the P mode, the pseudorandom code has a chip rate of 10.23 MHz. Moreover, the P mode sequences are extremely long, so that the sequences repeat no more than once every 267 days. As a result, the terrestrial position of any Earth receiver can be determined to within an approximate accuracy of 16 to 30 meters.

However, the P mode sequences are classified and are not made publicly available by the United States government. In other words, the P mode is intended for use only by Earth receivers authorized by the United States government.

In order for the Earth receivers to differentiate the various C/A signals from the different orbiting GPS satellites, the Earth receivers usually include a plurality of different gold code sources for locally generating gold code sequences. Each locally-derived gold code sequence corresponds with each unique gold code sequence from each of the GPS satellites.

The locally-derived gold code sequences and the transmitted gold code sequences are cross correlated with each other over gold code sequence intervals of one millisecond. The phase of the locally-derived gold code sequences vary on a chip-by-chip basis, and then within a chip, until the maximum cross correlation function is obtained. Because the cross correlation for two gold code sequences having a length of 1,023 bits is approximately 16 times as great as the cross correlation function of any of the other combinations of gold code sequences, it is relatively easy to lock the locally derived gold code sequence onto the same gold code sequence that was transmitted by one of the GPS satellites.

The gold code sequences from at least four of the GPS satellites in the field of view of an Earth receiver are separated in this manner by using a single channel that is sequentially responsive to each of the locally-derived gold code sequences, or alternatively, by using parallel channels that are simultaneously responsive to the different gold code sequences. After four locally-derived gold code sequences are locked in phase with the gold code sequences received from four GPS satellites in the field of view of the Earth receiver, the relative position of the Earth receiver can be determined to an accuracy of approximately 60 to 300 meters.

The foregoing approximate accuracy of the NAVSTAR GPS is affected by (1) the number of GPS satellites transmitting signals to which the Earth receiver is effectively responsive, (2) the variable amplitudes of the received signals, and (3) the magnitude of the cross correlation peaks between the received signals from the different GPS satellites.

Because multiple PRN signals are received simultaneously at the Earth receiver, a common time interval exists wherein some of the codes can conflict. In other words, the codes cause a degradation in measurements of the time of arrival of each received PRN because of the cross correlations between conflicting received signals.

The time of arrival measurement for each PRN signal is made by determining the time of a peak amplitude of a cross correlation between the gold code sequence of the received PRN signal and the locally- derived PRN signal. When a locally-derived PRN signal is superimposed over a received PRN signal thereby increasing the averaging time of their cross correlation, the average noise contribution decreases. However, because the cross correlation errors between the received PRN signals are periodic, increasing the averaging time also results in increases to both the error signal and the cross correlation value between the received PRN's alike. Consequently, errors relating to the time of arrival of PRN signals are not reduced by cross correlation.

In addition to the GPS, it is known in the conventional art to use inertial systems in navigation systems to obtain position estimates of vehicles. Such an inertial reference unit (IRU) obtains specific-force measurements from accelerometers in a reference coordinate frame which is stabilized by gyroscopes, or gyros. An IRU can be of several types, including for example, laser, mechanical, or fiber optic. In an unaided navigation system using an IRU, the specific force (corrected for the effects of the Earth's gravity) as measured by an accelerometer is integrated into a navigation mathematical equation to produce the vehicle's position and velocity.

The instrument measurements of the IRU may be specified in a different rectangular coordinate frame than the reference navigation frame, depending on the platform implementation. The most commonly used reference navigation frame for near Earth navigation is the local-level frame (east-north-vertical). Several gimballed platform implementations exist with the forgoing reference navigation frame.

In a gimballed, local level-north seeking IRU, the gyroscopes and accelerometers are mounted on a platform which is torqued to maintain the platform level and azimuth pointing to the north. The platform is the reference plane. In contrast, in a gimballed, local-level azimuth-wander IRU, the platform is maintained level, but is not torqued about

the vertical axis.

Furthermore, in a strap-down IRU, the gyroscopes and the accelerometers are directly mounted on the vehicle body. They measure the linear and angular motion of the vehicle relative to inertial space. The motion is expressed in vehicle coordinates. Therefore, in a strap-down IRU, it is necessary to first compute the altitude of the vehicle to the referenced navigation frame. Then, the computed altitude is used to transform the accelerometer measurements into the reference frame. After the accelerometer data of a strap-down IRU has been extrapolated into the reference frame, the solution of the navigation equations mentioned previously is identical in both the gimballed IRU and the strap-down IRU.

In the strap-down IRU, the altitude computations, which are required to resolve accelerometer measurements, are usually carried out at a high rate. The computations suffer from numerical errors because of the limited computer byte size and throughput availability. These computation errors depend on the frequency response of the sensor loop, data rate, and resolution and magnitude of the sensor output at the sampling time.

However, significant benefits arise from using the strap-down IRU, rather than the gimballed IRU. The strap-down IRUs are less costly. Moreover, the strap-down IRUs are generally smaller in physical size. Thus, the potential to realize size and cost savings in IRUs can make strap-down IRUs attractive for both military and commercial applications.

The performance of navigation systems using IRUs is primarily limited by errors contributed by the various constituent sensors within the IRUs. Gyroscopes drift. Accelerometers have inherent biases. Further, errors are contributed from improper scale factors and improper IRU alignment angles. Typically, the preceding errors cause inaccuracies in the estimates of vehicle positions, velocity, and altitude, which accumulate over time as a vehicle mission progresses. To some extent, the errors are dependent on user dynamics.

If a very accurate navigation system is required for a vehicle, high precision gyroscopes and accelerometers can be utilized to satisfy that need. However, such high precision equipment increases the complexity and costs of the vehicle.

EP-A-0181012 discloses a vehicle position estimating system combining GPS and inertial navigation systems. IEEE Position Location and Navigation Symposium, 4-7 Nov 1986, discloses an inertial navigation system with GPS comparison.

DE-A-3310111 discloses a navigation system with drift compensation. US-A-3630079 discloses a navigation system utilizing multiple sensors and error correction.

GB-A-2158965 discloses a vehicle control and guidance system in which a desired route for the vehicle is stored in the vehicle in the form of co-ordinates in a ground reference frame.

US-A-4700302 discloses an automatic guidance system for an unmanned vehicle which causes the unmanned vehicle to move to a destination by a combination of travelling along a preset course and turning and stopping at predetermined positions.

According to the present invention, there is provided a system for a vehicle for enabling the vehicle to track a preset path comprising:

means for executing vehicle commands causing the vehicle to attempt to follow the preset path;
means for periodically calculating errors in following the preset path;
means, responsive to the calculated errors, for adjusting the vehicle commands to reduce the calculated errors, whereby the vehicle tracks the preset path with a high degree of accuracy; characterised in that the means, responsive to the calculated errors, for adjusting the vehicle commands to reduce the calculated errors, includes means for constructing a smooth path back to the preset path using a quintic polynomial and means for compensating for vehicle response characteristics, the vehicle response characteristics including latency of vehicle control commands, slow system response and vehicle dynamics including vehicle-ground interaction, slip angle and under/over steering.

According to the present invention, there is also provided a method for a vehicle for enabling the vehicle to track a preset path, the method comprising the steps of:

executing vehicle commands causing the vehicle to attempt to follow the preset path;
periodically calculating errors in following the preset path;
adjusting, responsive to the calculated errors, the vehicle commands to reduce the calculated errors;
whereby the vehicle tracks the preset path with a high degree of accuracy; characterised in that the step of adjusting, responsive to the calculated errors, the vehicle commands to reduce the calculated errors, includes the steps of:

constructing a smooth path back to the preset path using a quintic polynomial; and

compensating for vehicle response characteristics, the vehicle response characteristics including latency of vehicle control commands, slow system response and vehicle dynamics including vehicle-ground interaction, slip angle and under/over steering.

The present invention can be used to aid any navigation system for autonomous vehicles. The autonomous vehicles can be stationary or moving. Moreover, the autonomous vehicles can be at or near the Earth's surface. In other words, k the present invention provides for highly accurate and fast tracking of any terrestrial vehicle. It provides both apparatuses and methods, which allow for a superior positioning capability and, consequently, a flexible autonomous navigational capability.

Further features and advantages of the present invention will become apparent to one of skill in the art upon examination of the following drawings and detailed description. It is intended that any additional features and advantages be incorporated herein.

Brief Description of the Drawings

The present invention as defined in the claims can be better understood with reference to the text and to the following drawings.

Figure 1 illustrates a block diagram of the example system;
Figure 1A is a block diagram 100A of the operational GPS satellites in the NAVSTAR GPS;
Figure 2 illustrates four, simultaneous, navigation equations regarding four GPS satellites of the NAVSTAR GPS;
Figure 3 is a block diagram of a typical autonomous work site;
Figure 4 is a block diagram of the interrelationships between a navigator, a vehicle VPS architecture, and vehicle controls of the example system;
Figure 5 is a block diagram illustrating elements in an autonomous control system;
Figure 6 is a block diagram of a GPS processing system;
Figure 7 is a block diagram of an MPS, including an odometer 902 and an inertial reference unit (IRU) 904;
Figure 8 is a block diagram of the VPS;
Figure 9 is a block diagram of the VPS architecture of Figure 8;
Figure 10 is a flowchart of an original bias technique;
Figure 10A is a flowchart of a parabolic bias technique;
Figure 11 is a flowchart of a base residuals bias technique;
Figure 11A is a flowchart of a base correlator bias technique;
Figure 12 is a diagram of vehicle route definitions;
Figure 13 is a graphical illustration of a clothoid curve;
Figure 14 is a diagram showing the replanning of a path;
Figure 15 is a block diagram of a path tracking control architecture/hardware;
Figure 16 is a diagram showing relevant postures in steering planning cycle;
Figure 17 is a diagram showing how an error vector including curvature is computed;
Figure 18 is a diagram showing how an error vector including curvature is computed with the vehicle path included;
Figure 19 is a context diagram of the navigator;
Figure 20 is a context diagram of a path tracking structure;
Figure 21A-21D are data flow summaries of the navigator 406;
Figure 22A is an illustration of a vehicle mounted scanner 404;
Figure 22B is an illustration of an autonomous vehicle scanning for an obstacle;
Figure 23 is a diagram of an autonomous vehicle avoiding obstacles;
Figure 24 is a block diagram 4300 of a control system for an autonomous mining vehicle;
Figure 25 is a state diagram showing the transitions between modes of operation of the control system of Figure 24;
Figure 26 is a high level block diagram of a speed control;
Figure 27 is a high level block diagram of a service brakes controls circuit of the speed control;
Figure 28 is a block diagram of a governor control circuit of the speed control of the preferred embodiment;
Figure 29 is a block diagram of a steering control circuit;
Figure 30 is a block diagram of a park brake control circuit;
Figure 31 is a block diagram of a tricycle steering model used to develop a navigation system;
Figure 32 is a block diagram showing an embodiment of a shutdown circuit of the present invention; and
Figure 33 is a communications diagram showing tasks of a navigator.

I. Definitions

**(1)** "Absolute position" in the context of this document refers to a position relative to the center of the Earth. Generally, an absolute position will be in reference to a vehicle or the base station, both on or near the Earth's surface. First, second, and third position estimates are all absolute positions in the preferred embodiment of the present invention.

**(2)** "Actual pseudorange" means an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Actual pseudoranges are approximated by first measuring the propagation time delays between transmission and reception of the electromagnetic signals emanated from the GPS satellites and/or pseudolites. Actual pseudoranges can be readily calculated by multiplying the calculated time delays by the speed of light, or 2.9979245898 * $10^8$ m/s.

**(3)** "Anti-selective availability" refers to a method/technique/process for detecting and compensating for corrupted GPS data in the coarse/acquisition (C/A) mode of modulation.

**(4)** "Autonomous" is used in this document in its conventional sense. It indicates operation which is either completely automatic or substantially automatic or without significant human involvement in the operation. Generally, an autonomous vehicle means an unmanned vehicle in operation, or a vehicle in operation without a human pilot or co-pilot. However, an autonomous vehicle may be driven or otherwise operated automatically and also have a human passenger(s) as well.

**(5)** "Base correlator bias" means a spatial bias derived in accord with the flowchart 1700A of Figure 11A.

**(6)** "Base correlator bias technique" means a method/process for computing base correlator biases.

**(7)** "Base estimated position" or "BEP" refers to the relative position of the base station with respect to a vehicle. The BEP is used in the base correlator bias.

**(8)** "Base known position" or "BKP" is the absolute position of the base station (used as a reference point) which is known. The BKP can be an estimate itself, derived from any accurate positioning system. The BKP is assumed to be a more accurate estimate of the base station's absolute position than any other position estimate.

**(9)** "Base position estimate" means the absolute position estimate of the base station as derived from the GPS processing system within the host processing system. The base position estimate is substantially similar to the first position estimate derived by the GPS processing system at the vehicle. The base position estimate is computed in the base residuals bias technique.

**(10)** "Base residuals bias" means a spatial bias which is the effective difference in the base known position (BKP) of the base station and the position estimate of the base station which is computed by the host processing system.

**(11)** "Base residuals bias technique" refers to a method for deriving base residuals biases.

**(12)** "Bias" refers to a differential between two measurements, usually position estimates (spatial bias) or clock rates (clock bias). Because one measurement is usually known to be more accurate than another, the bias is often times referred to as an "error."

**(13)** "Clock bias" means the difference in the clock times between (1) the transmission circuitry of GPS satellites and/or pseudolites and (2) the reception circuitry of an Earth receiver. When using a clock bias in the computation of a spatial bias, the clock bias is multiplied by the speed of light, or 2.998 * $10^8$ meters per second. Consequently, the clock bias is transformed into units of length.

**(14)** "Constellation" refers to a group comprised of GPS satellites and/or pseudolites whose signals are utilized to derive an absolute position estimate of a point on or near the Earth's surface. See "optimal constellation" below.

**(15)** "Constellation effects method" means a technique or process by which an optimal constellation of GPS satellites is selected from a larger group of GPS satellites in view of a vehicle.

**(16)** "Data radio" refers to a transmitter, receiver, transceiver, or any combination thereof, for communicating data at radio frequencies (RF).

**(17)** "Earth receiver" refers to any apparatus or device, or any part thereof, which receives and processes signals from a GPS and/or pseudolites. Earth receivers may be situated on or near the Earth's surface. Moreover, earth receivers may take the form of, for example, a vehicle or a base station.

**(18)** "Estimated pseudorange" refers to an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Estimated pseudoranges are computed from GPS data encoded on the electromagnetic signals being transmitted from the GPS satellites and/or the pseudolites. Almanac equations for computing estimated pseudoranges from the GPS data of the NAVSTAR GPS are publicly available.

**(19)** "First position estimate" or "FPE" or "FPE(i)" refers to an estimated absolute position of any vehicle which is outputted, in any form, from the GPS. The first position estimate and a second position estimate are independently derived in the present invention. Subsequently, these estimates are combined and filtered to derive a third position estimate. Consequently, the accuracy of the first position estimate affects the accuracy of the third position estimate.

**(20)** "GLONASS GPS" refers to the GPS which has been designed and which is currently being deployed by the U.S.S.R.

**(21)** "Global positioning system" or "GPS" is a type of terrestrial position determination system. In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined. The U.S. government has designated its GPS the "NAVSTAR." The government of the U.S.S.R. has designated its GPS the "GLONASS."

**(22)** "GPS data" means all data encoded on signals transmitted from GPS satellites of a GPS. GPS data includes, for example, ephemeris data and time data.

**(23)** "GPS processing system" refers to the system of the present invention for receiving signals from a terrestrial position determination system and for deriving first position estimates of vehicles from the received signals. In the preferred embodiment, the GPS processing system receives electromagnetic signals from GPS satellites of a GPS and/or from pseudolites.

**(24)** "Host processing system" refers to a computer system which is operating at the base station for performing methods and techniques which increase the accuracy of position estimates of vehicles. Data derived from these methods and techniques is transmitted to vehicles so that the vehicles can use the data when computing first, second, and third position estimates. In the preferred embodiment, the architecture/hardware of the host processing system is substantially similar to the architecture/hardware of the VPS.

**(25)** "Inertial reference unit" or "IRU" refers to a system, usually on-board a vehicle, for aiding in the derivation of a second position estimate of the vehicle. An IRU obtains specific-force measurements from accelerometers in a reference coordinate frame which is stabilized by gyroscopes, or gyros. An IRU can be of a laser type or a mechanical type. In an unaided navigation system using an IRU, the specific force (corrected for the effects of the Earth's gravity) as measured by an accelerometer is integrated into a navigation mathematical equation to produce the vehicle's position and velocity. In the preferred embodiment, the IRU is part of the MPS.

**(26)** "Kalman filter" is used in its conventional sense. It refers to a software program for filtering out noise or errors in data. In the preferred embodiment, a GPS Kalman filter is utilized to filter out noise or errors in the GPS processing system in order to enhance the accuracy of first position estimates. Also, a VPS Kalman filter is utilized to filter out noise in the VPS in order to enhance the accuracy of second position estimates.

**(27)** "Motion positioning system" or "MPS" means a system comprising at least an IRU and a vehicle odometer.

In the preferred embodiment, the MPS derives the second position estimate of any vehicle on or near the Earth's surface. Moreover, an MPS need not be present at the base station due to its stationary nature.

**(28)** "Optimal constellation" means a satellite constellation in which the relative positions of the GPS satellites in space affords superior triangulation capabilities in order to derive the most accurate estimate of a point on or near the Earth's surface.

**(29)** "Original bias" means a spatial bias calculated by subtracting both estimated pseudoranges and clock biases (in units of length) from actual pseudoranges. Clock biases are transformed into units of length by multiplying them by the speed of light, or 2.9979245898 * $10^8$ meters per second.

**(30)** "Original bias technique" is a method for computing original biases.

**(31)** "NAVSTAR GPS" means the GPS which has been designed and which is currently being deployed by the U. S. government.

**(32)** "Navigation system" refers to any systems and/or methods for guiding any vehicle on or near the Earth's surface. The navigation system can be on-board a vehicle. The VPS of the present invention can supply the navigation system of the vehicle with a very accurate, third position estimate of the vehicle so that the navigation system can thereby precisely guide the vehicle.

**(33)** "Parabolic bias" is a spatial bias computed by constructing parabolic models for the actual pseudoranges of each observed GPS satellite and extrapolating values from the parabolic models. In the preferred embodiment, the parabolic biases are the actual pseudoranges minus the value extrapolated from the constructed parabolic models and minus the clock biases (in units of length, via multiplying by the speed of light).

**(34)** "Parabolic bias technique" is a method for computing parabolic biases for each of the GPS satellites that are utilized.

**(35)** "Preferred embodiment" refers to the best mode of implementing the present invention. The preferred embodiment is merely exemplary. The present invention should not be interpreted as being limited by the preferred embodiment.

**(36)** "Pseudolite" refers to a radiating system on or near the Earth's surface for emulating a GPS satellite. In the preferred embodiment, electromagnetic signals, similar to those from GPS satellites, are transmitted from land-based pseudolites. One or more pseudolites can be used to emulate GPS satellites to enhance the computation of first position estimates.

**(37)** "Pseudolite data" means all data encoded on signals received from pseudolites. Pseudolite data resembles GPS data in many respects and includes similar information.

**(38)** "Pseudorange" means the distance between a source of a terrestrial position determination system and a point on or near the Earth's surface. In the preferred embodiment, sources can be GPS satellites and/or pseudolites. The terrestrial position determination system can be a GPS used with pseudolites, if any. Further, the point on or near the Earth's surface can be the base station and/or vehicles.

**(39)** "Satellite position predictor" is a method for determining the future positions of GPS satellites. The method allows for the selection of optimal constellations ahead of time.

**(40)** "Second position estimate" or "SPE" refers to an estimated absolute position of any vehicle which is outputted, in any form, from the MPS. Second position estimates include at least position information from an IRU. The second position estimate could include position information from a vehicle odometer situated on a vehicle.

**(41)** "Spatial bias" refers to a bias related to approximations of positions in two-dimensional or three-dimensional space. Spatial biases are used to offset a position estimate to enhance the accuracy of the position estimate. Spatial biases can be computed by a number of different methods of the present invention. Included in these methods are, for example, an original bias technique 1500, a parabolic bias technique 1600, a base residuals bias technique 1700, and a base correlator bias technique 1700A.

**(42)** "System" is used for shorthand purposes to mean apparatus, method, or a combination of both apparatus and method. Moreover, it could include software, hardware, or a combination of hardware and software.

**(43)** "Position determination system" means any system having sources which emanate signals which can be used by a receiver of the signals to estimate the relative distance between the sources and the receiver. The signals may be in the form of, for example, electromagnetic waves, percussion waves, and/or sound waves.

**(44)** "Terrestrial position determination system" means any position determination system which can be used to ultimately estimate the terrestrial position of an Earth receiver. The signals may be in the form of, for example, electromagnetic waves, percussion waves, and/or sound waves. In the preferred embodiment, the terrestrial position determination system is the NAVSTAR GPS.

**(45)** "Third position estimate" or "TPE" refers an estimated absolute position of any vehicle that is outputted, in any form, from the VPS. Third position estimates are more accurate position estimates of vehicle positions than the first and second position estimates. Third position are derived by the VPS processing system from the first and second position estimates.

**(46)** "Vehicle" means any carrier for the transportation of physical things. Vehicles may take the form of mining trucks, construction trucks, farm tractors, automobiles, ships, boats, trains, balloons, missiles, or aircraft. A Caterpillar Inc. 785 off-highway truck is utilized.

**(47)** "Vehicle positioning system" or "VPS" refers to the system of the present invention for deriving position estimates of any vehicle. The position estimates from the VPS are extremely accurate and can be used by a navigation system on any vehicle to accurately guide the vehicle. In the preferred embodiment, position estimates from the VPS are referred to as third position estimates.

**(48)** "VPS processing system" means the processing system of the VPS. The VPS processing system derives third position estimates from the first and second position estimates. The architecture is depicted in Figures 10 and 11.

**(49)** "Weighted combiner" refers to a particular software program which processes data. Inputted data is assigned a predetermined weighing factor based on the estimated accuracy of the data and the technique used to gather the data. For example, the first position estimate of the GPS signal 716 is weighted heavier than the second position estimate of the IRU signal 910 because the former is inherently more accurate. Furthermore, the velocity measured by the IRU can be weighted heavier than the velocity measured by the GPS processing system because the former is more accurate. The velocity measured by the GPS processing system is not used at all, but could be used in other implementations.

**(50)** "Weighted path history technique" is a method or process for increasing the accuracy of first position estimates outputted from the GPS processing system. The technique uses previous first position estimates to derive a vehicle path model for testing the validity of future first position estimates. Use of the weighted path history technique results in a reduction to wandering of first position estimates and in enhanced immunities to spurious position computations.

## II. General Overview

Figure 1 illustrates a high level block diagram 100 of the preferred embodiment of the present invention. To provide for the accurate autonomous operation of a vehicle 102 on or near the Earth's surface, the present invention includes both a vehicle positioning system (VPS) 1000 and a navigation system 1022. Both of these systems include apparatus, methods, and techniques which, when integrated together, provide for highly accurate control of unmanned vehicles.

### A. Vehicle Positioning System (VPS)

The task of guiding the autonomous vehicle 102 along a prescribed path requires, among other things, an accurate estimate of the vehicle's current position relative to some reference point. Once the current position is known, the vehicle 102 can be commanded to proceed to its next destination.

Using the VPS 1000 of the present invention, position estimates of the vehicle 102 can be determined with

extreme preciseness. The VPS 1000 receives GPS data from GPS satellites 104 of a GPS, such as the NAVSTAR GPS or the GLONASS GPS.

Figure 1A illustrates the NAVSTAR GPS. GPS satellites 130-168 travel around the Earth 172 in six orbits 174-184.

Referring back to Figure 1, the VPS 1000 also may receive pseudolite data from a pseudolite(s) 105. The term "pseudolite" in the context of this document means a radiating device on or near the Earth's surface for emulating a GPS satellite.

From the GPS data and/or the pseudolite data, the VPS 1000 derives accurate estimates of position of the vehicle 102. The GPS data and/or the pseudolite data is significantly enhanced via numerous inventive techniques and methods of the present invention to enhance the accuracy of vehicle position estimates.

More specifically, the VPS 1000 of the preferred embodiment is a positioning system based on the incorporation of GPS data from the NAVSTAR GPS 104 and from a motion positioning system 900. In the preferred embodiment, the motion positioning system 900 comprises an inertial reference unit (IRU) 904 and/or a vehicle odometer 902. The IRU 904 comprises a laser gyroscope(s) 106 and an accelerometer(s) 108 which can be used to produce position, velocity, roll, pitch and yaw data. The vehicle odometer 902 produces data on the distance travelled by the vehicle 102.

A first position estimate of the vehicle 102 is derived by the GPS processing system 700 from GPS data received from the GPS satellites 104 and from the pseudolite data received from the pseudolite(s) 105. To increase the accuracy of the first position estimate the present invention implements a number of methods discussed in detail below. In addition, a second position estimate is derived by the MPS intercommunications processor 906 of the motion positioning system 900, which comprises the IRU 904 and/or the vehicle odometer 902.

As shown by respective arrows 112 and 114, the first position estimate and the second position estimate are then combined and filtered by a VPS processing system 116. The result as shown by an output arrow 118 is a more accurate, third position estimate.

B. Navigation System

The navigation system 1022 receives the third position estimate from the VPS 1000. The navigation system 1022 uses the precise, third position estimate to. accurately navigate the vehicle 102. A primary purpose of the navigation system 1022 is to guide the vehicle 102 between points along pre-established or dynamically-generated paths.

The navigation system 1022 is situated on the vehicle 102 itself. In other words, it is essentially an "on-board" system. Moreover, the navigation system 1022 may be designed to be retro-fitted into the vehicle 102.

So that the navigation system 1022 can guide the vehicle 102 to follow the pre-established or dynamically-generated paths, various models or conceptual representations are generated and utilized. For example, lines and arcs may be used to establish vehicle paths between objective points. Mathematical B-splines or clothoid curves may be used to model the actual path where the vehicle 102 is to navigate.

Using the above modelling or representational techniques provides for enhanced data communications, storage, and handling of the vehicle 102. The techniques further allow for simplification of supervisory tasks by providing a hierarchy of control and communication. The higher that a level of control exists on the hierarchical control scheme, the simpler the task and the more compact the commands.

The navigation system 1022 further provides for controlling the vehicle's mechanical systems, such as brakes, steering, and engine and transmission, to effect the necessary physical acts required to move, stop, and steer the vehicle 102.

The navigation system 1022 also checks the actual position of the vehicle 102 against the desired position to correct vehicle control in accord with the desired position. The navigation system 1022 may run multi-state models to enhance this checking capability. The navigation system 1022 also checks for errors or failures in the system itself and vehicle components. If errors or failures are detected, the navigation system 1022 can provide for fail-safe shutdown by bringing the vehicle 102 to a complete stop.

The navigation system 1022 further provides for different modes of controlling the vehicle 102. These include (1) a fully autonomous mode, where navigation of the vehicle 102 is automatically handled by the navigation system 1022; (2) a tele or remote control mode, where a remote human operator (not shown) may control the direction and motion, and so on, of the vehicle 102; and (3) a manual mode, where a human operator sitting in the vehicle 102 can take control of the vehicle 102 and drive it manually.

In the autonomous mode, obstacle detection is critical because if the vehicle 102 is not under control, then it could cause great damage to property and great injury to life. The navigation system 1022 can efficiently detect obstacles. Boulders, animals, people, trees, or other obstructions may enter the path of the vehicle 102 unexpectedly. The navigation system 102 is capable of detecting these obstacles, either stopping or plotting a path around the obstruction, and returning the vehicle 102 to its original route when the route is deemed safe.

Accurately tracking the desired route is another function of the navigation system 1022. The functioning and

architecture of the navigation system 1022 has been designed for real time tracking of vehicle paths at speeds of up to approximately 30 miles per hour (mph).

C. Base Station

The example system may comprise a host processing system 186 at a base station 188. The host processing system 186 performs functions for both the VPS 1000 and the navigation system 1022.

With respect to the VPS 1000, the host processing system 186 receives GPS data and/or pseudolite data, as shown by respective arrows 190 and 192. In effect, the host processing system 186 as well as the base station 188 can serve as a known reference point to improve the accuracy of vehicle position estimates as discussed in detail below.

The host processing system 186 implements a number of methods for increasing the accuracy of vehicle position estimates. The satellite position predictor method 1800 discussed above is also implemented by the host processing system 186. The host processing system 186 will recognize the same satellite constellation that is observed by the vehicle 102.

Calculations are performed on the GPS data and/or pseudolite data to derive biases. The term "bias" in the context of this document refers to a differential between two measurements, usually position estimates (spatial bias) or clock rates (clock bias). Because one measurement is usually known to be more accurate than another, the bias is often times referred to as an "error."

To compute spatial biases, the host processing system 186 implements a number of methods. Included in these methods are, for example, an original bias technique 1500, a parabolic bias technique 1600, a base residuals bias technique 1700, and a base correlator bias technique 1700A.

The foregoing differential correction techniques compensate for data errors. In other words, the biases computed at the host processing system 186 are indicative of data errors. As shown by an arrow 194, the biases are transmitted to the GPS processing system 700 of the vehicle 102. The GPS processing system 700 uses these biases to eliminate errors in vehicle position estimates.

The host processing system 186 further provides functions relating to the navigation system 1022. The host processing system 186 serves as the highest level of control of the navigation system 1022, as indicated by an arrow 196. It handles scheduling and dispatching of the vehicle 102 with much the same results as a human dispatcher would achieve. Consequently, the host processing system 186 can thereby determine the work cycle of the vehicle 102.

The host processing system 186 commands the vehicle 102 to proceed from a current position to a future position via a specified route, so that the vehicle 102 may accomplish its work goals. The host processing system 186 can specify the vehicle routes by name, rather than by listing each point along the route, as is the case conventionally. Accordingly, the vehicle's on-board navigation system 1022 looks up the named vehicle route and translates the named vehicle route into sets of nodes and segments along the named vehicle route.

III Vehicle Positioning System

The following discussion relative to the VPS 1000 will make specific reference to Figures 6 through 11A. Figures 8 and 9. show the architecture/hardware of the VPS 1000. The VPS 1000 is a highly accurate position determination system for a moving or stationary vehicle 102 on or near the Earth's surface.

Recall that the VPS 1000 includes the GPS processing system 700 and the MPS 900, which are shown in respective Figures 6 and 7. Further recall that the MPS 900 includes the IRU 904 and the vehicle odometer 902, which are both shown in Figure 7. In effect, these systems have been enhanced and integrated by the present invention to produce a highly effective position determining system.

Referring to Figure 6, the GPS processing system 700 includes an antenna 702 connected to a GPS receiver 706. When the GPS satellites 104 in view of antenna 702 comprise multiple GPS satellites 200-206 as shown in Figures 2 and 3, the GPS receiver 706 reads each of their GPS data along with any pseudolite data from any pseudolite(s) 105 in view of antenna 702. The GPS receiver 706 is responsible for computing the first position estimate of the vehicle 102 from the GPS data and/or the pseudolite data.

To increase the accuracy of the first position method, a satellite position predictor method 1800 is implemented by a GPS processor 710 of the GPS processing system 700. The satellite position predictor method 1800 predicts the position of any GPS satellite at the current time or any future time.

Using the satellite position information, the GPS processing system 700 can determine the optimum GPS satellite constellation to recognize by using a constellation effects method 1300. The constellation effects method 1300 may also be implemented by the GPS processor 710,

pursuant to the constellation effects method 1300, a best constellation is selected from the data sources comprising the GPS satellites 200-206 and pseudolite(s) 105.

The GPS processor 706 computes a first position estimate of the vehicle 102 based on the best constellation

and geometry/triangulation methods. The accuracy of the first position estimate is, in part, dependent on the number of GPS satellites used in the computation. Each additional GPS satellite used can increase the accuracy of the first position estimate. After the computation, the first position estimate of the vehicle 102 is transmitted to a VPS main processor 1002 of Figure 8.

Referring to Figure 7, the IRU 904 comprises laser gyroscopes and accelerometers which produce position, velocity, roll, pitch, and yaw data. The IRU 904 combines this information into a second position estimate of the vehicle 102. The odometer 902 can be implemented to measure the distance travelled by the vehicle 102. The data from the IRU 904 and the odometer 902 is also transmitted via the MPS intercommunications processor 906 to the VPS main processor 1002, as shown in Figure 8.

The VPS main processor 1002 combines the second position estimate from the MPS 900 (the IRU 904 and perhaps the odometer 902) with the first position estimate from the GPS processing system 700 to produce a more accurate third position estimate.

The VPS 1000 further implements a method of eliminating erratic or spurious, third position estimates which can cause vehicle "wandering." This method is called the weighted path history method. Essentially, the path history of the vehicle 102 is used to statistically determine the accuracy of future estimates of the vehicle 102's position.

Referring now to Figures 1 and 3, a base station 188 provides a geographic proximate reference point for the VPS 1000. The base station 188 includes a host processing system 186. The host processing system 186 comprises similar a similar architecture and performs the same functions as the GPS processing system 700. However, the host processing system 700 performs additional functions for increasing the accuracy of first position estimates.

The satellite position predictor method 1800 is implemented by the host processing system 186, in addition to the GPS processing system 700 as discussed above. Accordingly, the host processing system 186 will recognise the same GPS satellite constellation that is observed by the vehicle 102 or include the same GPS satellite in a larger constellation.

Calculations are performed on the GPS data and/or pseudolite data to derive biases, including spatial biases and clock biases. To compute spatial biases, the host processing system 186 implements a number of methods. Figure 10 discloses an original bias technique 1500. Figure 10A discloses a parabolic bias technique 1600. Figure 11 discloses a base residuals bias technique 1700. Figure 11A discloses a base correlator bias technique 1700A.

As shown by an arrow 194, the spatial and clock biases are transmitted to the GPS processing system 700 of the vehicle 102. The GPS processing system 700 uses these biases to eliminate errors in vehicle position estimates.

## IV Navigation System

### A. Overview

In considering implementation of an autonomous navigation system, there are some basic questions which any autonomous system must be able to answer in order to successfully navigate from point A to point B. The first question is "where are we (the vehicle) now?" This first question is answered by the positioning system as discussed above in section III.

The next or second question is "where do we go and how do we get there?" This second question falls within the domain of the navigation system discussed in this section (IV).

A further (third) question, really a refinement of the second one, is "how do we actually physically move the vehicle, for example, what actuators are involved (steering, speed, braking, and so on), to get there?" This is in the domain of the vehicle controls subsystem of the navigation system, also discussed below.

As has been discussed implicitly above, autonomous navigation, of a mining vehicle as an example, may provide certain significant advantages over conventional navigation. Among them is an increased productivity from round the clock, 24 hr. operation of the vehicles. The problems presented by dangerous work environments, or work environments where visibility is low, are particularly well suited to solution by an autonomous system.

There are, for instance, some mining sites where visibility is so poor that work is not possible 200 days of the year. There are other areas which may be hazardous to human life because of being contaminated by industrial or nuclear pollution. An area may be so remote or desolate that requiring humans to work there may pose severe hardships or be impractical. The application of the example system could, foreseeably include extraterrestrial operations, for example, mining on the Moon, provided that the necessary GPS satellites were put in Moon orbit.

In a typical application of the example system, as shown in Figure 3, with regard to the navigation of a mining vehicle at a mining site, there are three basic work areas: the load site, the haul segment, and the dump site. At the load site, a hauling vehicle may be loaded with ore in any number of ways, by human operated shovels for instance, controlled either directly or by remote control, or by autonomous shovels. The hauling vehicle then must traverse an area called the haul segment which may be only a few hundred meters or may be several km's. At the end of the haul segment is the dump site, where the ore is dumped out of the hauling vehicle to be crushed, or otherwise refined, for

instance. In the present invention, autonomous positioning and navigation may be used to control the hauling vehicle along the haul segment. Autonomously navigated refuelling and maintenance vehicles are also envisioned.

Referring now to Figures 4 and 5, navigation of the AMT (Autonomous Mining Truck) encompasses several systems, apparatus and/or functions. The VPS 1000 subsystem of the overall AMT system as described above, outputs position data that indicates where the vehicle is located, including, for example, a North and an East position.

Referring now to Figures 4 and 5, position data output from the VPS is received by a navigator 406. The navigator determines where the vehicle wants to go (from route data) and how to get there, and in turn outputs data composed of steer and speed commands to a vehicle controls functional block 408 to move the vehicle.

The vehicle controls block then outputs low level commands to the various vehicle 102 systems, such as the governor, brakes and transmission. As the vehicle is moving towards its destination, the vehicle controls block and the VPS receive feed-back information from the vehicle indicative of, for example, any fault conditions in the vehicle's systems, current speed, and so on.

Navigation also must include an obstacle handling (detection and avoidance) capability to deal with the unexpected. A scanning system 404 detects obstacles in the vehicle's projected trajectory, as well as obstacles. which may be approaching from the sides and informs the navigator of these.

The navigator may be required to then decide if action is required to avoid the obstacle. If action is required, the navigator decides how to avoid the obstacle. And after avoiding the obstacle, the navigator decides how to get the vehicle back onto a path towards its destination.

Referring now to Figure 19, titled the context diagram, and Figure 21A-21D definitions of the communications, which are shown as circles with numbers in them, are provided below:

502. Host commands & queries:

Commands given by the host to the vehicle manager. These commands could be of several types:

initiate/terminate;
supply parameters;
emergency actions; and
directives.

Queries inquire about the status of various parts of the navigator.

504. replies to host:

These are responses to the queries made by the host.

432. position data:

This is streamed information provided by the VPS.

416. Range data:

This is range data from the line laser scanner.

432. VPS control:

These are commands given to the VPS to bring it up, shut it down and switch between modes.

416. scanner control:

These are commands sent to the laser scanner to initiate motion and set follow velocity profile.

420. steering & speed commands

These are commands given to the vehicle to control steering and speed. These commands are issued at the rate of 2-5 Hz.

Referring to Figure 5, in the example system, as described above, both the VPS and the navigator are located on the vehicle and communicate with the base station 188 to receive high level GPS position information and directives

from a host processing system 186, discussed below. The system gathers GPS position information from the GPS satellites 200-206 at the base station and on-board the vehicle so that common- mode error can be removed and positioning accuracy enhanced.

Alternatively, portions of the VPS and navigator may be located at the base station.

The host at the base station may tell the navigator to go from point A to point B, for instance, and may indicate one of a set of fixed routes to use. The host also handles other typical dispatching and scheduling activities, such as coordinating vehicles and equipment to maximize efficiency, avoid collisions, schedule maintenance, detect error conditions, and the like. The host also has an operations interface for a human manager.

It was found to-be desirable to locate the host at the base station and the navigator on the vehicle to avoid a communications bottleneck, and a resultant degradation in performance and responsiveness. Since the host sends relatively high-level commands and simplified data to the navigator, it requires relatively little communication bandwidth. However, in situations where broad-band communication is available this may not be a factor.

Another factor in determining the particular location of elements of the example system is the time-criticality of autonomous navigation. The navigation system must continually check its absolute and relative locations to avoid unacceptable inaccuracies in following a route. The required frequency of checking location increases with the speed of the vehicle, and communication speed may become a limiting factor even at a relatively moderate vehicle speed.

However, in applications where maximum vehicle speed is not a primary consideration and/or a high degree of route following accuracy is not critical, this communication factor may not be important. For example, in rapidly crossing large expanses of open, flat land, in a relatively straight path, it may not be necessary to check position as often in the journey as it would be in navigating a journey along a curvaceous mountain road.

Conceptually, the navigation aspects of the present invention can be arbitrarily divided into the following major functions:

route planning/path generation;
path tracking; and
obstacle handling.

The function of the present invention are discussed below.

B. Route Planning/Path Generation

1. Introduction

Autonomous vehicle navigation in accordance with the present invention, conceptually consists of two sub problems, path generation and path tracking, which are solved separately.

Path generation uses intermediate goals from a high level planner to generate a detailed path for the vehicle 102 to follow. There is a distinct trade-off between simplicity of representation of such plans and the ease with which they can be executed. For example, a simple scheme is to decompose a path into straight lines and circular curves. However, such paths cannot be tracked precisely simply because of discontinuities in curvature at transition points of segments that require instantaneous accelerations.

Following path generation, path tracking takes, as input, the detailed path generated and controls the vehicle 102 to follow the path as precisely as possible. It is not enough to simply follow a pre-made list of steering commands because failure to achieve the required steering motions exactly, results in steady state offset errors. The errors accumulate in the long run. Global position feedback 432 may be used to compensate for less than ideal actuators. Methods have been developed for the present invention which deviate from traditional vehicle control schemes in which a time history of position (a trajectory) is implicit in the plan specified to the vehicle 102.

These methods are appropriately labelled "path" tracking in that the steering motion is time decoupled; that is, steering motions are directly related to the geometric nature of the specified path, making speed of the vehicle 102 an independent parameter.

Referring now to Figure 3, an autonomous vehicle 102 may be required to traverse a haul segment 320 to a dump site 322, and after dumping its load, traverse another haul segment to a service shop 324, under the direction of the host processing system 186. The host processing system 186 determines the vehicle 102's destinations, which is called "cycle planning." The determination of which routes to take to get to a desired destination must be accomplished by "route planning."

"Route planning" is the determination of which path segments to take to get to a desired destination. In general, a route can be thought of as a high-level abstraction or representation of a set of points between two defined locations. Just as one can say to a human driver "take route 95 south from Lobster, Maine to Miami, Florida," and the driver will translate the instruction into a series of operations (which may include starting the vehicle 102, releasing the brake

4406, engaging the transmission 4610, accelerating to the posted speed limit, turning the steering wheel 4910, avoiding obstacles 4002, and so on), the autonomous navigation system of the present invention performs similarly. As used in the system of the present invention, a "route" is a sequence of contiguous "segments" between the start and end of a trip.

An autonomous vehicle 102 may begin at any position in the sequence and traverse the route in either direction. A "segment" is the "path" between "nodes." A "node" is a "posture" on a path which requires a decision. Examples of nodes are load sites 3318, dump sites 322, and intersections 326.

There are various types of segments. For instance, there are linear and circular segments. Linear segments (lines) are defined by two nodes. Circular segments (arcs) are defined by three nodes.

"Postures" are used to model parts of a route, paths and nodes for instance. Postures may consist of position, heading, curvature, maximum velocity, and other information for a given point on the path.

A "path" is a sequence of contiguous postures.

A segment is, therefore, a sequence of contiguous postures between nodes. All segments have a speed associated with them, which specifies the maximum speed with which the vehicle 102 is to traverse that segment. The navigator 406 can command slower speeds, if necessary, to meet other requirements.

Determining which postures are required to define a path segment by analytical, experimental or a combination of both, is called "path planning" in accordance with the present invention. To bring the discussion full circle, a sequence of contiguous routes, as mentioned above, is referred to as a "cycle," and a vehicle 102's work goals determine its "cycle."

Therefore, to define a route one must first define the nodes and segments. Next, the nodes and segments must be ordered. Finally the routes must be defined by specifying where in the ordered set a route is to begin, and in which direction the ordered set is to be traversed (See Figure 12 which illustrates these concepts of the present invention).

The aforementioned method of defining routes was developed for memory efficiency in the present invention. It is also a convenient way to define many routes on a specific set of nodes and segments.

In a real world example of the present invention, picture a site where there are many intersecting roads 326. A route programmer would define nodes at the intersections, and segments to define the roads between the intersections. Routes would therefore be determined by the roads and intersections. There will however, be many ways to get from point A to point B (many routes) with a fixed set of intersections and roads.

The path-tracking method of the present invention (discussed below) uses route curvature to steer the vehicle. Methods of route definition using lines and arcs do not provide for continuous curvature. Clothoid curves are another way to define routes.

Another method of defining routes developed by the inventors, fits B-splines to the driven data. B-splines provide continuous curvature and therefore enhance tracking performances. In addition, since B- splines are free form curves, a route may be defined by a single B-spline curve. By using free form curves, a more robust method (semi-automatic) for fitting routes to data collected by driving the vehicle over the routes is produced.

Referring to Figures 4 and 12, in operation, the host processing system 186 from the base station 188 commands an identified vehicle 102 to take route N from its present location. The navigator 406 functions to generate a path by translating "route 1" into a series of segments, each of which may have a "posted" or associated maximum speed limit, which together form a generated path for the vehicle to attempt to follow. By specifying routes and commanding the autonomous vehicle 102 with high-level commands this way, enormous data requirements and inefficiencies are in the present invention avoided in giving directions.

The navigator 406 stores the routes as a linked-list of path segments, rather than the set or series of sets of individual points. These segments are also abstractions of the set of points between defined locations or nodes.

A LINKER then takes given path segments and generates a linked-list of control points, allowing for flexibility and efficiency. Path segments are shared by different routes, as is shown in Figure 12.

The path segments are stored in a memory called the TARGA 5302 as a set of arcs, lines, and postures. For instance, in one example, an analytical generator function generates paths using these arcs, lines and postures. In another example

B-splines are used as a mathematical representation of a route, as mentioned above.

In another example "clothoid" curves are used in generating path segments.

2. <u>ROUTE CREATION AND STORAGE</u>

In order to create routes for a site 300, data is first collected from the VPS 1000 and stored while a human drives the vehicle 102 over the road system of the work site 300. Nodes and segments are then fitted to the stored driven data, and organized into routes per the aforementioned procedure.

An application on an APOLLO Computer (now HEWLETT-PACKARD of Palo Alto, California) work station (a

graphics display system, not shown) was developed to graphically fit route data to the stored driven data and to further define routes (that is, speeds, sequences, starting point, traversal direction). Any graphics work stations equivalent to the APOLLO could be used.

Once the routes for a site are defined, the route data is written to a permanent storage device. In one embodiment of the present invention, the storage device used is a bubble memory cartridge 5302 with an associated reader/writer. The bubble memory device 5302 is durable and retains the data when power is disconnected. The APOLLO application is capable of writing data to a cartridge 5302 and reading data from a cartridge 5302.

As implied above, routes may be predefined, or they may be generated dynamically.

In mining applications, generally a site 300 is surveyed and roads are pre-planned, carefully laid out and built. The routes used by the navigation system may then either be obtained from a manually created computer data base (created specifically to be used by the navigation system), or alternately, a vehicle may be physically driven over the actual routes on site to learn the routes as described above. In the learning method, several trips over a given route may be made. Then the variations in the data (due for instance to driver weaving) are averaged, and a smoothed-out best fit developed.

3. POSTURE GENERATION

The tracking method of the present invention, requires certain information about the route it is tracking. The information is contained In a packet called a "posture" 3314. A single posture 3314 may contain position (that is, north and east coordinates), heading, and curvature data, for a specified location on the route. Therefore, a way of producing posture data from the route specification is required in accordance with the present invention.

Among the navigator tasks, (discussed below) is a task which reads the route information and produces postures at intervals (one meter for instance) along the route which are used by the tracking method. In one embodiment of the present invention, each posture requires 36 bytes of memory which translates to about 36k of memory for each kilometer of route. To reduce the memory requirements, the navigator buffers posture data.

The task which produces the postures reads the current position of the vehicle 102, finds the nearest point on the route to the current position, then generates a specified number of postures ahead of the vehicle 102. The number of postures generated is dependent on the maximum stopping distance of the vehicle 102. That is, there should always be enough postures in the buffer 3000 to guide the vehicle 102 to a stopping point.

In the B-spline approach to route definition however, the need for a posture buffer is eliminated, since the tracking method is able to directly produce posture information from the B-spline curve.

C. PATH TRACKING

1. INTRODUCTION

Path tracking or following is a critical aspect of vehicle navigation according to the present invention. The technique of the present invention uses position based navigation (rather than vision based navigation used in conventional navigation systems) to ensure that the correct autonomous vehicle path 3312 is followed. The present invention is also innovative in that it provides for separate control of steering angle 3116 and vehicle speed 3118. Figure 20 graphically illustrates the path tracking system 3102 of the present invention.

For an autonomous vehicle 102 according to the present invention to track specified paths, it is necessary to generate referenced inputs for the vehicle servo-controllers. Thus, path tracking can be considered as a problem of obtaining a referenced steering angle and a reference speed for the next time interval in order to get back to the referenced path ahead from the current deviated position.

In general terms, path tracking is determining the autonomous vehicle commands (speed, steer angle) required to follow a given path. Given a pre-specified steering angle, driven wheel velocity values and error components, the command steering and driving inputs are computed in the present invention.

2. CONSIDERATIONS

a. GLOBAL POSITION FEEDBACK

The path to be tracked is specified in Cartesian coordinates. If the control scheme consists of only a servo-control to reference steering commands, vehicle position and heading errors accumulate. Position and heading result from integrating the whole history of steering and driving. Thus, it is necessary to feedback vehicle position 3304 and heading 3318 in Cartesian space.

Consequently, referenced inputs to the servo-controllers are generated in real time, based on positioned

feedback 3114 (as shown in Figure 20).

b. SEPARATE STEERING AND DRIVING CONTROL

Steering and driving reference inputs are computed in the present invention, from the given path and vehicle speed, respectively. This enables easy integration of path tracking with other modules of the present invention, such as collision avoidance.

3. EMBODIMENTS

a. TRACKING CONTROL STRUCTURE (Figure 15).

One of the challenges of vehicle autonomy is to determine the steering inputs required to track a specified path. For conventionally steered vehicles, in the present invention the desired path and the desired speed along the path can be tracked separately, reducing the problem to one of controlling the steering. (A path, for this discussion, being a geometric curve independent of time in contrast to a trajectory, which is a time history of positions.)

Steering angles are planned from the desired path 3312 and sensed vehicle positions. These angles are commanded to the vehicle via a steering controller 3104.

The functional block diagram in Figure 15, shows a tracking control structure according to the present invention.

In kinematic steering schemes, errors in position, heading and curvature are reduced based on the geometry of the errors without consideration of actuator saturation, compliance, any friction or mass terms. Tuning values, such as look-ahead distance and selection of curvature on the path, are selected through empirical trials and simulations in order to get good performance.

In a manually driven vehicle, the look-ahead distance is the distance 3310 in front of a vehicle that a driver looks during driving. The look-ahead distance in the present invention, is the distance by which the errors in position, heading and curvature are planned to be reduced to zero. It varies with the speed of the conventional or autonomous vehicle.

Varying the look-ahead distance varies the degree to which steering adjustments must be made to effect a change of course. Look-ahead distance is discussed in more detail in a following section.

However, real vehicles depart from kinematic idealization, and their control response departs accordingly. As vehicle speed, mass and path conditions change, actual vehicle response departs even further from kinematic idealization. Hence, kinematic idealization is generally valid only at low speeds with constant conditions.

An embodiment of the present invention uses a model which includes considerations of cornering stiffness, mass and slip angle. The control problem is formulated as a linear quadratic optimal tracking problem where the errors in position, heading and curvature are minimized based on the vehicle control model.

The optimal path and controls are computed from the desired path 3312 and the currently sensed vehicle position using the current errors as initial conditions to the optimal control problem. A few computed steering angles along the initial part of the optimal path are used as references to the low level steering controller for the next sensing time interval.

This preview optimal steering planning has the advantage of guaranteeing stability and optimality with respect to the given performance index. The optimal preview control method of the present invention is central to the steering planning of an autonomous vehicle.

Turning again to Figure 15, the inner loop 3116 of steering control 3104 is executed on the order of 10 milliseconds, while the outer loop 3114 is closed at the rate of 0.25-0.5 second.

The following procedure is used to close the loop on position. After sensing the current position ($Pa_{,k}$) 3210, the posture at the end of the current time interval ($\underline{P}_{a,k+1}$) 3216 is expected.

Then, the desired posture at the end of the next time interval ($P_{d,k+2}$) 3218 is computed in a referenced steering angle between ($\underline{P}_{a,k,+1}$) 3216 and ($P_{d,k+2}$) 3218 are determined.

Significantly, as mentioned above, these vehicle and path techniques of the present invention, decouple steering control from velocity control at the vehicle.

b. OUINTIC METHOD

Shown in the navigator task diagram, Figure 33, which is discussed in more detail below, is a functional block called the tracker 5306. The tracker 5306 operates to construct a smooth path back to the desired or correct path. In one embodiment of the present invention, as mentioned above, a quintic method is used. This involves a fifth order curve in error space for steering commands.

The quintic polynomial method of the present invention replans a simple, continuous path that converges to a desired path in some look-ahead distance 3310 and computes a steering angle corresponding to the part of the replanned path 2816 to be followed for the next time interval.

If the desired path is considered as a continuous function of position and the vehicle is currently at Pa 3320, an error vector can be calculated (Figure 17) that represents error in the distance transverse to the path (e0) 3322 relative to Po 3304, in heading (Bo) 3322, and in curvature (yo) 3404. If the vehicle is to be brought back onto the specified path within distance L 3310 (measured along the reference path), six boundary conditions can be stated corresponding to the initial errors and to zero errors at PL.

$$\varepsilon(P_o) = \varepsilon_o; \qquad \varepsilon(P_L) = 0$$

$$\beta(P_o) = \beta_o; \qquad \beta(P_L) = 0$$

$$\gamma(P_o) = \gamma_o; \qquad \gamma(P_L) = 0 \qquad \text{(EQ. 11)}$$

A quintic polynomial can be constructed to describe the replanned path (in error space) as follows:

$$\varepsilon(s) = a_0 + a_1 s + a_2 s^2 + a_3 s^3 + a_4 s^4 + a_5 s^5 \qquad \text{(EQ. 12)}$$

where s is in the set of [0,L]

The expression for e(s) gives the error along the replanned path 2816 from Po 3304 to PL 3308. The second derivative describes path curvature, which can in turn, be used to calculate a steering command to guide the vehicle back to the desired path 3312. Variation in the steering angle 3116 from the replanned path 2816 (or in error space) is computed from the second derivative of error function e(s). Then, curvature along the new path can be computed as:

$$C_{new}(s) = C_{old}(s) + \frac{d^2\ \varepsilon\ (s)}{ds^2} \qquad \text{(EQ. 13)}$$

The reference steering angle 3112 along the new path can be converted from curvature. Since this procedure is executed at every planning interval, the entire new path back to the reference path 3312 is not required. Only the steering angle 3112 for the next time interval is computed from the curvature at the point on the new path that can be achieved in the next time interval.

The look-ahead distance, L 3310, is a parameter that can be used to adjust how rapidly the vehicle steers to converge to the desired path. Additionally, better performance is obtained if L 3310 is chosen proportional to the vehicle speed because for small values of L 3310, the vehicle oscillates around the path 3312, while for large values of L 3310 the variation introduced by the quintic polynomial is small enough that the tracking performance is poor.

Since there are six boundary conditions used: $e_{p0}$ - error in position at the current position (distance) and $e_{p1}$ (look-ahead), $e_{h0}$ - error in heading and $e_{h1}$ (look-ahead), and $e_{c0}$ - error in curvature and $e_{c1}$ (look-ahead), a fifth order curve is required. This is used to generate a steering angle 3112.

Recall that path tracking schemes in general, perform better when the path specified is intrinsically easier to track. This is especially the case when the steering actuators are slow compared to the speed of the vehicle.

Other vehicle characteristics, like steering response, steering backlash, vehicle speed, sampling, and planning time intervals significantly affect vehicle performance. As expected, at higher vehicle speeds, faster and more accurate actuators are necessary, if sensing and planning time intervals are kept constant.

An advantage of the quintic polynomial method in general, is that it is-simple, and reference steering angles can be computed very easily. However, since there is no consideration of vehicle characteristics (mass, inertia, time delays, vehicle ground interaction, and so on) in the control scheme, stability and convergence are not guaranteed.

The parameter L 3310 (look-ahead distance) can be adjusted to modify response to the vehicle, and the value of L 3310 can be chosen based on trial and error. This scheme has provided good results at speeds up to approximately 28 Km per hour at the time this application disclosure was prepared.

The method used by the tracker of the present invention is:

(1) estimate the next position by either averaging or evaluating the states of position;
**(2)** compensate for delays using either of the estimating methods

(3) dynamic look-ahead changes at different speeds - the coefficients of the quintic: look-ahead distance.

c. LATENCY AND SLOW SYSTEM RESPONSE

An additional path tracking embodiment of the present invention uses various compensation techniques to improve vehicle response characteristics. This is used in conjunction with the quintic polynomial method to realize improved tracking performance.

Some vehicle response characteristics include latency of vehicle control commands, slow system response, and vehicle dynamic characteristics including vehicle-ground interaction (VGI), (slip angle and under/over steer).

The latency of vehicle commands was compensated in one embodiment of the present invention, by modifying the vehicle control hardware to reduce time delays, and by utilizing a method which sets control commands far enough in advance to compensate for the existing delays.

Decreasing the time lag between when the vehicle position is sensed and when the command is issued reduces prediction errors, which reduction is required to plan steering angles, and results in better tracking performance.

A varying look-ahead distance with speed also improves the tracking performance in comparison to the constant look-ahead distance.

A tracking method outputs steering and speed commands over a serial link to a vehicle control system. The vehicle control system is a multiprocessor, multi-tasking system, relying on a mailbox queue for communication between tasks.

This mailbox queue is composed of two types .of queues, a high performance queue and an overflow queue. During high data flow rates from the tracking task, the high performance queues spill into the overflow queue, degrading the performance of inter-task communication. This can result in total latency times between the tracking task and actual steering actuator commands which are on the order of seconds.

The steering dynamics may be modeled as a first order lag system. It takes a period equivalent to one time constant for a first order lag response to reach approximately 63% of the desired final value. As can be appreciated, for slow systems with large time constants, the response time can be significant.

To resolve the latency and response problems, hardware may be adjusted to be used in close conjunction with the tracking method to control vehicle steering, and a new control scheme devised to compensate for pure time delay and poor response.

The hardware may be adjusted, for example, to reside on the same back plane as the processor which executes the tracking method and controls the vehicle steering system directly. This serves to eliminate delays due to the serial link and queuing.

To compensate for the remaining delays (delays due to processing time of the tracking method and inter-task communication within the tracking system), a method which sends speed and steering commands in advance to counteract any delays is used in accordance with the present invention. The method may be executed as follows:

sense the current position $P_{actual}$ (Initialization: $P_{actual}$ = P[O] = P[1] = ....= P[d_index+1])
compute error between predicted and sensed position: $P_e = P_{actual}$ - P[O] for i = O, d_index P[i] = P[i+1] + $P_e$
compute the position on the path corresponding to the position of the beginning of the time interval: get $P_{on}$ (P [d_index], $P_{on}$)
get initial condition:errors(O) = P[d_index] - $P_{on}$
compute a quintic polynomial curve in error space [1]
predict a position at the end of the planning time interval;
get despos($P_{on}$,$d_s$,P+d_index+1) P[d+index+1] + = errors(ds)

For example, to compensate a system which has time delays on the order of two planning intervals (on the order of 250 mSec), the variable d_index is set to 2.0.

Tracking performance improves as the compensation index (d_index) is increased to match the delays inherent to the system.

d. VEHICLE-GROUND INTERACTION (VGI):

Reference commands for steering angle and vehicle speed result in varying angular velocities and accelerations of the vehicle wheels.

VGI describes how the vehicle moves, given steered wheel angles and wheel angular velocities. The principal VGI phenomena are slip angle and under/oversteer characteristics which are based on the tire/road contact region geometry, and are affected by tire elastic deformation. These phenomena require a larger steering angle as compared to a kinematically computed one.

e. SENSING AND ACTUATION TIMING

Since actual path tracking is controlled by digital processors in the present invention, a discrete time interval is used. It is governed by the position sensing time interval (which may be on the order of 0.25 Sec) which is much longer than the computing time required for steering planning (which may be on the order of 16 mSec).

At times, especially when the discrete time interval is large, poor predictions of the vehicle position may be made which degrade performance of the tracking method.

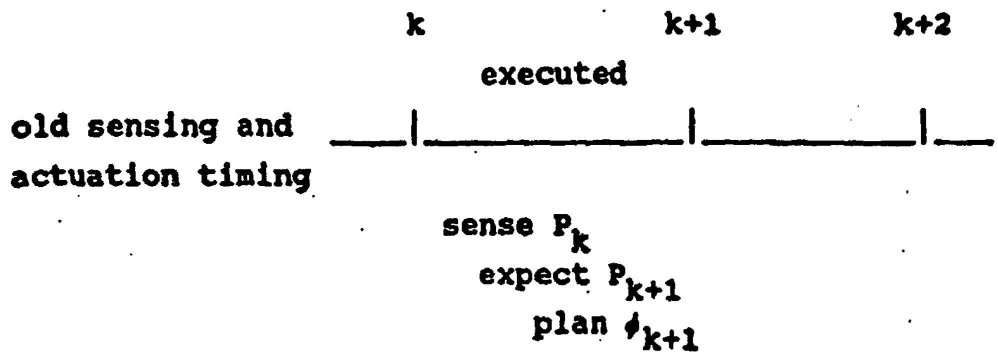


A compensation method of the present invention, serves to reduce the error in predicting the next vehicle position by decreasing the discrete time interval. In this method, the vehicle position is predicted for the end of the computing interval (16 mSec) rather than at the end of the planning interval (250 mSec). The method is executed as follows:

sense the current position $P_{actual}$
(Initialization: $P_{actual}$ = P[O] = P[1] = .... = P[d_index+1] = $P_{actual}$,k+1
compute error between predicted and sensed position:

$$Pe = P_{actual} - P_{actual}, k+1$$

for i = O, d_index

$$P[i] = P[i+1] + P_e$$

compute the position on the path corresponding to the position of the beginning of the time interval: get $P_{on}$(P [d_index], $P_{on}$)
get initial condition: errors(O) = P[d_index] - $P_{on}$
compute a quintic polynomial curve in error space
compute a quintic polynomial curve in error space[1]
predict a position at the end of the planning
time interval:

$$\text{get despos}(P_{on}, d_s, P+d_index+1)$$

$$P[d+index+1] \mathrel{+}= errors(ds)$$

predict a position at the next sensing time:

$$P_{actual}, k+1 = P[O] + (P[1] - P[O])*(dt\ plan - dt\ comput)/dt\ plan$$

f. LOOK AHEAD

Human operators use different look-ahead distances 3310 when driving. At slow speeds, a driver generally looks at a point on the road relatively close to the vehicle, while at higher speeds, this point is generally farther ahead of the vehicle. The higher the speed, the farther ahead the reference point is, resulting in smaller steering corrections.
Thus, in an autonomous application, a look-ahead distance which varies with speed, logically helps to improve tracking performance.
A desired steering angle may consist of a steering angle from the reference path 3312 and a steering angle 3112 which is computed with a quintic method to correct for tracking errors. These steering angles are summed to give the vehicle steering command as shown in equation (1) below:

$$\Phi = \Phi_{ref} + \Phi_{error}$$

Note that look-ahead in the autonomous scheme affects only $\Phi_{error}$, even though look-ahead in manual driving affects both the reference and error compensating steering angles. Shorter look-ahead values result in large steering corrections; the look-ahead distance can therefore be interpreted as a gain in an error feedback system.
An arbitrary model for varying look-ahead distance (L) with speed (V) is expressed with three parameters, $V_{ref}$, $L_{ref}$, and slope, as shown in equation (2) below:

$$L = slope * (V-V_{ref})+L_{ref}$$

where V is the speed of a vehicle and L should be between $L_m in=10$ and $L_m ax=30$. Tracking performance is improved with the varying look-ahead distance 3310 of the present invention.

g. OPTIMAL CONTROL METHOD

As mentioned above, an embodiment of the present invention uses a model which includes considerations of cornering stiffness, mass and slip angle.
The control problem is formulated as a linear quadratic optimal tracking problem where the errors in position, heading and curvature are minimized based on the vehicle control model. The optimal path and controls are computed from the desired path 3312 and the currently sensed vehicle position 3304 using the current errors as initial conditions to the optimal control problem.
A few computed steering angles along the initial part of the optimal path are used as references to the low level steering controller for the next sensing time interval. This preview optimal steering control has the advantage of guaranteeing stability and optimality with respect to the given performance index. The optimal preview control method according to the present invention, is applicable to the steering planning of an autonomous vehicle 102.
The model is derived from a standard telescoped, or bicycle model (not shown) or approximation of the vehicle. The equations describing the vehicle motion include terms which represent the VGI described earlier. These equations use the state variables:

$$X = [\ x, y, \theta, \dot{\theta}\ ]$$

where x and y represent the global position of the vehicle; O is the heading 3318 of the vehicle, and O is the rate of change of heading.
Using these variables, the equations are:

$$\dot{x}_1 = - x_3 \sin(x_4) + V_n \cos(x_4)$$

$$\dot{x}_2 = x_3 \cos(x_4) + V_n \sin(x_4)$$

$$\dot{x}_3 = -\frac{(C_{\alpha F} + C_{\alpha R})}{mV_n} x3$$

$$+ \left\{ \frac{(bC_{\alpha R} - aC_{\alpha F})}{v_n} - V_n \right\} x_5$$

$$\dot{x}4 = x5$$

$$\dot{x}_5 = -\frac{(bC_{\alpha R} - aC_{\alpha F})}{IV_n} x_3$$

$$-\frac{(a^2C_{\alpha F} + b^2C_{\alpha R})}{IV_n} - x_5 + \frac{aC_{\alpha F}}{I} u_1$$

$$u_1 = \delta\, c = \left[ \frac{mL}{t} \right]$$

where:

| | |
|---|---|
| $V_\xi$: | lateral velocity |
| $v_n$: | constant forward velocity |
| $\delta$ : | steering angle |
| $\alpha_F$: | slip angle |
| $v_F$: | speed of the front wheel |
| $F_F$: | lateral force between front wheel and ground |
| $F_R$: | lateral force between rear wheel and ground |
| m: | vehicle mass |
| I: | vehicle moment of inertia |
| $\theta$: | vehicle heading |
| $c_{\alpha F}$, $c_{\alpha R}$ : | Front and rear tire cornering stiffness |

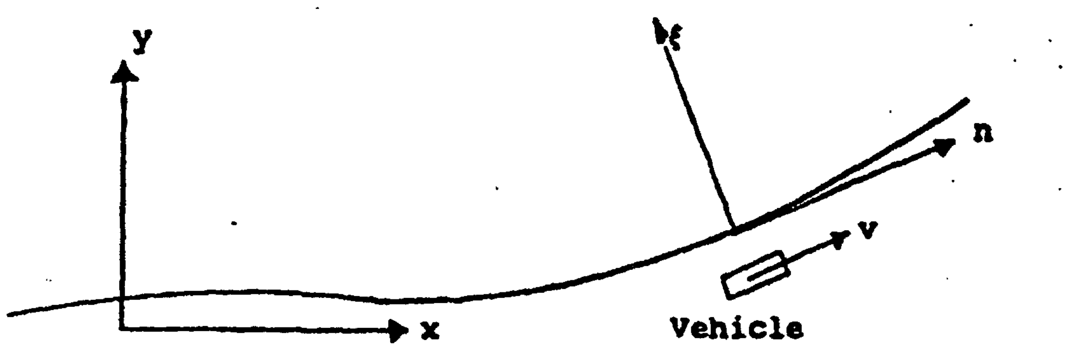

x,y: inertial system

It is well known in the art of optimal control theory, that a cost function must be selected which is used to minimize selected parameters in the system. The cost function used in this problem was selected as:

$$J(t) = \frac{q_f}{2} [ \{ x_1(t_f) - x_d(t_f) \}^2 + \{ x_2(t_f) - y_d(t_f) \}^2 ] + \frac{1}{2} \int_{t_0}^{t_f} [ R_1 \{ \dot{u}_1(t) \}^2 + \{ x_1(t) - x_d(t) \}^2 + \{ x_2(t) - y_d(t) \}^2 ] \, dt \qquad \text{(EQ. 15)}$$

There are several problems to solve the optimal control problem with the state equations (14) and the cost function (15);

1. The system is nonlinear. Usually, a two point boundary value problem which results from a nonlinear system does not have an analytic solution. Numerical solutions, on the other hand, take a long time to compute.
2. The resulting optimal control problem is a free final time problem. Generally fixed final time problems are simpler to solve than those with free final time.
3. The first term inside the integration (within the above cost function) is the time derivative of the control input, which is not usual in a quadratic cost function of an optimal control problem. However, the time rate change of steering is very important for smooth path following, because it is directly related to the time rate of change of centrifugal force (due to lateral accelerations of the vehicle).

Note that the steering angle is dependent on the curvature of the path as in Figure 31.
The following approaches are applied in order to overcome the above three problems and to make the resulting optimal control problem tractable:

1. Since the sinusoidal functions in the first and the second equations of (14) make the system nonlinear, a new coordinate system, an axis of which is parallel to the tangent direction of the corresponding point of the path to the current vehicle position, is used. The deviations only in the lateral direction are considered in the cost function. These two approximations not only eliminate the nonlinearity in the system equation but also reduce the number of equations to deal with; the first equation of (14) is not required now. (Refer to "Coordinate Systems.")
2. This problem with free final time, $t_f$, can be converted to the one with a fixed final value of the independent variable by writing the differentials in the equation of motion with respect to the forward distance. To this end, a non-dimensional independent variable, s, is defined as:

$$\bar{s} = \frac{s}{s_f} \frac{d\bar{s}}{dt} = \frac{\dot{s}}{s} = \frac{V_n^{2} \quad V_\varepsilon^{2}}{s_f} s_f = accel$$

3. To solve the third problem pointed out above, a new state vector and a control input are defined as:

$$X_{new} = [X_{old}, U_{old]}]^T, U_{new} = \dot{U}_{old}$$

where Xnew satisfies:

$$A_{new} = \begin{bmatrix} A_{old} & B_{old} \\ 0 & 0 \end{bmatrix} \qquad B_{new} = \begin{bmatrix} 0 \\ 1 \end{bmatrix}$$

$$y=Ax+B$$

where $A_{old}$ and $B_{old}$ denote the old system matrix and the old input matrix.

Then, the state variables and the control input are defined as:

$$Z = [\ \xi,\ v_{\xi},\ \theta,\ \dot{\theta},\ \delta\ ]^{T},\ u = \dot{\delta} \qquad \text{(EQ. 16)}$$

which satisfies the system equations as the following:

$$\frac{d\xi}{d\bar{s}} = Z_1' = (Z_2 + V_n Z_3)\ \sigma$$

$$\frac{dV_{\xi}}{d\bar{s}} = Z_2' = [\ -\frac{C_{\alpha F} + C_{\alpha R})}{mV_n} Z_2$$

$$+ \{\ \frac{(bC_{\alpha R} - aC_{\alpha F})}{V_n} - V_n\ \} Z_4$$

$$+ \frac{C_{\alpha F}}{m} Z_5\ ]\ \sigma$$

$$\frac{d\theta}{d\bar{s}} = Z_3' = Z_4\ \sigma$$

$$\frac{d\dot{\theta}}{d\bar{s}} = Z_4' = [\ \frac{(bC_{\alpha R} - \alpha C_{\alpha F})}{IV_n} Z_2$$

$$- \frac{(a^2 C_{\alpha F} + b^2 C_{\alpha R})}{IV_n} Z_4 + \frac{aC_{\alpha F}}{I} Z_5]\ \sigma$$

$$\frac{d\delta}{d\bar{s}} = Z_5' = u\sigma \qquad \text{(EQ. 17)}$$

The new cost function becomes:

$$L(Z,\bar{s}) = \frac{q_f}{2}\,[\,Z(1) - \xi_d(1)\,]^2 + \frac{1}{2}\int_0^1 [\,R_1 u^2(\bar{s}) + \{\,Z_1(\bar{s}) - \xi_d(\bar{s})\,\}^2\,]\,d\bar{s} \quad \text{(EQ. 18)}$$

The steering planning with resulting system equation (17) and the cost function (18) above, can be solved as a linear quadratic tracking problem as the following. Suppose the system equation and the cost function are described as

$$\dot{X} = AX + BU \quad t > t_o \qquad \text{(EQ. 19)}$$

$$L = \frac{1}{2}[\,X(t_f) - X_d(t_f)\,]^T Q_f\,[\,X(t_f) - X_d(t_f)\,] + \frac{1}{2}\int_{t_o}^{t_f}\{\,[\,X(t) - X_d(t)\,]^T Q(t)\,[\,X(t) - X_d(t)\,] + U^T(t)R(t)U(t)\,\}\,dt \quad \text{(EQ. 20)}$$

and $Qf \geq o$, $Q \geq o$, $R \geq o$
are chosen all symmetric. Then the resulting equations are:

$$-\dot{P} = A^TP + PA - PBR^{-1}B^TP + Q\ ,\ P(t_f) = Q_f \qquad \text{(EQ. 21)}$$

$$k(t) = R^{-1}B^TP(t) \qquad \text{(EQ. 22)}$$

$$-\dot{v} = (A-BK)^Tv + QX_d\ ,\ V(t_f) = X_d(t_f) \qquad \text{(EQ. 23)}$$

$$U = -KX + R^{-1}B^TV \qquad \text{(EQ. 24)}$$

Thus, the riccati equation (21) must be solved first and the gains are computed from the result of the riccati equation and then the forcing function driven by the desired path are computed by solving equation (23). Then, the control and states are obtained by solving equation (19) and (24).

The MacFarlane-Potter integration method was tried to solve the riccati equation. This method is known to be very effective for the steady-state solution of the time-invariant problem. Since the previewed distance is quite long and the initial parts of the solution are used, this method seems good to reduce the computation time.

Hence, equation (23) is changed as the following equation (25) and solved, because the previewed distance is long and only the inertial part of the solution is used.

$$(A-BK)^Tv + QX_d = O \qquad \text{(EQ. 25)}$$

h. CONCLUSION

Tracking performance has been improved according to the present invention, by investigating and understanding vehicle and control system dynamics and by designing compensation methods given this understanding.
A degraded performance of a tracking method is attributable to latency of vehicle control commands, slow system response, and vehicle dynamic characteristics. It is possible to counteract each of these effects.
Latency of Vehicle commands, a dominant effect, can be successfully compensated by modifying the vehicle control hardware and by utilizing a method which set control commands far enough in advance to compensate the delays. Decreasing the time lag between when the vehicle position is sensed and when the command is issued reduces prediction errors. This is required to plan steering angles, and results in better tracking performance.
varying look-ahead distance with speed also improves tracking performance in comparison to using a constant look-ahead distance.
In general terms then, path tracking is the function of staying on course. In path tracking in the present invention, as discussed, some of the considerations are errors in distance, heading and curvature, delays in the system including processing delays and delays in vehicle response to actuators, and so on, dynamic look ahead distance, weighted path history, and extrapolation.

D. OBSTACLE HANDLING

Obstacle handling involves at least three major functions: detection of obstacles 4002, avoidance of obstacles 4002, and returning to path 3312. The returning to path function is similar to path generation and tracking, as described above.
In addition to path tracking (following), successful navigation of vehicle 102 requires that vehicle 102 be able to detect obstacles 4002 in its path, thus allowing the vehicle to stop or otherwise avoid such an obstacle before a collision occurs.
A single line infra-red laser scanner 404 (See Figure 22) is used in a configuration where the scan is horizontal (not shown). The scan line 3810 does not contact the ground, so any discontinuities in the range data can be attributed to objects 4002 in the environment.
Since a reference path 3312 is available and the vehicle position is known relative to the reference path, only the range data and a region bounding the reference path 3312 is processed for threatening objects 4002. Objects outside of this region, or boundary zone, are ignored. The width of the boundary zone (not shown) is equal to the vehicle width plus some selected safety buffer to allow for tracking and positioning errors. This method is limited in its usefulness and is referred to as "clearance checking."

E. VEHICLE CONTROLLING SYSTEMS

1. INTRODUCTION

Referring now to Figure 24, the vehicle controls are comprised of four, low-level functional blocks.
One is called a "vehicle manager" (4302). A second is called a "speed control" (4304). The third is called a "steering control" (4306). The fourth is called a "monitor/auxiliary control" (depicted as two separate blocks 4310 and 4308. These are described in turn below.
They are all tied together with a high-speed serial data bus 4314. The bus 4314 is a data collision detection, packet passing system.
Each of these functional blocks have separate microprocessors, for instance of the Motorola 68000 16 bit series. Each of these microprocessors talks to and listens to the others over the bus 4314.
While each functional block has a more or less specific function, the vehicle manager 4302 functions as a communications hub. It sends to and receives messages from the navigator 406 via an RS-422, 9600 Baud serial link 4316. It is also listening to and sending to the remote control or "tele" panel 410 via an FM radio communications link 4318.

2. VEHICLE MANAGER (modes)

As mentioned above, the vehicle manager 4302 receives commands from a remote control panel 410 and the navigator 406. It then decides which mode "A, M, T, or R" (for Autonomous, Manual, Tele, or Ready) the vehicle 102 should be in.

a. READY MODE

Reference is now made to Figure 25, which shows the states (modes) and how the vehicle 102 changes between states. The navigator 406 cannot set the mode itself. Notice that the vehicle 102 cannot change from tele to auto, for instance, directly. It must pass through the ready mode 4404 first in that case.

The ready mode 4404 brings the vehicle 102 to a stop in a known state. This is because it would be difficult to make a smooth transition, from, for instance, auto mode 4408 to tele mode 4406 while the vehicle 102 was moving. The tele control panel joystick 4502, 4504 would have to be in just the right position when control was switched.

Going from tele 4406 to auto 4408 mode, there is the consideration that the navigator 406 must initialize. For example, it must determine where it is with respect to a route before taking control, which takes some finite time, during which the vehicle 102 might otherwise drive off uncontrolled.

b. TELE MODE

Tele control mode 4406, also referred to as tele-operation, remote control or radio control mode, provides a way of controlling the vehicle 102 from a remote location while the vehicle 102 is kept in view.

Shop personnel would use the tele-operation mode 4406 to move the vehicle 102 in the yard, for example. Advantageously, this mode would also be used by a shovel or loader operator to maneuver the vehicle into position for loading or unloading, and moving the vehicle into a location where autonomous mode 4408 would resume control.

In tele-operation mode 4406, each vehicle 102 at an autonomous work site 300 would have its own unique identification code that would be selected on a radio control panel 410 to ensure communication with and control of the correct vehicle only. The vehicle 102 would only respond to tele-operation commands 4318 when its unique identification code is transmitted. Any conflict between modes, such as between manual 4402 and tele 4406, would be resolved in favor of manual mode 4402, for obvious safety reasons.

The navigator 406 keeps track of where the vehicle 102 is while being operated in the tele mode 4406, even though, in tele mode, the vehicle can be maneuvered far off of a known route.

c. MANUAL MODE

Manual control mode 4402 may be required when the vehicle 102 is being maneuvered in very close quarters, for example, at a repair shop, equipment yard, and so on, or when a control subsystem needs to be removed for repair or maintenance.

This control mode may be implemented to be invoked whenever a human operator activates any of the manual controls. The simple action of stepping on the brakes 4708, moving the shift lever from some predetermined, autonomous mode position, or grasping the steering wheel 4910, for example, would immediately signal the control system that manual control mode 4402 is desired and the system would immediately go to the manual mode.

While in manual mode, the autonomous system would continuously monitor vehicle motion and maintain an updated record of the vehicle position so that when and if autonomous mode 4408 was desired, a quicker and more efficient transition could be made.

When autonomous mode 4408 is again desired, the human operator would then affirmatively act to engage autonomous mode 4408, by physically moving a switch or lever, for instance, to the autonomous control mode. A time delay would preferably be built in so that the human operator would have the opportunity to leave the vehicle 102 if desired. At the end of the time delay, the system would then give several levels of warning, such as lights, horn, or the like, indicating autonomous takeover of the vehicle 102 was imminent.

d. AUTONOMOUS MODE

The autonomous mode 4408 is entered into from ready mode 4404. In the autonomous mode 4408, the vehicle 102 is under the control of the autonomous navigation system.

In this mode, the vehicle control system receives messages from the navigator 406 as discussed above, through the vehicle manager 4302. The vehicle manager 4302 is, as discussed, basically the communications and command hub for the rest of the controllers.

The vehicle manager 4302, and the other functional control blocks, all communicate with the shutdown circuits 4312 as well. The shutdown circuits 4312 are discussed in more detail below.

3. SPEED CONTROL

The speed control subsystem 4302 may be organized to contain a speed command analyzer, closed loop

controls 4800 for the engine 4614, transmission and brakes 4700, 5000, a real time simulation model of the speed control system, and a monitor 4310 that is tied to an independent vehicle shutdown system 4312. It is designed to be placed in parallel to the production system on the vehicle 102.

The speed control functional block 4304 takes care of three basic functions. It controls the governor on the engine 4614. It controls the brake system 4606. And it controls the transmission 4610 via the production transmission control block 4616.

The production transmission control block 4616 is interfaced with the speed control block 4304 in a parallel retro-fit of the autonomous system onto the production system as shown in Figure 28. The production transmission control block 4616 is a microprocessor based system which primarily monitors speed and shifts gears accordingly.

The autonomous system speed control block 4304 feeds the transmission control block 4616 the maximum gear desired. For instance, if the vehicle 102 is to go 15 mph, the maximum gear might be third gear. The production transmission control block 4616 will control all the shifting necessary to get to that gear appropriately.

The governor 4626 (Figure 26) controls the amount of fuel delivered to the engine 4616. Thus, it controls engine speed. The autonomous system is capable of being retro-fitted in parallel with the production governor control system, in a similar fashion as described with respect to the transmission system.

The brake system is shown in Figures 27 and 30. The autonomous system here is also capable of being retro-fitted to the production brake system.

The following discusses vehicle systems shown in Figures 26 to 30. These systems relate to the vehicle drive train 4600 and steering 4900 systems.

Referring to Figure 26 a governor 4626 controls engine speed 4222, which in turn controls vehicle speed 4624. The engine power is transferred to the drive wheels through the drive train 4600 which is comprised of:

torque converter 4612
transmission 4610
final drive 4608
brake system 4606
wheels 4604

The function of these systems is well known in the art.

Several key systems were modified in accordance with the present invention to effect autonomous control. The primary systems were the speed control (engine speed, transmission, vehicle speed, and brakes) and steering systems. Each key system is design with manual override capability as a safety measure. In all cases, manual control has priority so that if the vehicle is operating autonomously, and an operator takes control of any one of the vehicle functions, control automatically is returned to the operator.

The system also provides an emergency override button (not shown; also referred to as a 'panic' button) which, when activated, disables all electronically controlled systems and returns the vehicle 102 to manual control 4402.

The system also provides for sensing the pneumatic pressure which is a key part for actuating some of the key systems. If this pressure falls below some. preset threshold, it is assumed that there is a problem and the vehicle control system reverts to manual control 4402 and the vehicle 102 is stopped.

Figure 28 depicts the system used to control engine speed. This system uses electronically controlled valves 4808 and 4812 to regulate pneumatic pressure in parallel to a pedal 4806 which can be manually operated to override electronic control of the engine speed 4622. The pressure sensor 4802 and the engine speed sensor 4622 provide the necessary feedback for the electronic speed control system 4304.

Also required to control the vehicle speed is a transmission control 4616. The basic control system is readily available on the particular vehicle used for this purpose.

In addition to controlling the engine speed 4622 as a means of regulating vehicle speed, it is also necessary to control the vehicle service brakes 4606. This system is shown in Figure 27 and is necessary to effect normal stoppage or slowing of the vehicle 102. This system uses electronically controlled pneumatic valves 4712 and 4716 in parallel with a manually operated brake pedal 4708 and/or retarder lever 4710 to regulate the braking force. These two manual inputs can override the electronic control system when actuated. The pressure sensor. 4702 and the vehicle speed sensor 4624 provide the necessary feedback to regulate the braking force.

Control of vehicle steering is also required for the vehicle to operate autonomously. The system which performs this function is shown in Figure 29 The system consists of a Rexroth proportional hydraulic valve 4912 which can be actuated electronically to provide flow to hydraulic cylinders 4914 and 4916 attached to the vehicle steering linkage. The system also comprises a manually operable hand-metering unit, or HMU, 4918, which is in parallel to the electronically controlled system. The manual system can override the electronic system, if required, as a safety measure. Also, the system provides a switch 4920 on the HMU to detect when the manual steering wheel 4910 is different from the centered position. When not centered, the autonomous system assumes that the system is being operated manually

4402 and disables autonomous control of the vehicle 102.

Electronic control of the vehicle parking brake is also included as an added safety feature. This system is shown in Figure 30. For proper operation under autonomous control, the parking brake is manually placed in the 'ON' position. When the vehicle proceeds through the status modes (MANUAL 4402, READY 4404, and AUTO 4408), the parking brake is automatically released by electronically controlling the pneumatic valve 5008. This system is in parallel to the manual systems comprised of the brake lever release valve 5016 and the Emergency brake lever 5014.

When a problem is encountered, the vehicle 102 is automatically placed under manual control. Since the manual setting of the park brake is normally 'ON', this activates the parking brake, stopping the vehicle 102 as quickly as possible.

4. STEERING CONTROL

Referring again to Figure 24, the steering control functional block 4306 is responsible for controlling the steer angle of the vehicle's wheels. It sends out commands to a valve 4912 to control the steer angle and receives information from a resolver (not shown) mounted on the tie rod system, so that it knows what the actual wheel angle is.

The steering angle can be controlled with an accuracy on the order of a half a degree, and the resolver is accurate to something less than that, on the order of an eighth of a degree.

At some point in the useful life of the vehicle 102 the resolver may go out of adjustment. If this happens, the vehicle will not be able to track the path 3312 properly.

However, the navigator 406 constantly monitors the vehicle 102 to determine how far the vehicle 102 is from the desired path 3312. (The vehicle 102 is always off the desired path 3812 to some extent, and the system is constantly correcting.) If the vehicle 102 is more than a certain distance, for example several meters, from the desired path 3312, the navigator 406 stops the vehicle as a safety precaution.

The steering control system 4306 itself is also always checking to make sure the resolver is accurate, and that steering commands 420 received have not been corrupted (not shown) by noise or other error sources. A steering simulation model may also be implemented as an additional check of the system.

The autonomous steering system 4900 may be designed to be implemented in parallel with a manual steering system, and can be retro-fitted on to the vehicle 102 in a similar manner as the speed control system.

As shown in Figure 29, the existing or production manual steering system has a manual steering wheel 4910 which turns a hand metering unit, or HMU 4918. The HMU 4918 controls a valve 4912 which controls flow of hydraulic fluid to steering cylinders 4914, 4916, which turn the wheels (not shown).

A switch 4920 on the HMU 4918 detects off-center position of the steering wheel 4910 as an indication to change to manual control of steering. An operator riding in the cab can merely turn the steering wheel 4910 to disable autonomous steering control 4408.

Under autonomous steering control 4408, the manual steering wheel 4910 in the cab remains centered no matter what position the autonomous steering control has turned the wheels to. There is no mechanical linkage between the steering wheel 4910 and the wheels themselves.

Of course a vehicle 102 may be manufactured without any manual steering system at all on the vehicle if desired. To drive the vehicle manually, the tele-panel 410 could be used, or some sort of tele-panel might be plugged into the side of the vehicle 102 to control it without a radio link 4506 in close quarters, for instance. A jump seat might be provided for an operator in such situations.,

Some discussion of the steering model developed may facilitate a better understanding of the present invention.

a. STEERING MODEL

The basis for the steering planner is a tricycle steering model shown in Figure 31. This model permits the calculation of the required steer angle independent of the velocity of the vehicle.

$$\Phi = \tan^{-1} \text{LC path}$$

To use this model, the desired path 3312 must contain the curvature of the path to be followed. The curvature is the inverse of the instantaneous radius of curvature at the point of the curve.

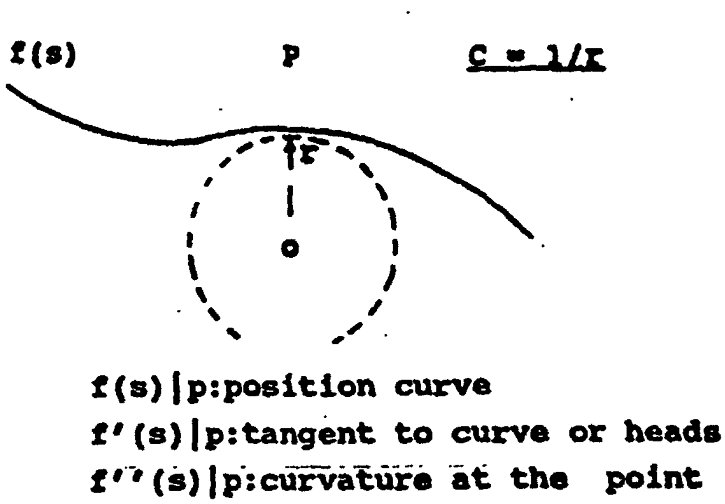


This is also equal to the second path derivative at the point.

b. PATH REPRESENTATION

Referring to Figures 12-18, the response of autonomous vehicle 102 in tracking a path 3312 depends partly on the characteristics of the path 3312. In particular, continuity of the curvature and the rate of change of curvature (sharpness) of the path 3312 are of particular importance, since these parameters govern the idealized steering motions to keep the vehicle 102 on the desired path 3312. In the case where a path 3312 is specified as a sequence of arcs and lines, there are discontinuities of curvature at the point where two arcs of differing radii meet. Discontinuities in curvature are troublesome, since they require an infinite acceleration of the steering wheel. A vehicle travelling through such transition points with non-zero velocity will experience an offset error along the desired path 3312.

In general, and as shown in Figure 17, if a posture 3314 is desired as the quadruple of parameters--position 3320, heading 3318, and curvature 3316 (x, y, 0, c), then it is required that the path 3812 be posture-continuous. In addition, the extent to which steering motions are likely to keep the vehicle 102 on the desired path 3312 correlates with the linearity of sharpness of the path, since linear curvature along a path means linear steering velocity while moving along the path.

Certain spline curves guarantee posture continuity. However, these spline curves do not guarantee linear gradients of curvature along curves. Clothoid curves 2602 have the "good" property that their curvature varies linearly with distance along the curve. Paths composed of (a) arcs and straight lines or (b) clothoid segments have been developed.

A path that has discontinuities in curvature results in larger steady state tracking errors. This is particularly the case when-the actuators are slow.

The path representation must contain sufficient information to calculate the steer angle 3112 (See Figure 15. needed to drive the desired path 3312, that is, it must consist of at least the position, heading, curvature and speed. A position on the desired path 3312 has been defined as a posture 3314, and the structure of a posture in the present invention is given by:

c. POSTURE DEFINITION

| | |
|---|---|
| North | desired north coordinate |
| East | desired east coordinate |
| Heading | desired heading |
| Curvature | desired curvature |
| Speed | desired ground speed |
| Distance | distance between current posture and the previous posture. |

d. POSITION INFORMATION

The position information 3322 is obtained from the VPS 1000 and is, for example, 71 bytes of data. The structure of the information used to track the desired path 3312 is a subset of the 71 byte VPS output and is given by the VPS short definition shown below.

e. VPS SHORT DEFINITION

| | |
|---|---|
| Time | gps time |
| North | wgs 84_northing |
| East | wgs 84_easting |
| Heading | compass direction vehicle is moving |
| Curvature | calculated from other variable |
| N_velocity | north velocity |
| E_velocity | east velocity |
| Yaw rate | rate of change of the heading |
| G_speed | ground speed |
| | distance travelled |

f. STEERING METHOD

The steering planner calculates the steer . angle needed to follow the desired path. If the vehicle 102 was on the desired path 3312, the steer angle is:

$$\text{ON PATH } \Phi\text{steer} = f(\text{Cdesired}) = \tan^{-1} \text{LC}$$

If the vehicle 102 is off the desired path 3312, then the steer angle is:

$$\text{OFF PATH } \Phi\text{steer} = f(\text{Cdesired} + \text{Cerror}).$$

The method of the present invention used to calculate Cerror is a quintic method. The quintic is a fifth degree polynomial in an error space that defines a smooth path back to the desired path 3312. The degree of the polynomial is defined by the needed data, that is, Cerror and the known end constraints.

Polynomial in error space: error

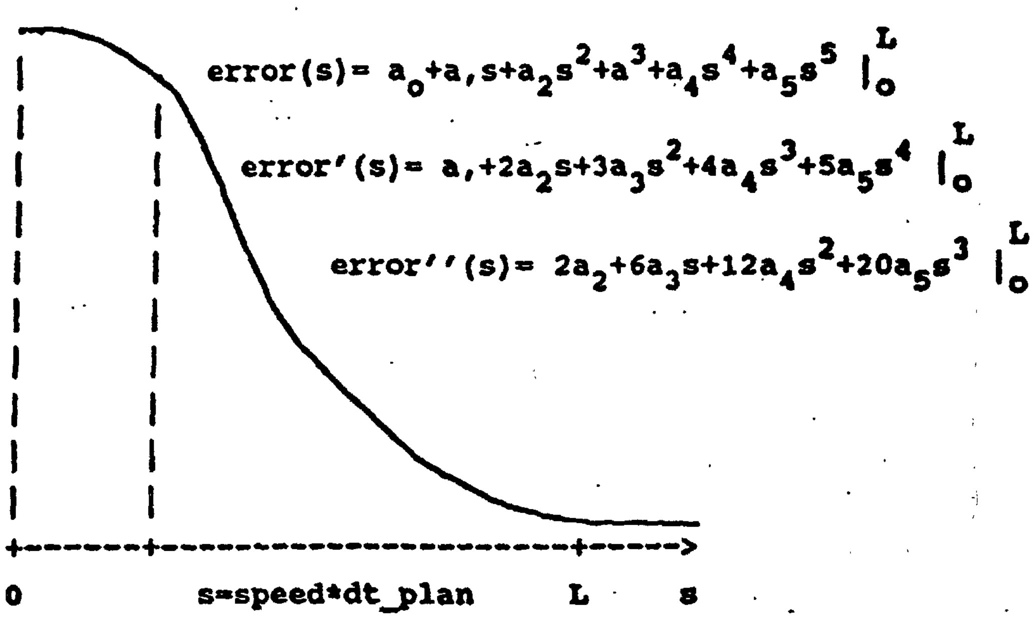


at s=O:

error (O) position = current desired position - current actual position
error' (O) heading = current desired heading - current actual heading
error''(O) curvature = current desired curvature - current actual curvature

at s=L (L lookahead distance):

error (L) position = O
error (L) heading = O
error (L) curvature = O

The coefficients of the polynomial error(s) are functions of L, the distance at which the errors go to zero:

error (O) = $a_o$
error'(O) = $a_1$
error''(O) = $2a_2$
error (L) = $a_o + a_1L + a_2L^2 + a_3L^3 + a_4L^4 + a_5L^5$
error'(L) = $a_1 + 2a_2L + 3a_3L^2 + 4a_4L^3 + 5a_5L^4$
error''(L) = $2a_2 + 6a_3L + 12a_4L^2 + 20a_5L^3$

These five equations are solved symbolically for the coefficients $a_0$, $a_1...a_5$. Then, each coefficient can be easily determined for any reasonable set of boundary conditions.
Once the coefficients of the polynomial are obtained, the error''(s) can be evaluated for some picked_s, which corresponds to a distance along desired path from s=O and is presently defined as:

$$s_{picked} = \text{ground speed} * \text{planning interval}$$

to obtain the correction term:

$$\text{Cerror} = \text{error}''(s_{picked})_{curvature}$$

to calculate the new steer angle:

$$\Phi steer = \tan^{-1} [(Cdesired + Cerror_{@spicked}) L]$$

This calculation is done at each planning interval which is presently .25 sec. (dt_ plan).

5. MONITOR/AUXILIARY

Referring now to Figure 24, the monitor/auxiliary functional block(s) 4308 and 4310 take care of some miscellaneous functions not performed by the other blocks of the vehicle control system. For instance, start or kill the engine 4616, honk the horn, raise or lower the bed, setting the parking brake on or off, turning the lights on or off, are some of its functions.

The monitor block 4310 also checks the commands that are being sent by or to the other functional blocks on the bus 4314 to see if they are valid. If error is detected, it will signal the shutdown circuits block 4312 and the system will shutdown as discussed below.

6. SAFETY SYSTEM (SHUTDOWN)

a. INTRODUCTION

The safety system, including shutdown circuits 4312, (see Figures 24 and 32) operates to stop the vehicle 102 on detection of a variety of error conditions by setting the parking brake on. This results in the vehicle 102 coming to a safe stop in the shortest distance possible.

Since the parking brake is designed to be normally "set" or "on," and the electronic circuits operate to release it, upon a failure of the electronic controlling system(s) the power 5216 is turned off to the actuators 5006, so that there is no power to actuate valves, and the parking brake returns to its normal position, called "set."

Whenever several erroneous commands are received, or whenever the speed and/or steering simulation models disagree beyond an acceptable tolerance with vehicle sensor outputs 4622 and 4624, are examples of conditions which could result in shutdown of the system. The shutdown system 4312 is an independent and separate subsystem from the other autonomous control subsystems (see Figures 24 and 32).

b. SHUTDOWN CONTROL

The safety system shutdown circuits 4312 shown in Figure 24 connected to receive the outputs of the other vehicle control system functional blocks is shown in more detail in Figure 32.

It is a fail-safe type design. It contains no microprocessor at all. It is all hard-wired, discrete logic.

A feature of the vehicle control system 4312 design is that all functional blocks are capable of detecting errors in the output of the others on the serial bus 4314. So if one of them senses that another is not functioning correctly, it can send a signal to the shutdown circuits 4312 to shut the system down.

For example, the speed and steering blocks each look at their received commands (received via the vehicle manager 4302) to make sure they are valid. They also make sure that what they are told to execute, that is, what they are requested to command, is within predetermined bounds. If not, they will act to shut the system down.

The safety system may also be monitoring oil, hydraulic and pneumatic pressures, and temperatures, for instance, making sure they are sufficient to safely operate and control the vehicle.

The safety system includes switches for manual override, including a panic stop 5208, switches on the brake pedal 5202 and steering wheel 5206.

7. BUS ARCHITECTURE

The bus 4314 that inter-connects the vehicle control system functional units 4302, 4304, 4306, 4308, and 4310 is a serial data type common bus implemented in a ring structure using a data packet collision detection scheme.

**Claims**

**1.** A system (5306) for a vehicle (102) for enabling the vehicle (102) to track a preset path (3312) comprising:

means for executing vehicle commands causing the vehicle (102) to attempt to follow the preset path (3312) ;
means for periodically calculating errors in following the preset path (3312);

means, responsive to the calculated errors, for adjusting the vehicle commands to reduce the calculated errors, whereby the vehicle (102) tracks the preset path (3312) with a high degree of accuracy;

**characterised in that** the means, responsive to the calculated errors, for adjusting the vehicle commands to reduce the calculated errors, includes means for constructing a smooth path back to the preset path (3312) using a quintic polynomial and means for compensating for vehicle response characteristics, the vehicle response characteristics including latency of vehicle control commands, slow system response and vehicle dynamics including vehicle-ground interaction, slip angle and under/over steering.

**2.** A system according to claim 1, further comprising:

means for determining reference postures (3202, 3214,3220) at regular unit distances along a desired path (3312), where postures are packets of information about a particular location on the path including longitude, latitude, heading, curvature, maximum velocity, and distance to the next posture;
means for determining an actual vehicle posture (3210,3212,3218) based on the reference postures (3202,3214, 3220);
means for determining an expected vehicle posture (3216) at a future time corresponding to a current planning time interval based on the actual vehicle posture (3210, 3212,3218);
means for determining a desired posture (3204, 3212,3218) at the end of a next planning time interval;
means for determining a steering angle (3112) from the expected vehicle posture (3216) and the desired posture (3212,3218);
means for commanding the vehicle (102) to steer the determined steering angle (3206,3208).

**3.** The system (5306) for a vehicle (102) for enabling the vehicle (102) to track a preset path (3312) of claim 1, wherein the vehicle commands comprise separate steering and speed control aspects, and the means for executing vehicle commands causing the vehicle (102) to attempt to follow the preset path (3312) comprises:

means (3102,3104,3110) for executing the steering control aspects; and
means (3106,3108,3110) for executing the speed control aspects, whereby steering and speed control of the vehicle (102) are decoupled.

**4.** A system (5306) for a vehicle (102) for enabling the vehicle (102) to track a preset path (3312) according to claim 1, wherein the means, responsive to the calculated errors, for adjusting the vehicle commands to reduce the calculated errors, further includes means for compensating for sensing and actuation timing characteristics of the system.

**5.** A system (5306) for a vehicle (102) for enabling the vehicle (102) to track a preset path (3312) according to claim 1, wherein the means, responsive to the calculated errors, for adjusting the vehicle commands to reduce the calculated errors, further includes means for varying a look-ahead distance (3310) based on the speed of travel of the vehicle (102).

**6.** A system (5306) for a vehicle (102) for enabling the vehicle (102) to track a preset path (3312) according to claim 1, wherein the means, responsive to the calculated errors, for adjusting the vehicle commands to reduce the calculated errors, further includes means for adjusting control of the vehicle using an optimal control system.

**7.** A method (5306) for a vehicle (102) for enabling the vehicle (102) to track a preset path (3312), the method comprising the steps of:

executing vehicle commands causing the vehicle (102) to attempt to follow the preset path (3312);
periodically calculating errors in following the preset path (3312) ;
adjusting, responsive to the calculated errors, the vehicle commands to reduce the calculated errors;
whereby the vehicle (102) tracks the preset path (3312) with a high degree of accuracy;

**characterised in that** the step of adjusting, responsive to the calculated errors, the vehicle commands to reduce the calculated errors, includes the steps of:

constructing a smooth path back to the preset path (3312) using a quintic polynomial; and
compensating for vehicle response characteristics, the vehicle response characteristics including latency of

vehicle control commands, slow system response and vehicle dynamics including vehicle-ground interaction, slip angle and under/over steering.

**8.** A method according to claim 7, wherein the tracking comprises the steps of:

determining reference postures (3202,3214,3220) at regular unit distances along a desired path (3312), where postures are packets of information about a particular location on the path including longitude, latitude, heading, curvature, maximum velocity, and distance to the next posture;
determining an actual vehicle posture (3210,3212,3218) based on the reference postures (3202,3214,3220)
determining an expected vehicle posture (3216) at a future time corresponding to a current planning time interval based on the actual vehicle posture (3210,3212,3218);
determining a desired posture (3204,3212,3218) at the end of a next planning time interval;
determining a steering angle (3112) from the expected vehicle posture (3216) and the desired posture (3212,3218) ;
commanding the vehicle (102) to steer the determined steering angle (3206, 3208) ; and
repeating the steps from the actual vehicle posture determining step to vehicle commanding step.

**9.** A method (5306) for a vehicle (102) for enabling the vehicle (102) to track a preset path (3312) according to claim 7, wherein the vehicle commands comprise separate steering and speed control aspects, and the step of executing vehicle commands causing the vehicle (102) to attempt to follow the preset path (3312) comprises:

executing (3102, 3104, 3110) the steering control aspects; and
executing (3106, 3108, 3110) the speed control aspects;
whereby steering and speed control of the vehicle (102) are decoupled.

**10.** A method (5306) for a vehicle (102) for enabling the vehicle (102) to track a preset path (3312) according to claim 7, wherein the step of adjusting, responsive to the calculated errors, the vehicle commands to reduce the calculated errors, further includes the step of:

compensating for sensing and actuation timing characteristics of the method (5306).

**11.** A method (5306) for a vehicle (102) for enabling the vehicle (102) to track a preset path (3312) according to claim 7, wherein the step of adjusting, responsive to the calculated errors, the vehicle commands to reduce the calculated errors, further includes the step of varying a look-ahead distance (3310) based on the speed of travel of the vehicle (102).

**12.** A method (5306) for a vehicle (102) for enabling the vehicle (102) to track a preset path (3312) according to claim 7, wherein the step of adjusting, responsive to the calculated errors, the vehicle (102) commands to reduce the calculated errors, further includes adjusting control of the vehicle (102) using an optimal control method.

**13.** A system according to claim 1, further comprising:

means (3102) for planning steering, by outputting a desired steering angle (3112), based on a desired path input from a supervisory system and sensed vehicle positions input (3114) from a positioning system (1000) ;
means (3104) for controlling steering of the vehicle (102), by outputting steering servo commands to a steering system (3104) of the vehicle, responsive to the output (3112) of the means for planning steering (3102) and to feedback (3116) from the steering system (3110) of the vehicle;
means for setting speed (3106), by outputting a desired speed signal, based on a desired speed input from the supervisory system; and
means for controlling the speed (3108) of the vehicle (102), by outputting speed commands to a vehicle speed system (3110), responsive to the output of the means for setting speed (3110), whereby a path tracking control structure (3100) is realised.

**14.** A method according to claim 7 further comprising the steps of:

planning steering (3102), by outputting a desired steering angle (3112), based on a desired path input from a supervisory system and sensed vehicle positions input (3114) from a positioning system (1000) ;
controlling steering (3104) of the vehicle (102), by outputting steering servo commands to a steering system

(3104) of the vehicle (102), responsive to the output (3112) of the step of planning steering (3102) and to feedback (3116) from the steering system (3110) of the vehicle (102) ;
setting speed (3106), by outputting a desired speed signal (3130) based on a desired speed input from the supervisory system; and
controlling the speed (3108) of the vehicle (102), by outputting speed commands to a vehicle speed system (3110), responsive to the output of the step of setting speed (3106) and feedback (3118) from the vehicle speed system (3110), whereby a path tracking control structure (3100) method is realised.

## Patentansprüche

**1.** System (5306) für ein Fahrzeug (102), um es dem Fahrzeug (102) zu ermöglichen, einen voreingestellten Pfad (3312) zu verfolgen, wobei das System folgendes aufweist:

Mittel zur Ausführung von Fahrzeugbefehlen, die bewirken, dass das Fahrzeug (102) versucht, dem voreingestellten Pfad (3312) zu folgen;
Mittel zur periodischen Berechnung von Fehlern bei der Verfolgung des voreingestellten Pfades (3312) ; Mittel, die auf die berechneten Fehler ansprechen, um die Fahrzeugbefehle einzustellen, um die berechneten Fehler zu verringern, wodurch das Fahrzeug (102) den voreingestellten Pfad (3312) mit einem hohen Grad an Genauigkeit verfolgt;

**dadurch gekennzeichnet, dass** die Mittel, die auf die berechneten Fehler ansprechen, um die Fahrzeugbefehle einzustellen, um die berechneten Fehler zu verringern, Mittel aufweisen, um einen glatten Pfad zurück zu dem voreingestellten Pfad (3312) zu bilden, und zwar unter Verwendung eines quintischen Polynoms bzw. Polynoms fünfter Ordnung und weiter Mittel zur Kompensation der Ansprechcharakteristiken des Fahrzeugs, die eine Latenz der Fahrzeugsteuerbefehle, langsames Systemansprechen und das dynamische Verhalten des Fahrzeugs aufweisen, die eine Gegenwirkung von Fahrzeug und Erdboden, einen Gleitwinkel und eine Unter/Über-Steuerung miteinschließen.

**2.** System nach Anspruch 1, welches weiter Folgendes aufweist:

Mittel zur Bestimmung von Referenzlagen (3202, 3214, 3220) in regelmäßigen Einheitsabständen entlang eines erwünschten Pfades (3312) wobei die Lageninformationspakete um eine spezielle Stelle des Pfades herum sind, die die Länge, die Breite, die Ausrichtung, die Krümmung, die maximale Geschwindigkeit und die Distanz zur nächsten Lage aufweisen;
Mittel zur Bestimmung einer tatsächlichen Fahrzeuglage (3210, 3212, 3218) basierend auf den Referenzlagen (3202, 3214, 3220);
Mittel zur Bestimmung einer erwarteten Fahrzeuglage (3216) zu einem zukünftigen Zeitpunkt entsprechend einem gegenwärtigen Planungszeitintervall basierend auf der tatsächlichen Fahrzeuglage (3210, 3212, 3218) ;
Mittel zur Bestimmung einer erwünschten Lage (3204, 3212, 3218) am Ende des nächsten Planungszeitintervalls;
Mittel zur Bestimmung eines Lenkwinkels (3112) aus der erwarteten Fahrzeuglage (3216) und der erwünschten Lage (3212, 3218);
Mittel zur Anweisung des Fahrzeugs (102) zur Lenkung mit dem erwünschten Lenkungswinkel (3206, 3208).

**3.** System (5306) nach Anspruch 1 für ein Fahrzeug (102) um es dem Fahrzeug (102) zu gestatten, einen voreingestellten Pfad (3312) zu verfolgen, wobei die Fahrzeugbefehle getrennte Aspekte der Lenkung und der Geschwindigkeitssteuerung aufweisen, und wobei die Mittel zur Ausführung der Fahrzeugbefehle bewirken, dass das Fahrzeug (102) versucht, dem voreingestellten Pfad (3312) zu folgen, wobei das System Folgendes aufweist:

Mittel (3102, 3104, 3110) zur Ausführung der Aspekte der Lenkungssteuerung; und
Mittel (3106, 3108, 3110) zur Ausführung der Aspekte der Geschwindigkeitssteuerung, wodurch die Lenkung und die Geschwindigkeitssteuerung des Fahrzeugs (102) entkoppelt werden.

**4.** System (5306) nach Anspruch 1 für ein Fahrzeug (102), um zu ermöglichen, dass das Fahrzeug (102) einem voreingestellten Pfad (3312) folgt, wobei die Mittel zur Einstellung der Fahrzeugbefehle, die auf die berechneten Fehler ansprechen, um die berechneten Fehler zu verringern, weiter Mittel aufweisen, um die Abfühl- und Betätigungszeitsteuerungscharakteristiken des Systems zu kompensieren.

**5.** System (5306) für ein Fahrzeug (102) nach Anspruch 1, um zu ermöglichen, dass das Fahrzeug (102) einen voreingestellten Pfad (3312) verfolgt, wobei die Mittel zur Einstellung der Fahrzeugbefehle, die auf die berechneten Fehler ansprechen, um die berechneten Fehler zu verringern, weiter Mittel aufweisen, um eine Vorausschaudistanz (3310) basierend auf der Fahrgeschwindigkeit des Fahrzeugs (102) zu variieren.

**6.** System (5306) für ein Fahrzeug (102) nach Anspruch 1, um zu ermöglichen, dass das Fahrzeug (102) einen voreingestellten Pfad (3312) verfolgt, wobei die Mittel zur Einstellung der Fahrzeugbefehle, die auf die berechneten Fehler ansprechen, um die berechneten Fehler zu verringern, weiter Mittel aufweisen, um die Steuerung des Fahrzeugs unter Verwendung eines optimalen Steuersystems einzustellen.

**7.** Verfahren (5306) für ein Fahrzeug (102), um zu ermöglichen, dass das Fahrzeug (102) einen voreingestellten Pfad (3312) verfolgt, wobei das Verfahren folgende Schritte aufweist:

Ausführung von Fahrzeugbefehlen, die bewirken, dass das Fahrzeug (102) versucht, dem voreingestellten Pfad (3312) zu folgen;
periodische Berechnung von Fehlern bei der Verfolgung des voreingestellten Pfades (3312); ansprechend auf die berechneten Fehler Einstellung der Fahrzeugbefehle zur Verringerung der berechneten Fehler;
wodurch das Fahrzeug (102) den voreingestellten Pfad (3312) mit einem hohen Grad an Genauigkeit verfolgt;

**dadurch gekennzeichnet, dass** der Schritt der Einstellung der Fahrzeugbefehle ansprechend auf die berechneten Fehler zur Verringerung der berechneten Fehler folgende Schritte aufweist:

Aufbau eines glatten Pfades zurück zum voreingestellten Pfad (3312) unter Verwendung eines quintischen Polynoms bzw. Polynoms fünfter Ordnung; und
Kompensation der Fahrzeugansprechcharakteristiken, wobei die Fahrzeugansprechcharakteristiken die Latenz der Fahrzeugsteuerbefehle, ein langsames Systemansprechen und dynamisches Verhalten des Fahrzeugs aufweisen, die eine Gegenwirkung von Fahrzeug und Erdboden, einen Gleitwinkel und Unter/Über-Steuerung miteinschließen.

**8.** Verfahren nach Anspruch 7, wobei die Verfolgung folgende Schritte aufweist:

Bestimmung von Referenzlagen (3202, 3214, 3220) in regelmäßigen Einheitsabständen entlang eines erwünschten Pfades (3312), wobei die Lagen Informationspakete um eine spezielle Stelle auf dem Pfad herum sind, die die Länge, die Breite, die Ausrichtung, die Krümmung, die maximale Geschwindigkeit und die Distanz zur nächsten Lage aufweisen;
Bestimmung einer tatsächlichen Fahrzeuglage (3210, 3212, 3218) basierend auf den Referenzlagen (3202, 3214, 3220);
Bestimmung einer erwarteten Fahrzeuglage (3216) zu einem zukünftigen Zeitpunkt entsprechend einem gegenwärtigen Planungszeitintervall basierend auf der tatsächlichen Fahrzeuglage (3210 ,3212, 3218) ; Bestimmung einer erwünschten Lage (3204, 3212, 3218) am Ende eines nächsten Planungszeitintervalls; Bestimmung eines Lenkwinkels (3112) aus der erwarteten Fahrzeuglage (3216) und der erwünschten Lage (3212, 3218);
Anweisung des Fahrzeugs (102) zur Lenkung mit dem bestimmten Lenkwinkel (3206, 3208); und
Wiederholung der Schritte von dem Schritt der Bestimmung der tatsächlichen Fahrzeuglage zum Schritt der Anweisung des Fahrzeugs.

**9.** Verfahren (5306) für ein Fahrzeug (102) nach Anspruch 7, um zu ermöglichen, dass das Fahrzeug (102) einen voreingestellten Pfad (3312) verfolgt, wobei die Fahrzeugbefehle getrennte Aspekte der Lenkung und der Geschwindigkeitssteuerung aufweisen, und wobei der Schritt der Ausführung der Fahrzeugbefehle, um zu bewirken, dass das Fahrzeug (102) versucht, dem voreingestellten Pfad (3312) zu folgen, Folgendes aufweist:

Ausführung (3102, 3104, 3110) der Lenkungssteueraspekte; und
Ausführung (3106, 3108, 3110) der Geschwindigkeitssteueraspekte;

wodurch die Lenkungs- und Geschwindigkeitssteuerung des Fahrzeugs (102) entkoppelt werden.

10. Verfahren (5306) für ein Fahrzeug (102) nach Anspruch 7, um es dem Fahrzeug (102) zu ermöglichen, einen voreingestellten Pfad (3312) zu verfolgen, wobei der Schritt der Einstellung der Fahrzeugbefehle ansprechend auf die berechneten Fehler zur Verringerung der berechneten Fehler weiter folgenden Schritte aufweist:

Kompensation der Abfühl- und Betätigungszeitsteuercharakteristiken des Verfahrens (5306).

11. Verfahren (5306) für ein Fahrzeug (102) nach Anspruch 7, um es dem Fahrzeug (102) zu ermöglichen, einen voreingestellten Pfad (3312) zu verfolgen, wobei der Schritt der Einstellung der Fahrzeugbefehle ansprechend auf die berechneten Fehler zur Verringerung der berechneten Fehler weiter den Schritt aufweist, eine Vorausschaudistanz (3310) basierend auf der Fahrgeschwindigkeit des Fahrzeugs (102) zu variieren.

12. Verfahren (5306) für ein Fahrzeug (102) nach Anspruch 7, um es dem Fahrzeug (102) zu ermöglichen, einen voreingestellten Pfad (3312) zu verfolgen, wobei der Schritt der Einstellung der Fahrzeugbefehle ansprechend auf die berechneten Fehler zur Verringerung der berechneten Fehler weiter die Einstellung der Steuerung des Fahrzeugs (102) unter Verwendung eines optimalen Steuerverfahrens aufweist.

13. System nach Anspruch 1, welches weiter Folgendes aufweist:

Mittel (3102) um eine Lenkung zu planen, in dem ein erwünschter Lenkwinkel (3112) ausgegeben wird, und zwar basierend auf einer Eingabe eines erwünschten Pfades von einem Überwachungssystem und von abgefühlten Fahrzeugpositionseingangsgrössen (3114) von einem Positionsbestimmungsystem (1000) ;
Mittel (3104) zur Steuerung der Lenkung des Fahrzeugs (102) durch Ausgabe von Lenk-Servobefehlen an ein Lenkungssystem (3104) des Fahrzeugs, und zwar ansprechend auf die Ausgangsgröße (3112) der Mittel zur Lenkungsplanung (3102) und auf die Rückkoppelung (3116) von dem Lenkungssystem (3110) des Fahrzeugs; Mittel zur Einstellung der Geschwindigkeit (3106) durch Ausgabe eines Soll-Geschwindigkeitssignals basierend auf einer erwünschten Geschwindigkeitseingabe von dem Überwachungssystem; und
Mittel zur Steuerung der Geschwindigkeit (3108) des Fahrzeugs (102) durch Ausgabe von Geschwindigkeitsbefehlen an ein Fahrzeuggeschwindigkeitssystem (3110) ansprechend auf die Ausgangsgröße der Mittel zur Geschwindigkeitseinstellung (3110), wodurch eine Pfadverfolgungssteuerstruktur (3100) verwirklicht wird.

14. Verfahren nach Anspruch 7, welches weiter folgende Schritte aufweist:

Lenkungsplanung (3102) durch Ausgabe eines erwünschten Lenkwinkels (3112) basierend auf einer Eingabe eines erwünschten Pfades von einem Überwachungssystem und basierend auf Eingangsgrößen der abgefühlten Fahrzeugpositionen (3114) von einem Positionsbestimmungsystem (1000);
Steuerung der Lenkung (3104) des Fahrzeugs (102) durch Ausgabe von Lenk-Servobefehlen an ein Lenkungssystem (3104) des Fahrzeugs (102), und zwar ansprechend auf die Ausgangsgröße (3112) vom Schritt der Lenkungsplanung (3102) und auf die Rückmeldung (3116) von dem Lenkungssystem (3110) des Fahrzeugs (102) ;
Einstellung der Geschwindigkeit (3106) durch Ausgabe eines Soll-Geschwindigkeitssignals (3130) basierend auf einer erwünschten Geschwindigkeitseingabe von dem Überwachungssystem; und
Steuerung der Geschwindigkeit (3108) des Fahrzeugs (102) durch Ausgabe von Geschwindigkeitsbefehlen an ein Fahrzeuggeschwindigkeitssystem (3110), und zwar ansprechend auf die Ausgangsgröße des Schrittes der Geschwindigkeitseinstellung (3106) und auf die Rückkoppelung (3118) von dem Fahrzeuggeschwindigkeitssystem (3110) wodurch ein Verfahren für eine Pfadverfolgungssteuerstruktur (3100) verwirklicht wird.

**Revendications**

1. Système (5306) pour un véhicule (102) pour permettre au véhicule (102) de suivre une trajectoire préétablie (3312), comprenant :

des moyens pour exécuter des commandes de véhicule amenant le véhicule (102) à tenter de suivre la trajectoire préétablie (3312) ;
des moyens pour calculer périodiquement des erreurs de suivi de la trajectoire préétablie (3312) ;
des moyens, sensibles aux erreurs calculées, pour régler les commandes de véhicule pour réduire les erreurs calculées, d'où il résulte que le véhicule (102) suit la trajectoire préétablie (3312) avec un degré de précision

élevé ;

**caractérisé en ce que** les moyens agissant en réponse aux erreurs calculées pour régler les commandes du véhicule pour réduire les erreurs calculées, comprennent des moyens pour construire une trajectoire lisse en retour vers la trajectoire préétablie (3312), en utilisant un polynôme du cinquième ordre et des moyens pour compenser les caractéristiques de réponse du véhicule, les caractéristiques de réponse du véhicule comprenant la latence des commandes du véhicule, une réponse lente du système et la dynamique du véhicule incluant l'interaction véhicule/sol, l'angle de glissement et le sous/sur-braquage.

**2.** Système selon la revendication 1, comprenant en outre :

des moyens pour déterminer des postures de référence (3202, 3214, 3220) à des distances unitaires régulières le long d'une trajectoire désirée (3312), les postures étant des paquets d'informations relatifs à un emplacement particulier sur la trajectoire incluant la longitude, la latitude, le cap, la courbure, la vitesse maximum et la distance vers la posture suivante ;
des moyens pour déterminer une posture réelle du véhicule (3210, 3212, 3218) sur la base des postures de référence (3202, 3214, 3220) ;
des moyens pour déterminer une posture attendue du véhicule (3216) à un instant futur correspondant à un intervalle de temps de planification courant sur la base de la posture réelle du véhicule (3210, 3212, 3218) ;
des moyens pour déterminer une posture désirée (3204, 3212, 3218) à la fin d'un intervalle de temps de planification suivant ;
des moyens pour déterminer un angle de braquage (3112) à partir de la posture attendue du véhicule (3216) et de la posture désirée (3212, 3218) ; et
des moyens pour commander le véhicule (102) pour braquer de l'angle de braquage déterminé (3206, 3208).

**3.** Système (5306) pour un véhicule (102) pour permettre au véhicule (102) de suivre une trajectoire préétablie (3312) selon la revendication 1, dans lequel les commandes du véhicule comprennent des aspects de contrôle séparés de braquage et de vitesse, et les moyens pour exécuter les commandes de véhicule amenant le véhicule (102) à suivre la trajectoire préétablie (3312) comprennent :

des moyens (3102, 3104, 3110) pour exécuter les aspects de commande de braquage ; et
des moyens (3106, 3108, 3110) pour exécuter les aspects de commande de vitesse, d'où il résulte que les commandes de braquage et de vitesse du véhicule (102) sont découplées.

**4.** Système (5306) pour un véhicule (102) pour permettre au véhicule (102) de suivre une trajectoire préétablie (3312) selon la revendication 1, dans lequel les moyens agissant en réponse aux erreurs calculées pour régler les commandes du véhicule pour réduire les erreurs calculées comprennent en outre des moyens pour compenser les caractéristiques de détection et de synchronisation d'actionnement du système.

**5.** Système (5306) pour un véhicule (102) pour permettre au véhicule (102) de suivre une trajectoire préétablie (3312) selon la revendication 1, dans lequel les moyens pour régler les commandes du véhicule pour réduire les erreurs calculées comprennent en outre des moyens pour faire varier la distance d'observation vers l'avant (3310) sur la base de la vitesse de déplacement du véhicule (102).

**6.** Système (5306) pour un véhicule (102) pour permettre au véhicule (102) de suivre une trajectoire préétablie (3312) selon la revendication 1, dans lequel les moyens sensibles aux erreurs calculées pour régler les commandes du véhicule pour réduire les erreurs calculées comprennent en outre des moyens pour régler les commandes du véhicule en utilisant un système de commande optimale.

**7.** Procédé (5306) pour un véhicule (102) pour permettre au véhicule (102) de suivre une trajectoire préétablie (3312), comprenant les étapes suivantes :

exécuter des commandes de véhicule amenant le véhicule (102) à tenter de suivre la trajectoire préétablie (3312) ;
calculer périodiquement des erreurs de suivi de la trajectoire préétablie (3312) ;
régler, en réponse aux erreurs calculées, les commandes de véhicule pour réduire les erreurs calculées ;
d'où il résulte que le véhicule (102) suit la trajectoire préétablie (3312) avec un degré de précision élevé ;

**caractérisé en ce que** l'étape de réglage, en réponse aux erreurs calculées, des commandes du véhicule pour réduire les erreurs calculées, comprend les étapes suivantes :

construire une trajectoire lisse en retour vers la trajectoire préétablie (3312) en utilisant un polynôme du cinquième ordre ; et
compenser les caractéristiques de réponse du véhicule, les caractéristiques de réponse du véhicule comprenant la latence des commandes du véhicule, une réponse lente du système et la dynamique de véhicule incluant l'interaction véhicule/sol, l'angle de glissement et le sous/sur-braquage.

**8.** Procédé selon la revendication 7, dans lequel le suivi comprend les étapes suivantes :

déterminer des postures de référence (3202, 3214, 3220) à des distances unitaires régulières le long d'une trajectoire désirée (3312), les postures étant des paquets d'informations relatifs à un emplacement particulier sur la trajectoire incluant la longitude, la latitude, le cap, la courbure, la vitesse maximum et la distance vers la posture suivante ;
déterminer une posture réelle du véhicule (3210, 3212, 3218) sur la base des postures de référence (3202, 3214, 3220) ;
déterminer une posture attendue du véhicule (3216) à un instant futur correspondant à un intervalle de temps de planification courant sur la base de la posture réelle du véhicule (3210, 3212, 3218) ;
déterminer une posture désirée (3204, 3212, 3218) à la fin d'un intervalle de temps de planification suivant ;
déterminer un angle de braquage (3112) à partir de la posture attendue du véhicule (3216) et de la posture désirée (3212, 3218) ;
commander le véhicule (102) pour braquer de l'angle de braquage déterminé (3206, 3208) ; et
répéter les étapes, de l'étape de détermination à l'étape de commande du véhicule.

**9.** Procédé (5306) pour un véhicule (102) pour permettre au véhicule (102) de suivre une trajectoire préétablie (3312) selon la revendication 7, dans lequel les commandes du véhicule comprennent des aspects de contrôle séparés de braquage et de vitesse, et l'étape d'exécution des commandes de véhicule amenant le véhicule (102) à tenter de suivre la trajectoire préétablie (3312) comprend :

exécuter (3102, 3104, 3110) les aspects de commande de braquage ; et
exécuter (3106, 3108, 3110) les aspects de commande de vitesse,
d'où il résulte que les commandes de braquage et de vitesse du véhicule (102) sont découplées.

**10.** Procédé (5306) pour un véhicule (102) pour permettre au véhicule (102) de suivre une trajectoire préétablie (3312) selon la revendication 7, dans lequel l'étape de réglage, en réponse aux erreurs calculées, des commandes du véhicule pour réduire les erreurs calculées comprend en outre l'étape consistant à : compenser les caractéristiques de détection et de synchronisation d'actionnement du procédé (5306).

**11.** Procédé (5306) pour un véhicule (102) pour permettre au véhicule (102) de suivre une trajectoire préétablie (3312) selon la revendication 7, dans lequel l'étape de réglage, en réponse aux erreurs calculées, des commandes du véhicule pour réduire les erreurs calculées, comprend en outre l'étape consistant à faire varier la distance d'observation vers l'avant (3310) sur la base de la vitesse de déplacement du véhicule (102).

**12.** Procédé (5306) pour un véhicule (102) pour permettre au véhicule (102) de suivre une trajectoire préétablie (3312) selon la revendication 7, dans lequel l'étape de réglage en réponse aux erreurs calculées des commandes du véhicule (102) pour réduire les erreurs calculées comprend en outre le réglage de la commande du véhicule (102) en utilisant un procédé de commande optimale.

**13.** Système selon la revendication 1, comprenant en outre :

des moyens (3102) pour planifier un braquage, en fournissant un angle de braquage désiré (3112) sur la base d'une entrée de trajectoire désirée en provenance d'un système de supervision et d'une entrée de position du véhicule détectée (3114) par un système de positionnement (1000) ;
des moyens (3104) pour commander le braquage du véhicule (102) en fournissant des servocommandes de braquage à un système de braquage (3104) du véhicule, en réponse à la sortie (3112) des moyens pour planifier le braquage (3102) et à une réaction (3116) en provenance du système de braquage (3110) du véhicule ;

des moyens pour réguler la vitesse (3106) en fournissant un signal de vitesse désiré sur la base d'une entrée de vitesse désirée en provenance du système de supervision ; et
des moyens pour commander la vitesse (3108) du véhicule (102) en fournissant des commandes de vitesse à un système de vitesse du véhicule (3110), en réponse à la sortie des moyens pour régler la vitesse (3110), d'où il résulte qu'une structure de contrôle de suivi de trajectoire (3100) est obtenue.

**14.** Procédé selon la revendication 7, comprenant en outre les étapes suivantes :

planifier (3102) un braquage, en fournissant un angle de braquage désiré (3112) sur la base d'une entrée de trajectoire désirée en provenance d'un système de supervision et d'une entrée de position du véhicule détectée (3114) par un système de positionnement (1000) ;
commander (3104) le braquage du véhicule (102) en fournissant des servocommandes de braquage à un système de braquage (3104) du véhicule (102), en réponse à la sortie (3112) des moyens pour planifier le braquage (3102) et à une réaction (3116) en provenance du système de braquage (3110) du véhicule (102) ;
réguler la vitesse (3106) en fournissant un signal de vitesse désiré (3130) sur la base d'une entrée de vitesse désirée en provenance du système de supervision ; et
commander la vitesse (3108) du véhicule (102) en fournissant des commandes de vitesse à un système de vitesse du véhicule (3110), en réponse à la sortie de l'étape de réglage de la vitesse (3106) et de la réaction (3118) du système de vitesse du véhicule (3110), d'où il résulte qu'un procédé de contrôle de suivi de trajectoire (3100) est obtenu.

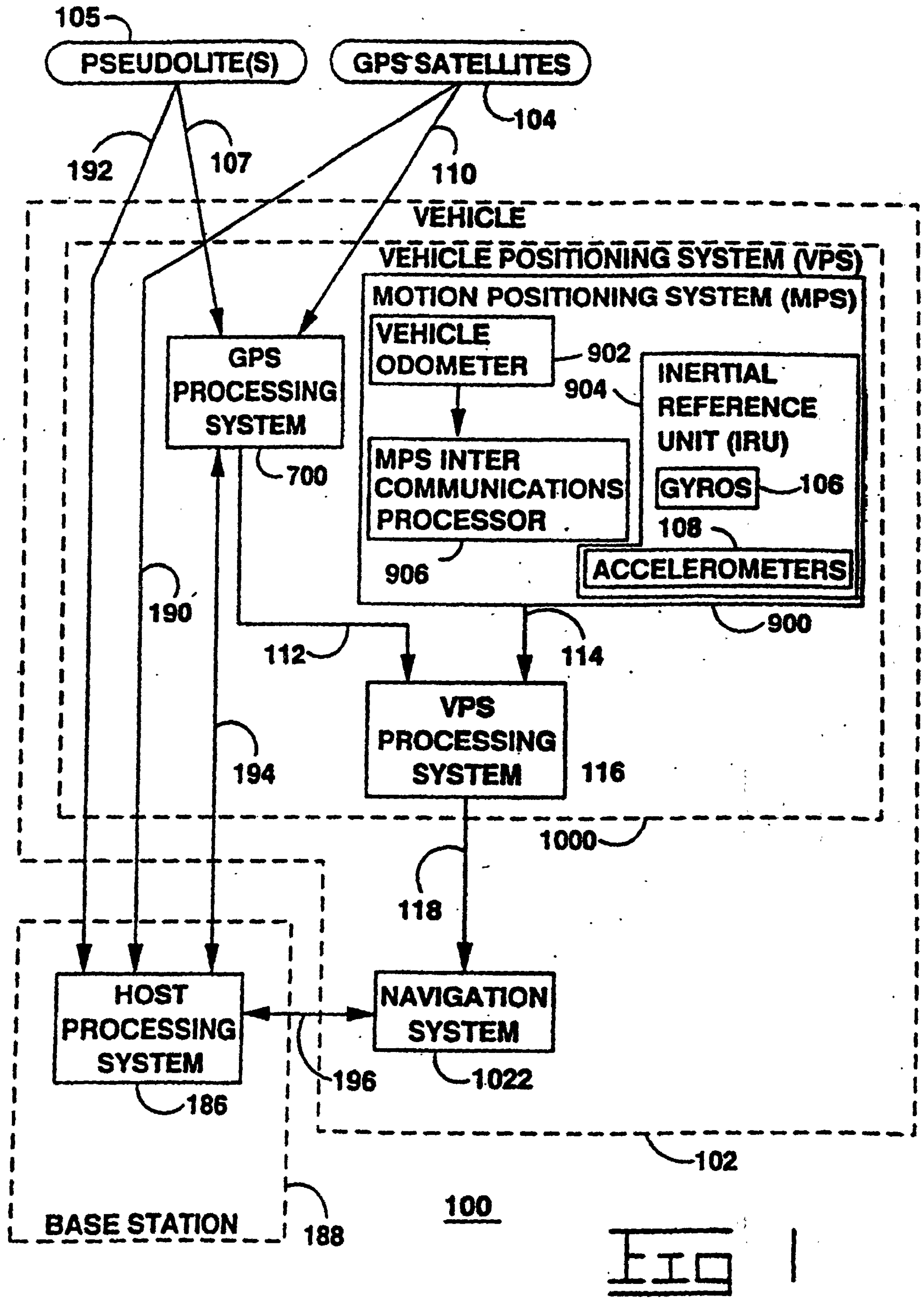
105
PSEUDOLITE(S)
GPS SATELLITES
104
192
107
110
VEHICLE
VEHICLE POSITIONING SYSTEM (VPS)
MOTION POSITIONING SYSTEM (MPS)
VEHICLE ODOMETER
902
904
INERTIAL REFERENCE UNIT (IRU)
GPS PROCESSING SYSTEM
700
MPS INTER COMMUNICATIONS PROCESSOR
GYROS
106
108
906
ACCELEROMETERS
190
900
112
114
VPS PROCESSING SYSTEM
194
116
1000
118
HOST PROCESSING SYSTEM
NAVIGATION SYSTEM
196
1022
186
102
BASE STATION
188
100

Fig 1

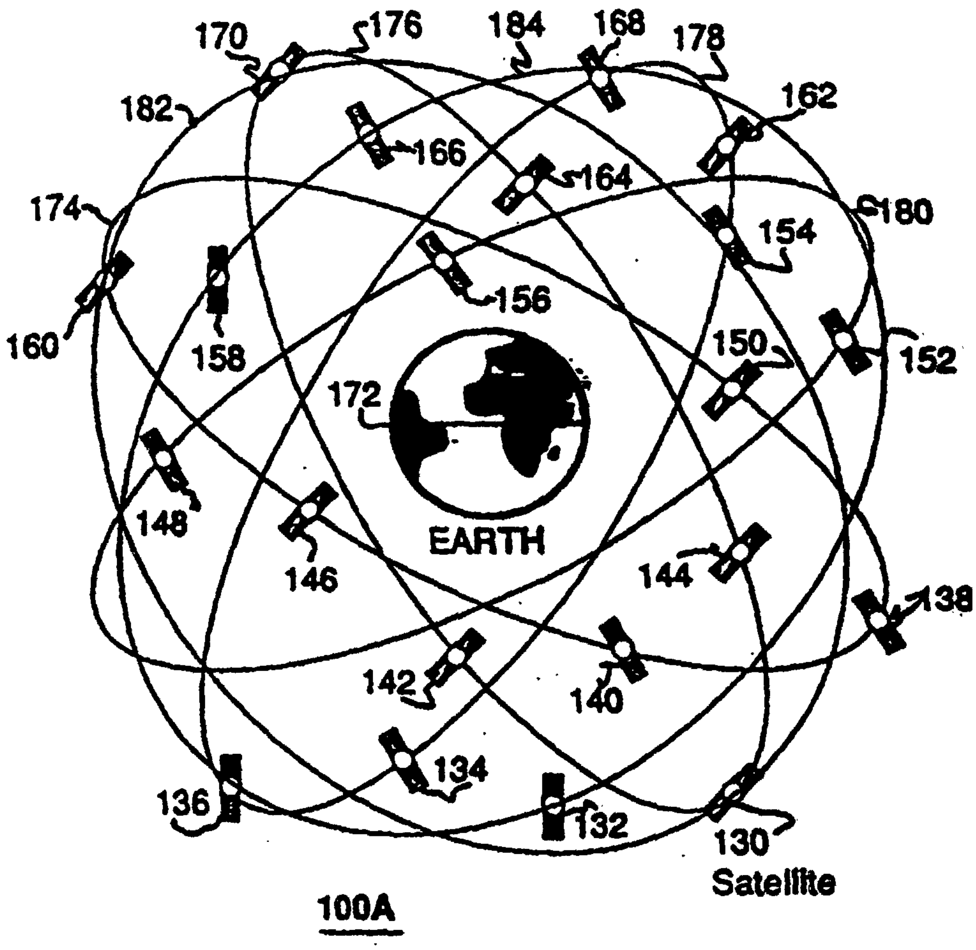
170
176
184
168
178
162
182
166
164
174
180
154
156
160
158
150
152
172
148
EARTH
146
144
138
142
140
134
136
132
130
Satellite
100A

FIG 1A

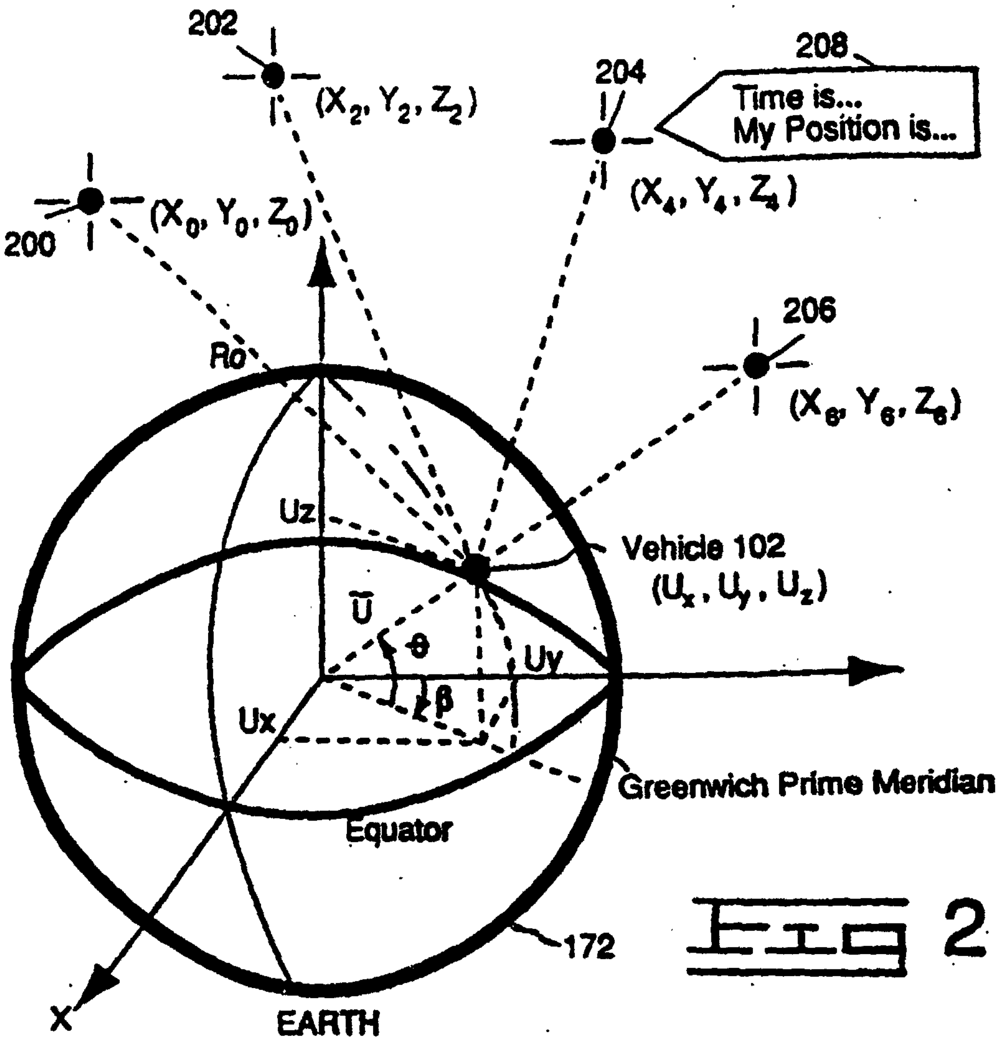


Fig 2

$$(X_0 - U_x)^2 + (Y_0 - U_y)^2 + (Z_0 - U_z)^2 = (R_0 - C_b)^2$$

$$(X_2 - U_x)^2 + (Y_2 - U_y)^2 + (Z_2 - U_z)^2 = (R_2 - C_b)^2$$

$$(X_4 - U_x)^2 + (Y_4 - U_y)^2 + (Z_4 - U_z)^2 = (R_4 - C_b)^2$$

$$(X_6 - U_x)^2 + (Y_6 - U_y)^2 + (Z_6 - U_z)^2 = (R_6 - C_b)^2$$

Vehicle 102 Latitude $= \theta = COS^{-1} \dfrac{\sqrt{(U_x^2 + U_y)^2}}{|\bar{u}|}$

Vehicle 102 Longitude $= \beta = TAN^{-1} \; U_x/U_y$

212

# Autonomous Work Site

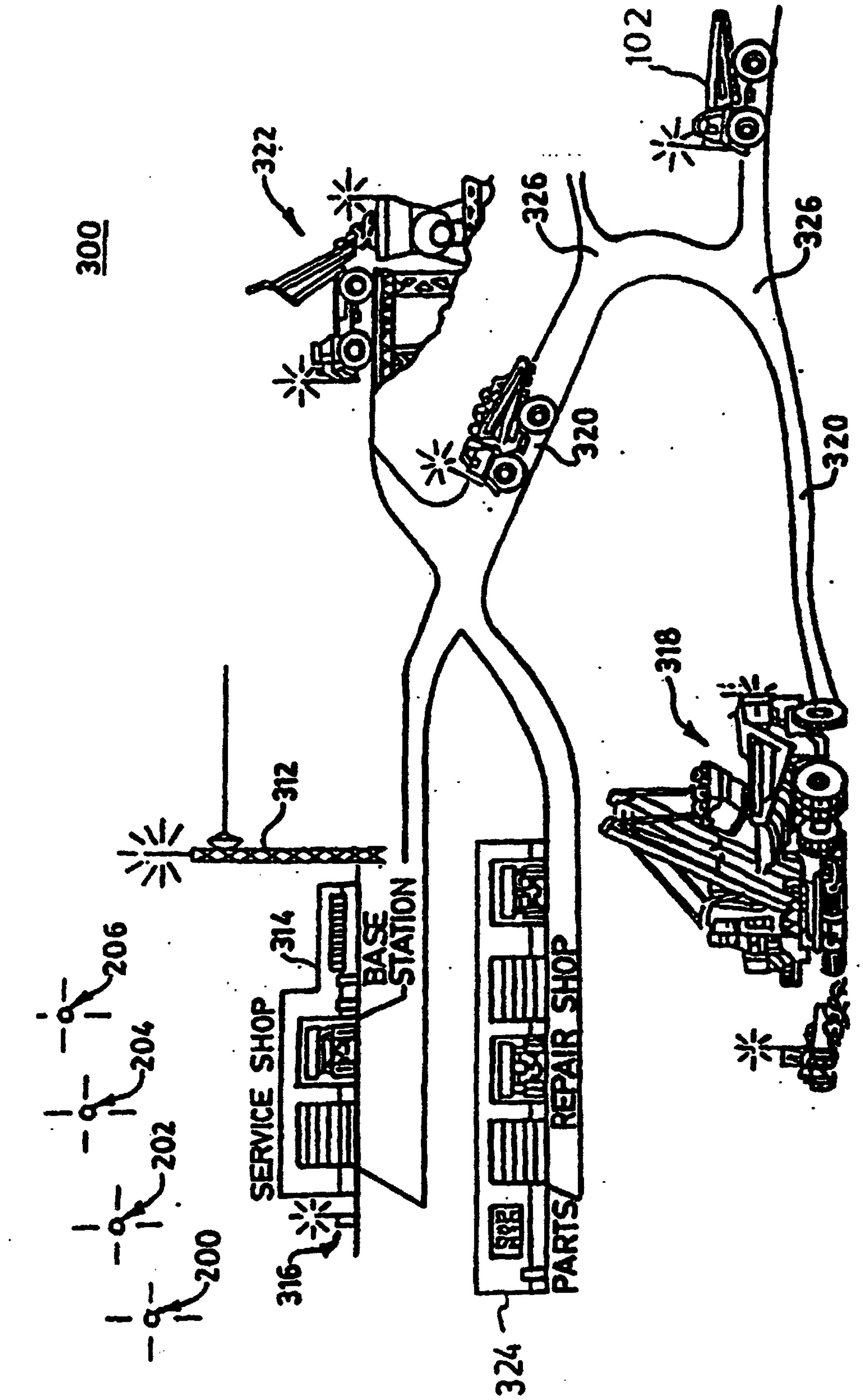


FIG 3

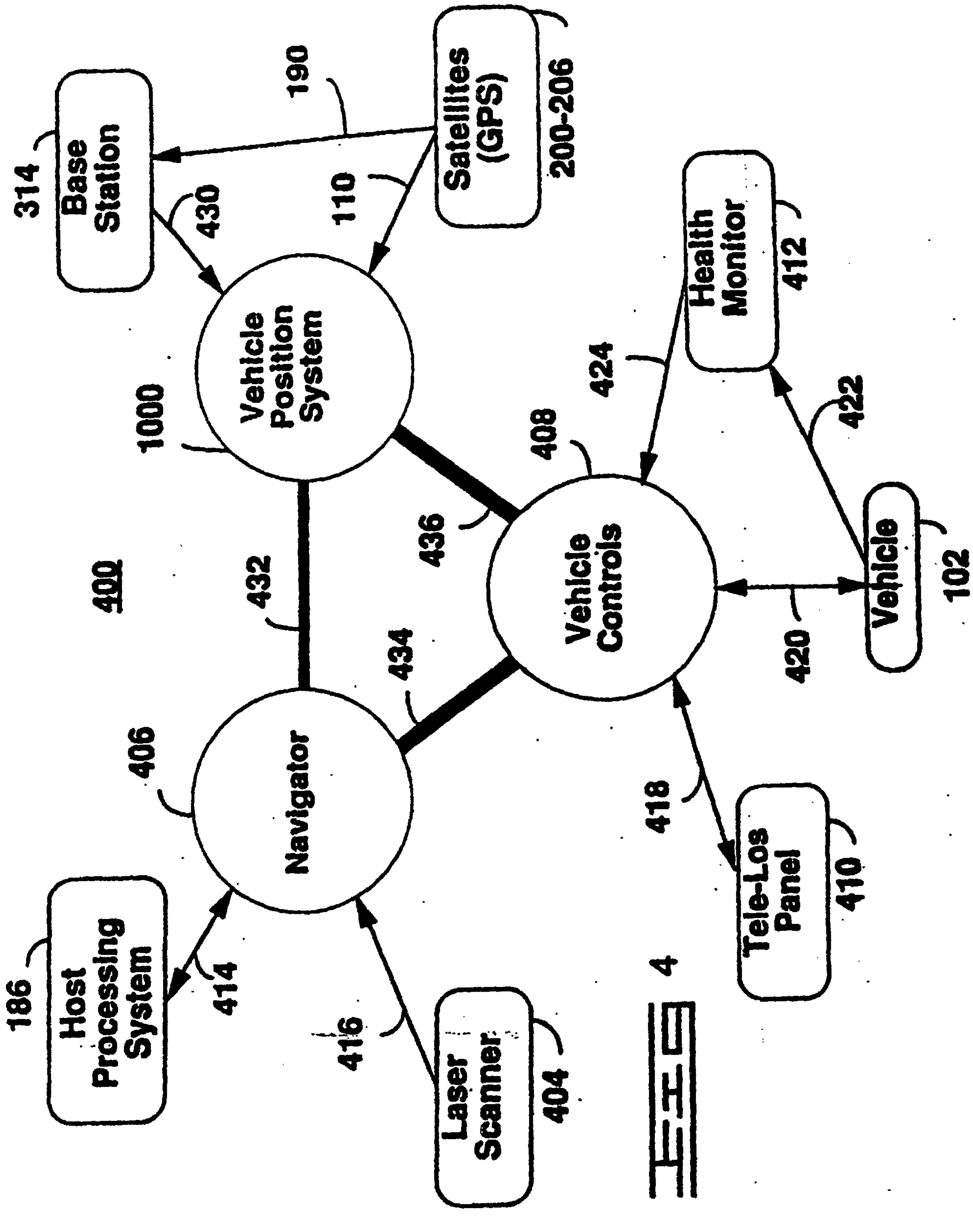
400
Vehicle Position System
1000
Base Station
314
430
Satellites (GPS)
200-206
190
110
Navigator
406
Vehicle Controls
408
432
434
436
Host Processing System
186
414
Laser Scanner
404
416
Tele-Los Panel
410
418
Health Monitor
412
424
Vehicle
102
420
422
FIG. 4

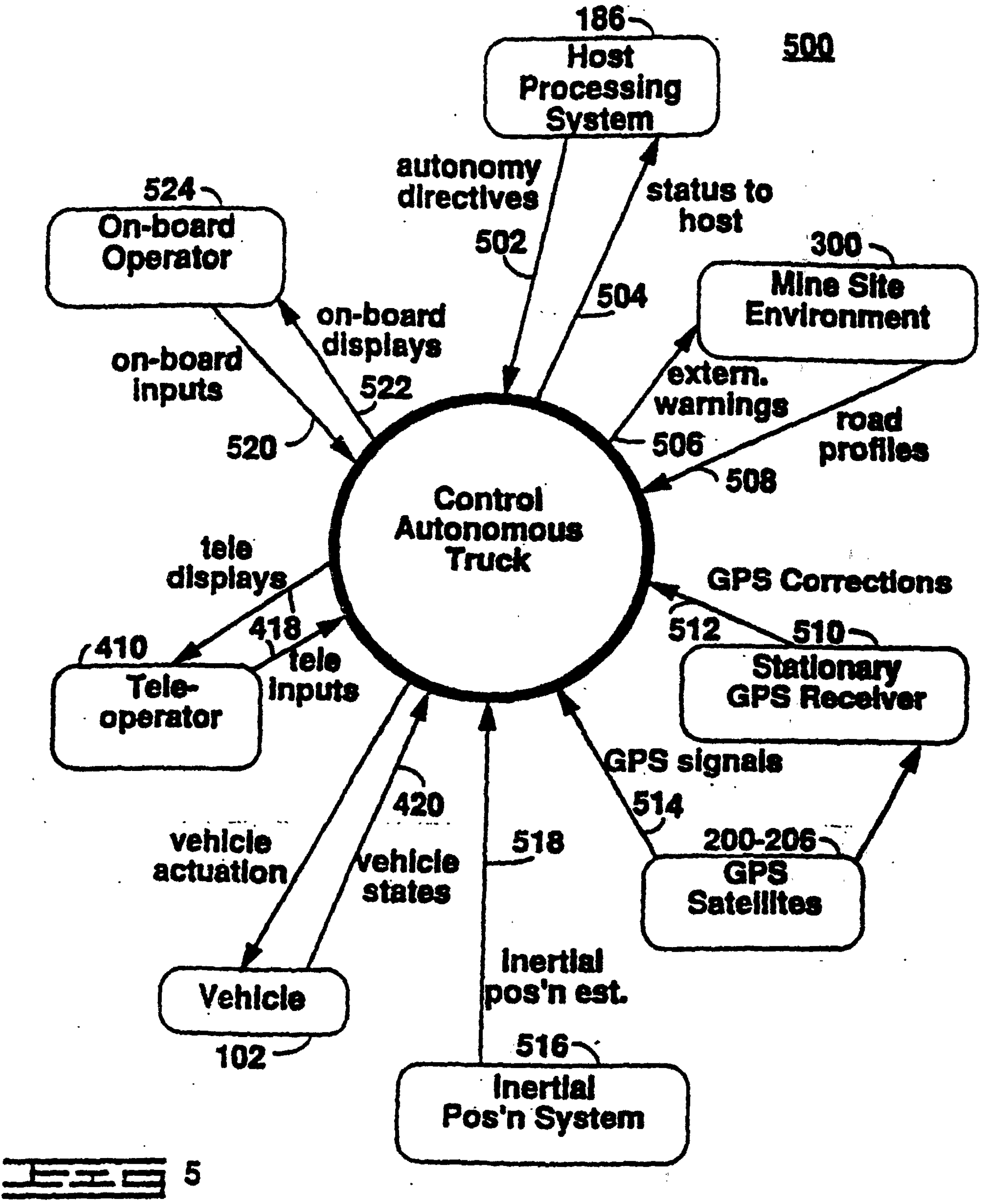
500
186
Host Processing System
autonomy directives
502
status to host
504
524
On-board Operator
on-board displays
522
on-board inputs
520
300
Mine Site Environment
extern. warnings
506
road profiles
508
Control Autonomous Truck
tele displays
418
tele inputs
410
Tele-operator
GPS Corrections
512
510
Stationary GPS Receiver
GPS signals
514
200-206
GPS Satellites
420
vehicle actuation
vehicle states
518
Vehicle
102
inertial pos'n est.
516
Inertial Pos'n System

FIG 5

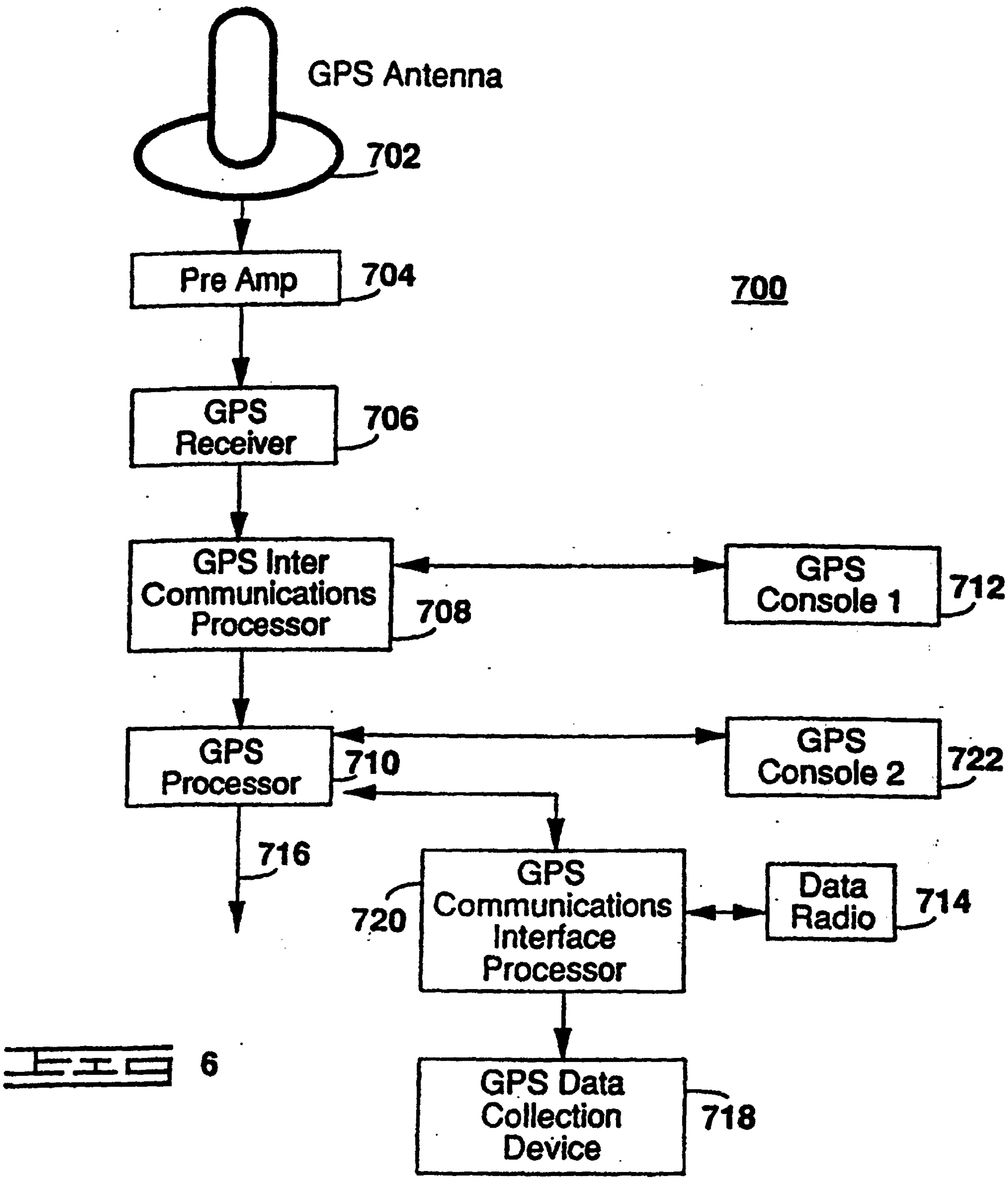
GPS Antenna
702
Pre Amp
704
700
GPS Receiver
706
GPS Inter Communications Processor
708
GPS Console 1
712
GPS Processor
710
GPS Console 2
722
716
GPS Communications Interface Processor
720
Data Radio
714
GPS Data Collection Device
718

FIG 6

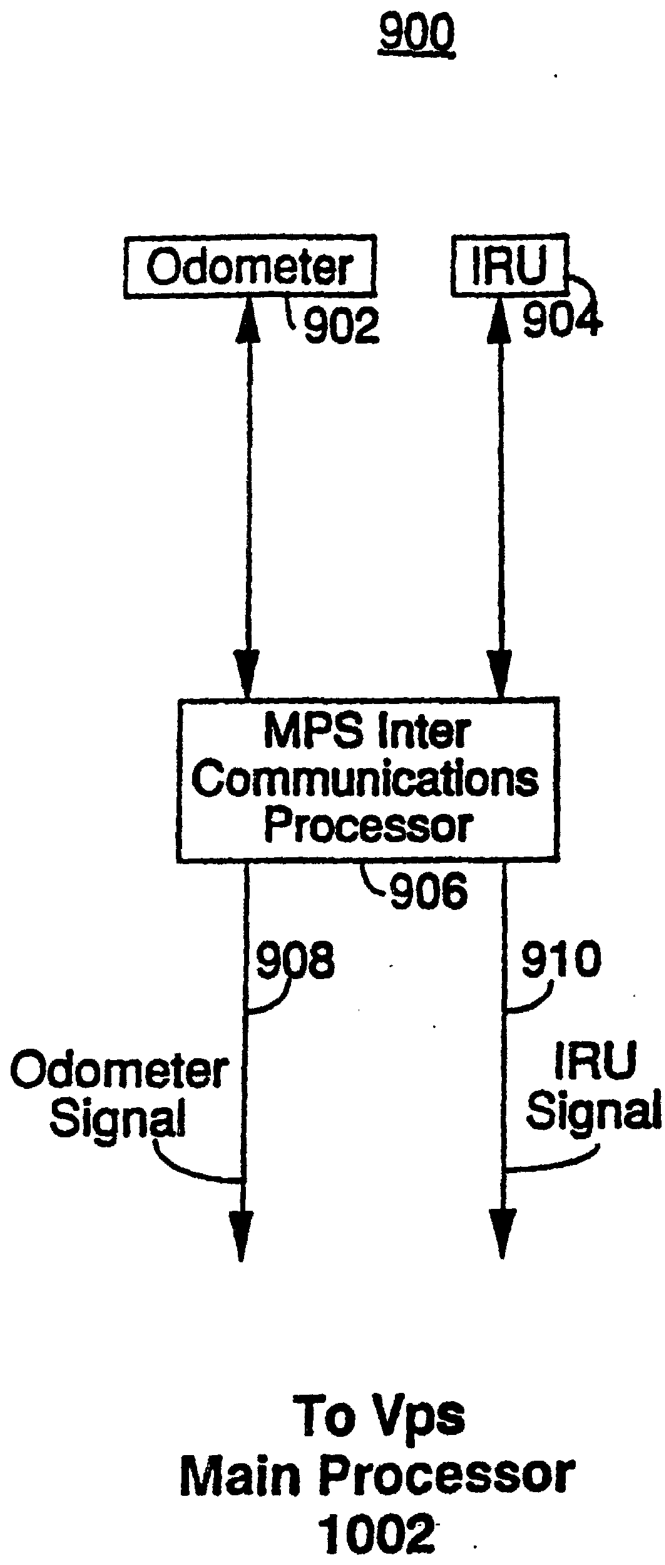
900
Odometer
902
IRU
904
MPS Inter Communications Processor
906
908
910
Odometer Signal
IRU Signal
To Vps Main Processor 1002

FIG 7

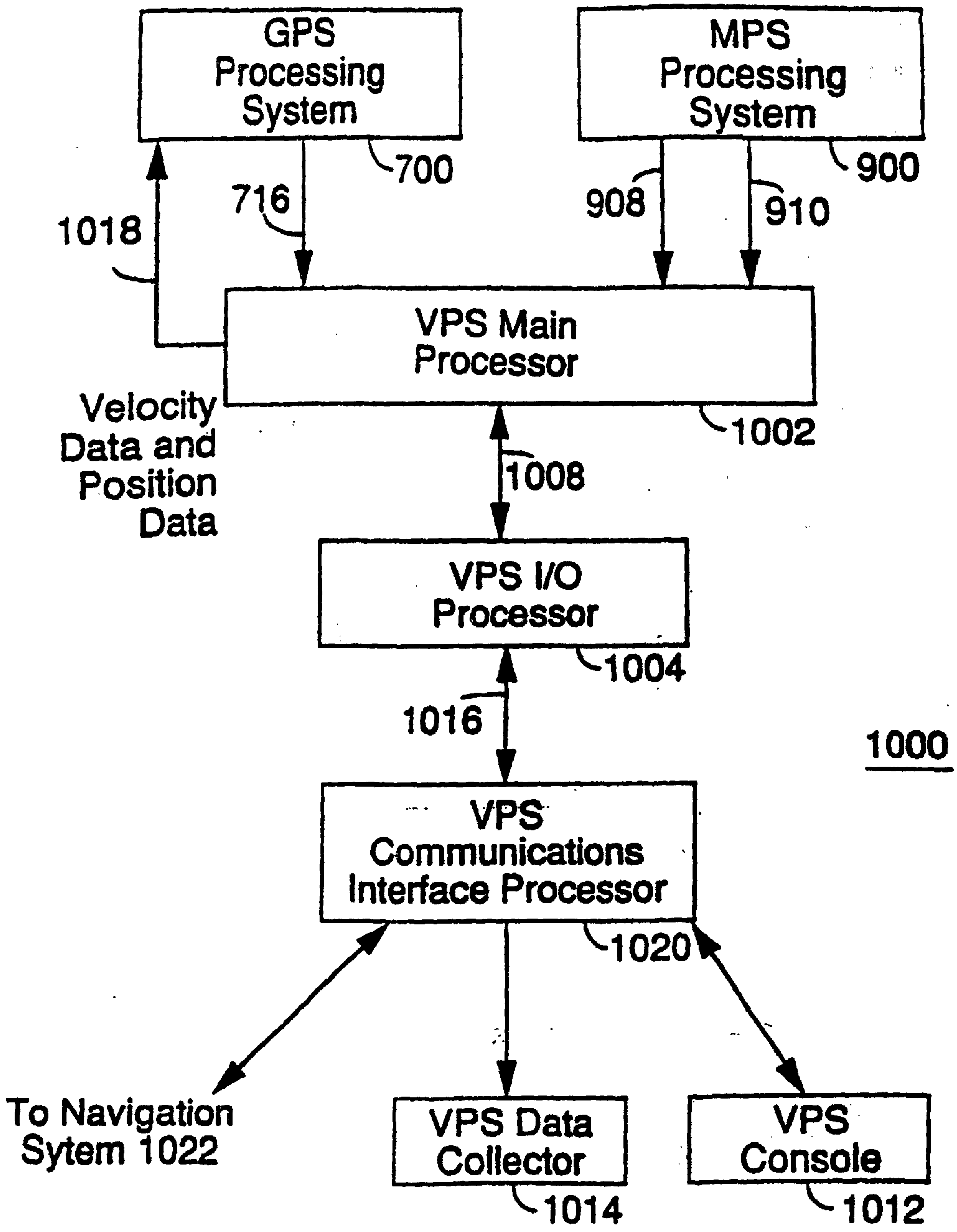
GPS Processing System
700
716
1018
MPS Processing System
900
908
910
VPS Main Processor
1002
Velocity Data and Position Data
1008
VPS I/O Processor
1004
1016
1000
VPS Communications Interface Processor
1020
To Navigation Sytem 1022
VPS Data Collector
1014
VPS Console
1012

FIG 8

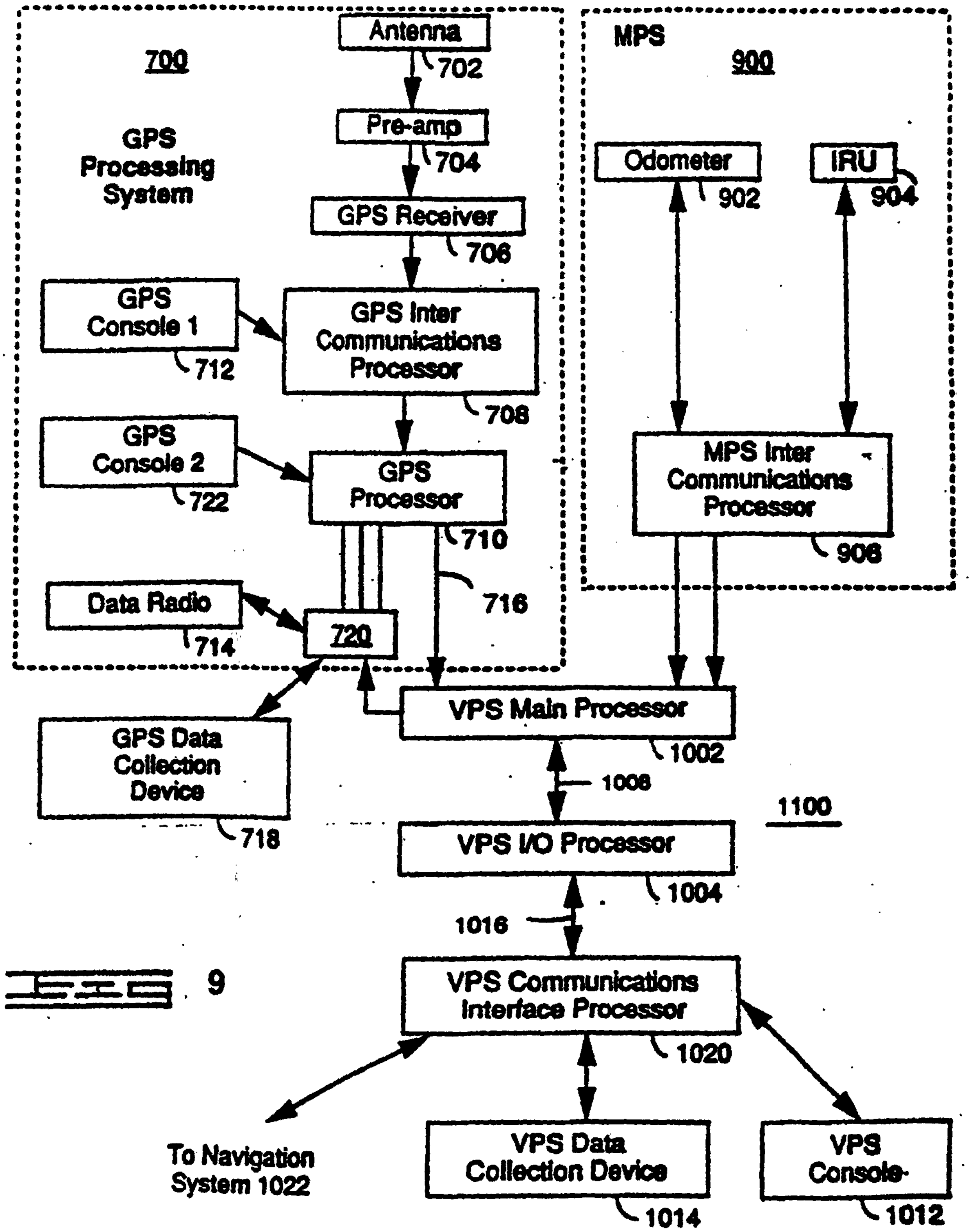
700
GPS Processing System
Antenna
702
Pre-amp
704
GPS Receiver
706
GPS Console 1
712
GPS Inter Communications Processor
708
GPS Console 2
722
GPS Processor
710
Data Radio
714
720
716
MPS
900
Odometer
902
IRU
904
MPS Inter Communications Processor
906
GPS Data Collection Device
718
VPS Main Processor
1002
1008
1100
VPS I/O Processor
1004
1016
VPS Communications Interface Processor
1020
To Navigation System 1022
VPS Data Collection Device
1014
VPS Console
1012

FIG. 9

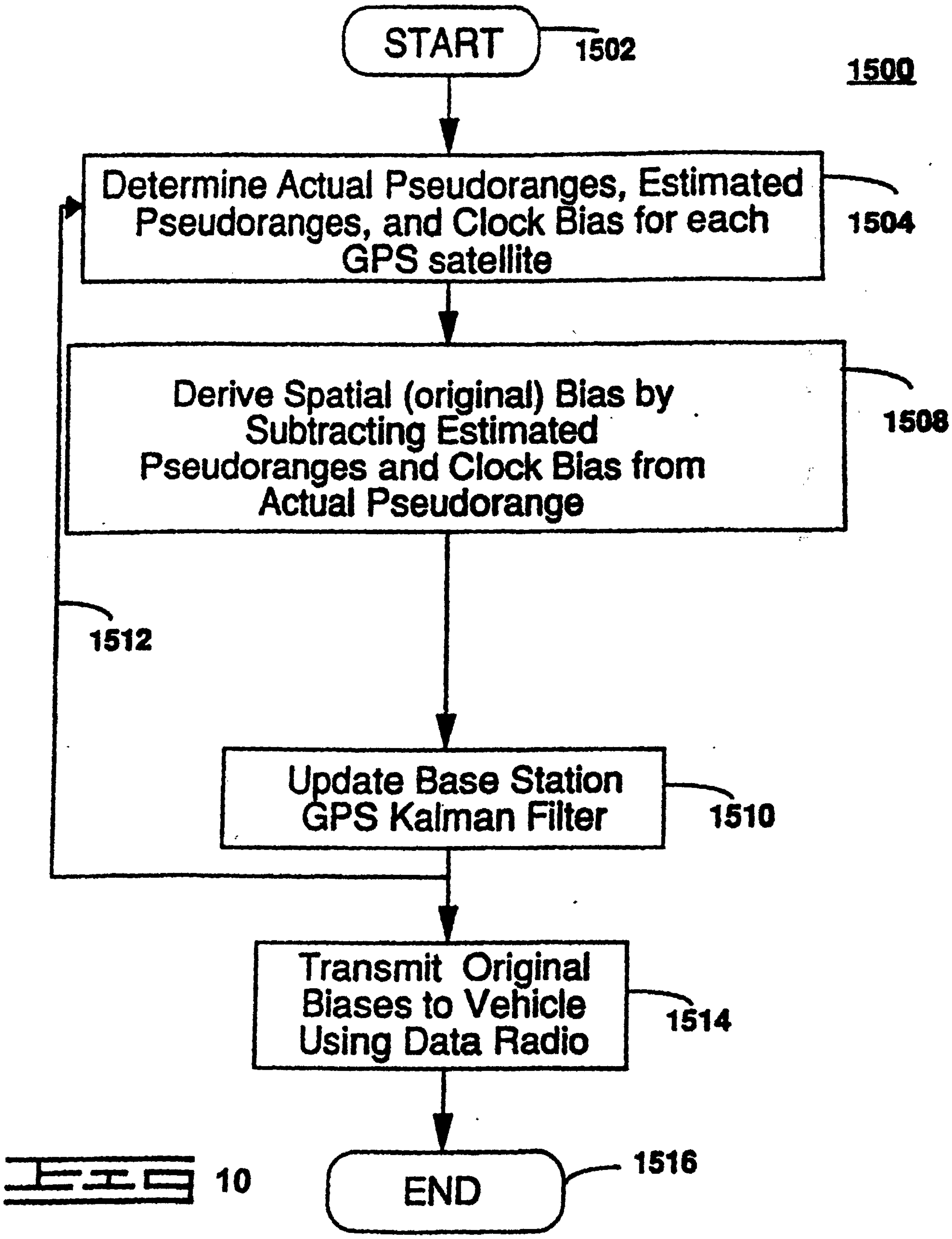
START
1502
1500
Determine Actual Pseudoranges, Estimated Pseudoranges, and Clock Bias for each GPS satellite
1504
Derive Spatial (original) Bias by Subtracting Estimated Pseudoranges and Clock Bias from Actual Pseudorange
1508
1512
Update Base Station GPS Kalman Filter
1510
Transmit Original Biases to Vehicle Using Data Radio
1514
END
1516

FIG 10

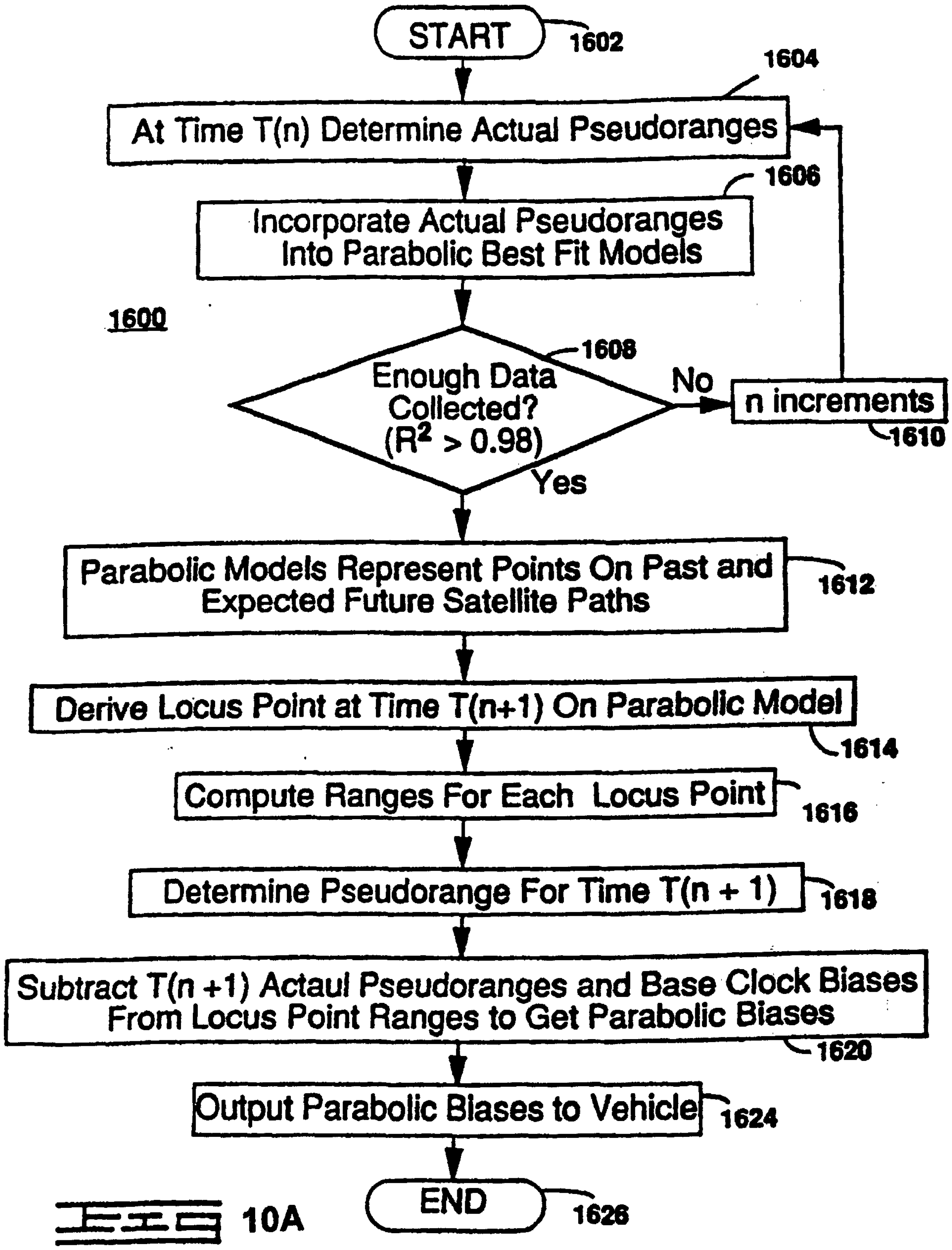
START
1602
1604
At Time T(n) Determine Actual Pseudoranges
1606
Incorporate Actual Pseudoranges Into Parabolic Best Fit Models
1600
1608
Enough Data Collected? ($R^2$ > 0.98)
No
n increments
1610
Yes
Parabolic Models Represent Points On Past and Expected Future Satellite Paths
1612
Derive Locus Point at Time T(n+1) On Parabolic Model
1614
Compute Ranges For Each Locus Point
1616
Determine Pseudorange For Time T(n + 1)
1618
Subtract T(n +1) Actaul Pseudoranges and Base Clock Biases From Locus Point Ranges to Get Parabolic Biases
1620
Output Parabolic Biases to Vehicle
1624
END
1626

FIG 10A

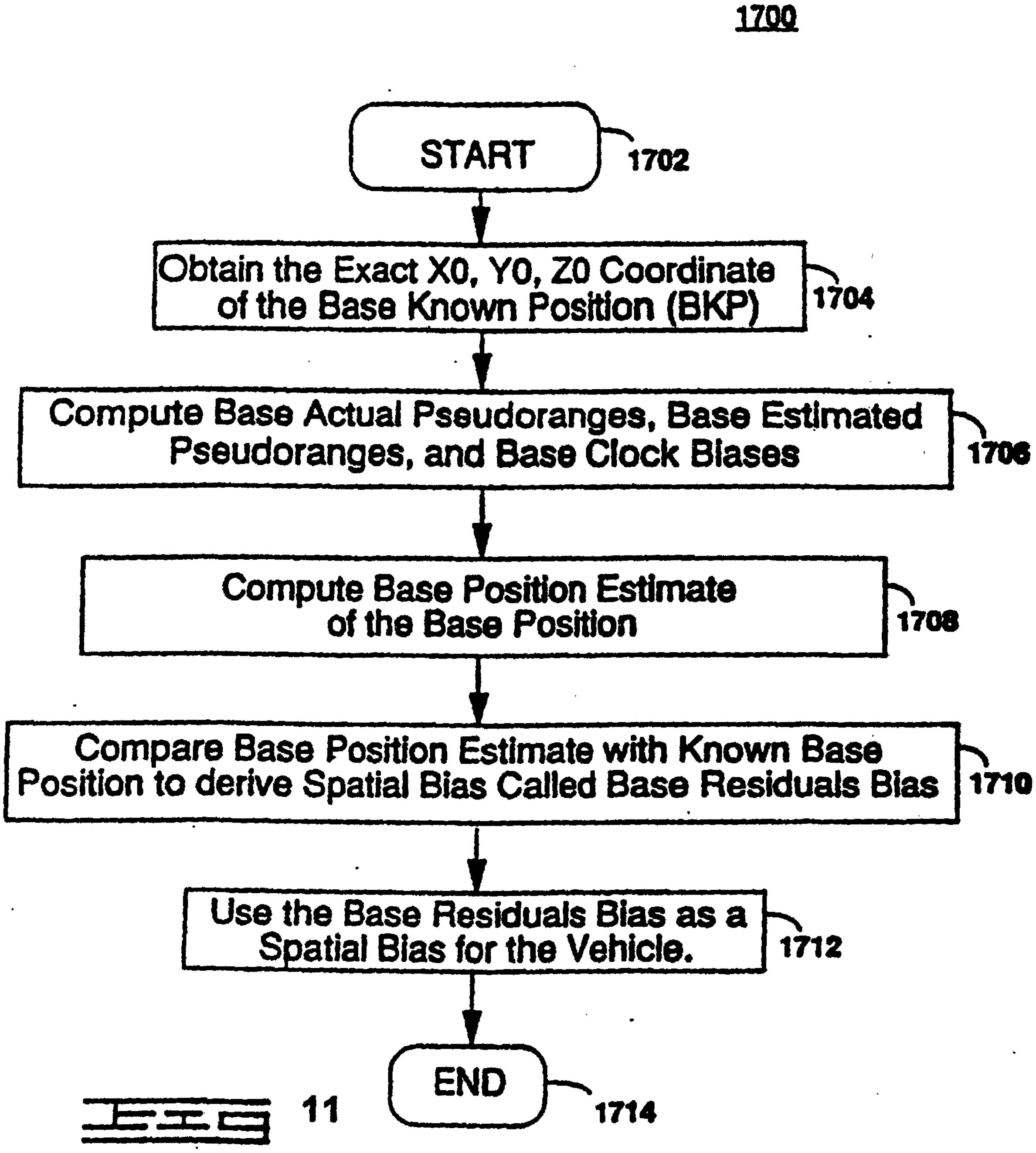
1700
START
1702
Obtain the Exact X0, Y0, Z0 Coordinate of the Base Known Position (BKP)
1704
Compute Base Actual Pseudoranges, Base Estimated Pseudoranges, and Base Clock Biases
1706
Compute Base Position Estimate of the Base Position
1708
Compare Base Position Estimate with Known Base Position to derive Spatial Bias Called Base Residuals Bias
1710
Use the Base Residuals Bias as a Spatial Bias for the Vehicle.
1712
END
1714

FIG 11

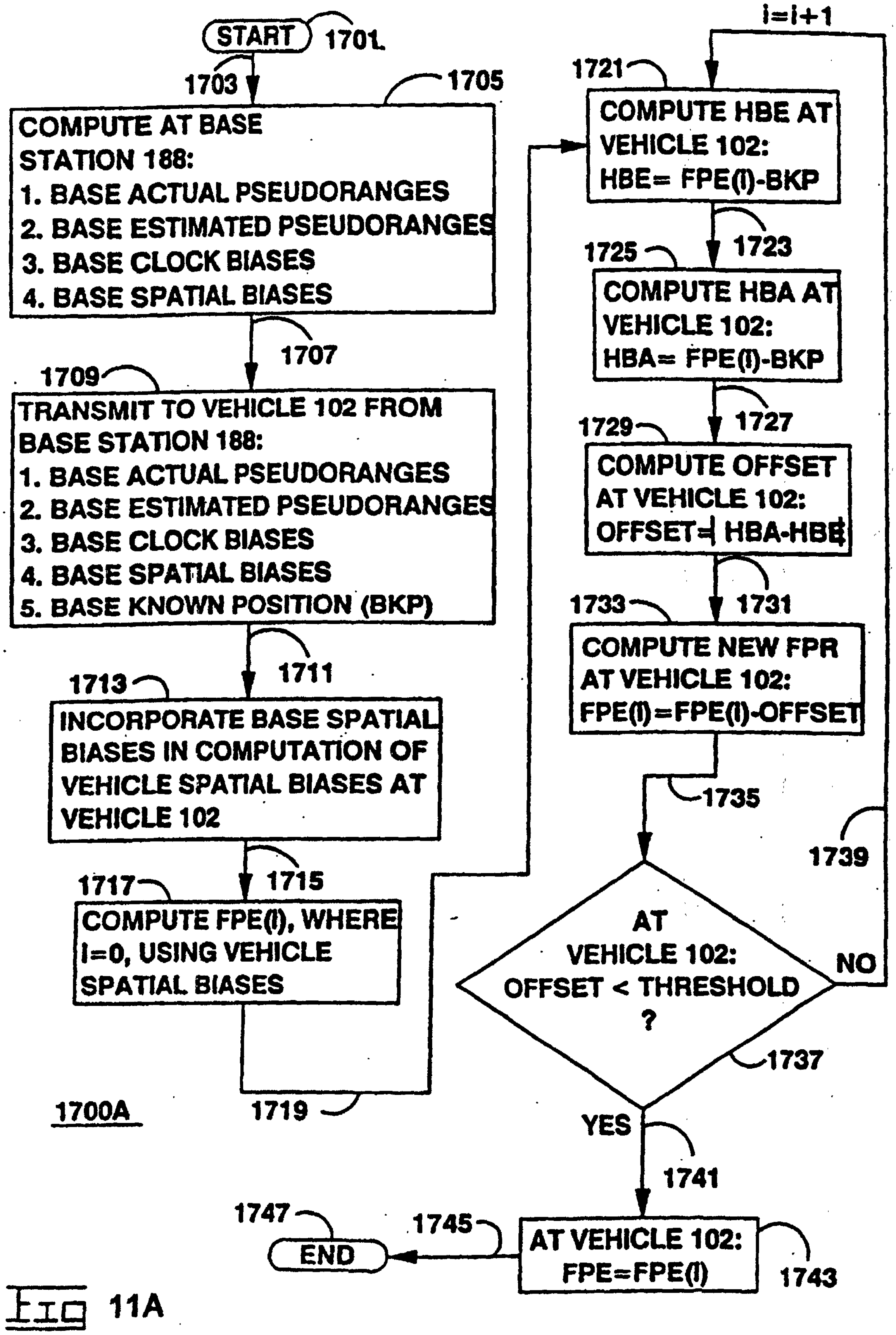
START
1701
1703
1705
COMPUTE AT BASE STATION 188:
1. BASE ACTUAL PSEUDORANGES
2. BASE ESTIMATED PSEUDORANGES
3. BASE CLOCK BIASES
4. BASE SPATIAL BIASES
1707
1709
TRANSMIT TO VEHICLE 102 FROM BASE STATION 188:
1. BASE ACTUAL PSEUDORANGES
2. BASE ESTIMATED PSEUDORANGES
3. BASE CLOCK BIASES
4. BASE SPATIAL BIASES
5. BASE KNOWN POSITION (BKP)
1711
1713
INCORPORATE BASE SPATIAL BIASES IN COMPUTATION OF VEHICLE SPATIAL BIASES AT VEHICLE 102
1715
1717
COMPUTE FPE(I), WHERE I=0, USING VEHICLE SPATIAL BIASES
1719
1700A
I=I+1
1721
COMPUTE HBE AT VEHICLE 102: HBE= FPE(I)-BKP
1723
1725
COMPUTE HBA AT VEHICLE 102: HBA= FPE(I)-BKP
1727
1729
COMPUTE OFFSET AT VEHICLE 102: OFFSET=| HBA-HBE|
1731
1733
COMPUTE NEW FPR AT VEHICLE 102: FPE(I)=FPE(I)-OFFSET
1735
1739
AT VEHICLE 102: OFFSET < THRESHOLD ?
NO
1737
YES
1741
1747
1745
END
AT VEHICLE 102: FPE=FPE(I)
1743

FIG 11A

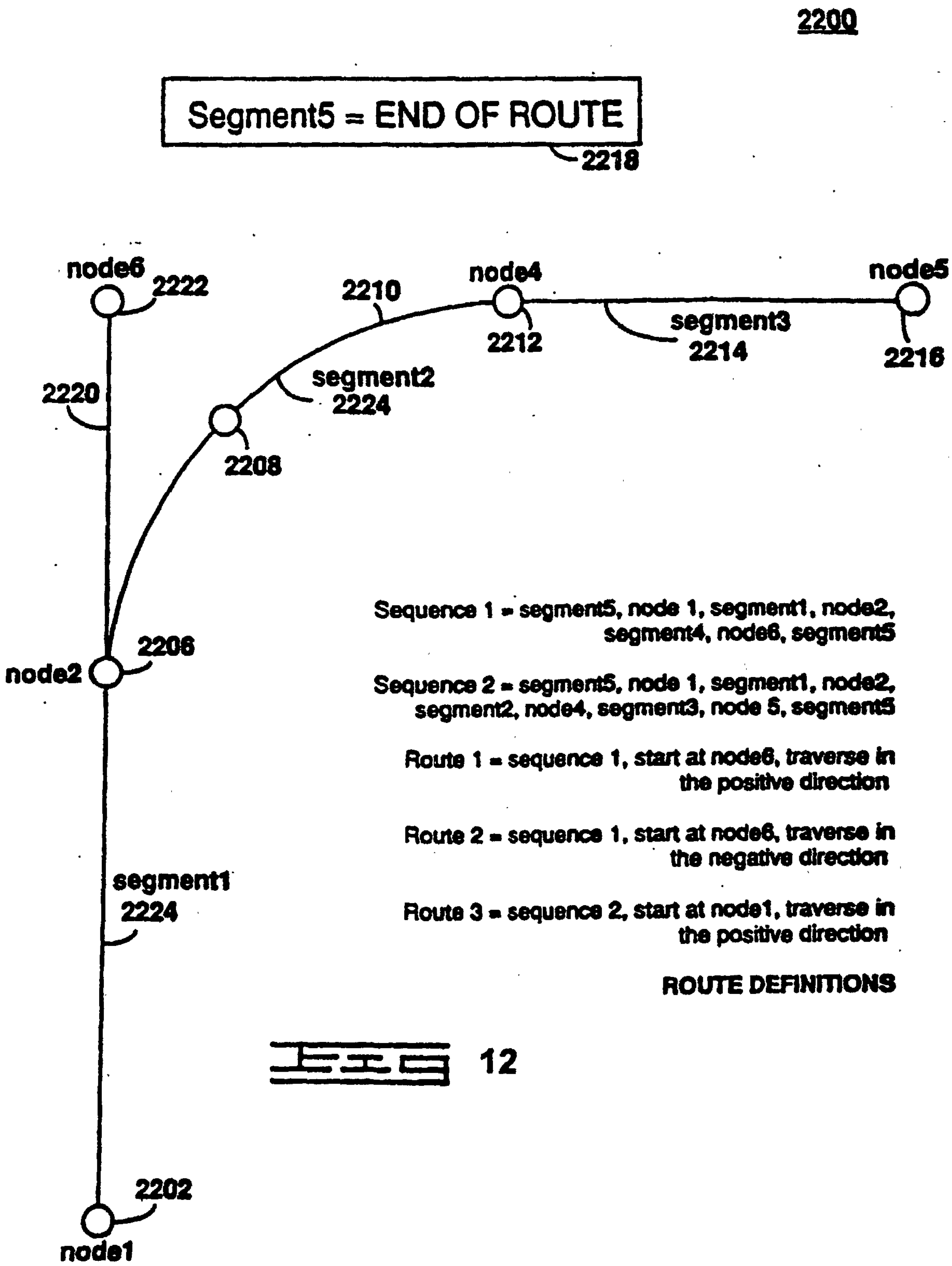
2200
Segment5 = END OF ROUTE
2218
node6
2222
2210
node4
node5
2212
segment3
2214
2216
2220
segment2
2224
2208
Sequence 1 = segment5, node 1, segment1, node2, segment4, node6, segment5
2206
node2
Sequence 2 = segment5, node 1, segment1, node2, segment2, node4, segment3, node 5, segment5
Route 1 = sequence 1, start at node6, traverse in the positive direction
Route 2 = sequence 1, start at node6, traverse in the negative direction
segment1
2224
Route 3 = sequence 2, start at node1, traverse in the positive direction
ROUTE DEFINITIONS
2202
node1

FIG. 12

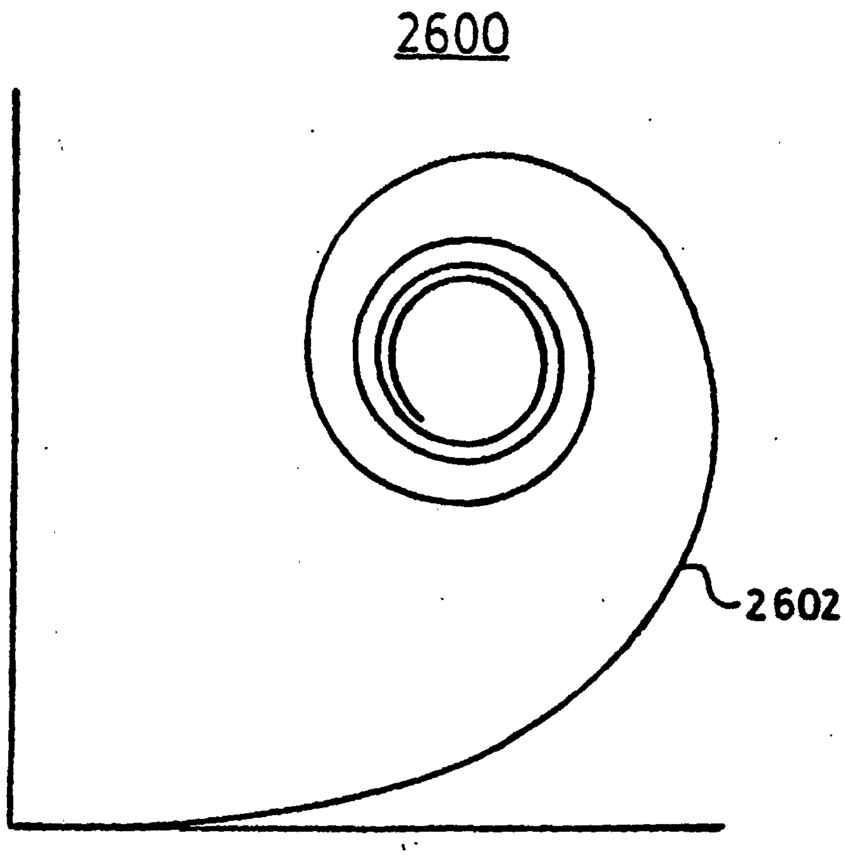


FIG 13

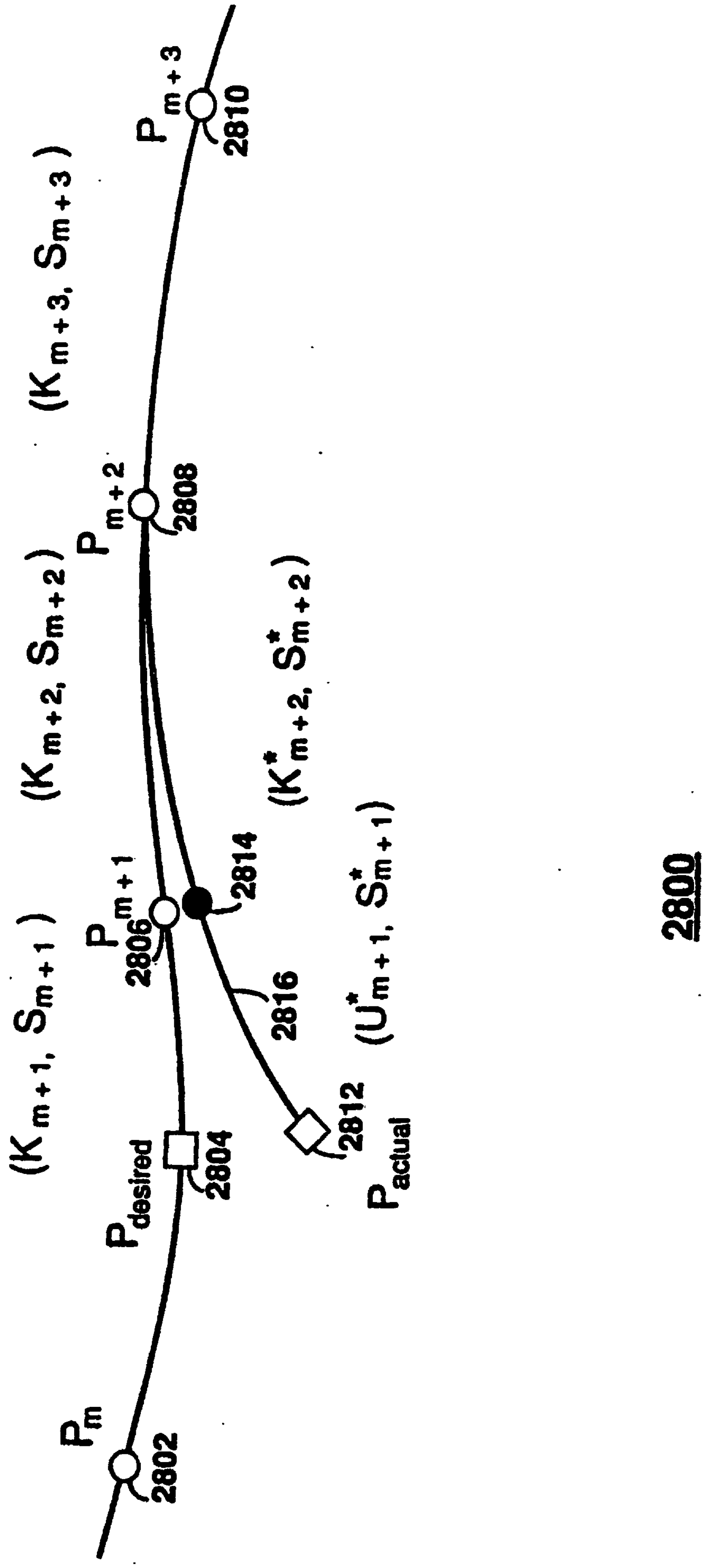

$P_m$
2802
$P_{desired}$
2804
$(K_{m+1}, S_{m+1})$
$P_{m+1}$
2806
2814
2816
2812
$P_{actual}$
$(U^*_{m+1}, S^*_{m+1})$
$(K_{m+2}, S_{m+2})$
$(K^*_{m+2}, S^*_{m+2})$
$P_{m+2}$
2808
$(K_{m+3}, S_{m+3})$
$P_{m+3}$
2810
2800


FIG 14

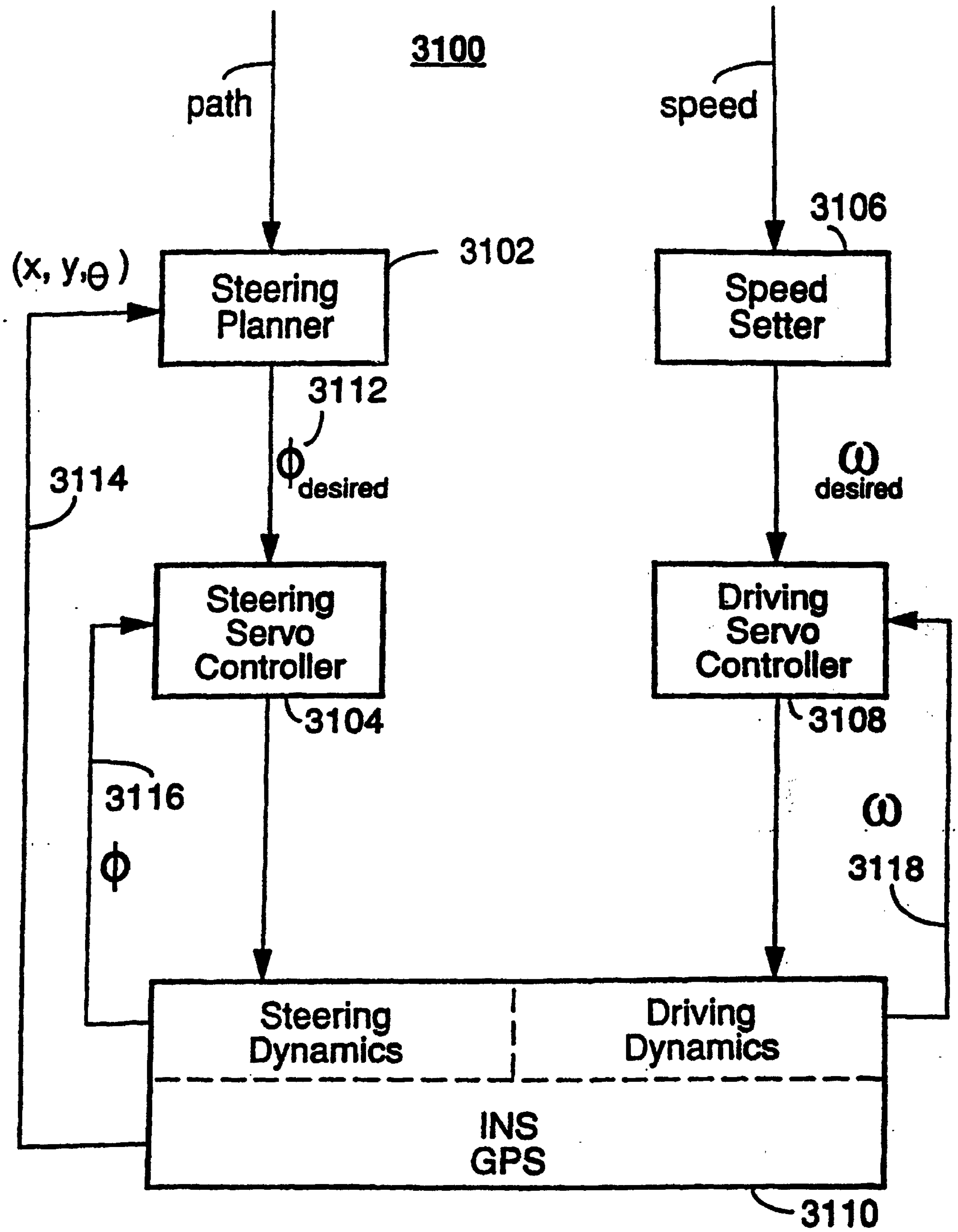
3100
path
speed
3106
3102
(x, y,θ )
Steering Planner
Speed Setter
3112
φ desired
ω desired
3114
Steering Servo Controller
Driving Servo Controller
3104
3108
3116
φ
ω
3118
Steering Dynamics
Driving Dynamics
INS GPS
3110

FIG 15

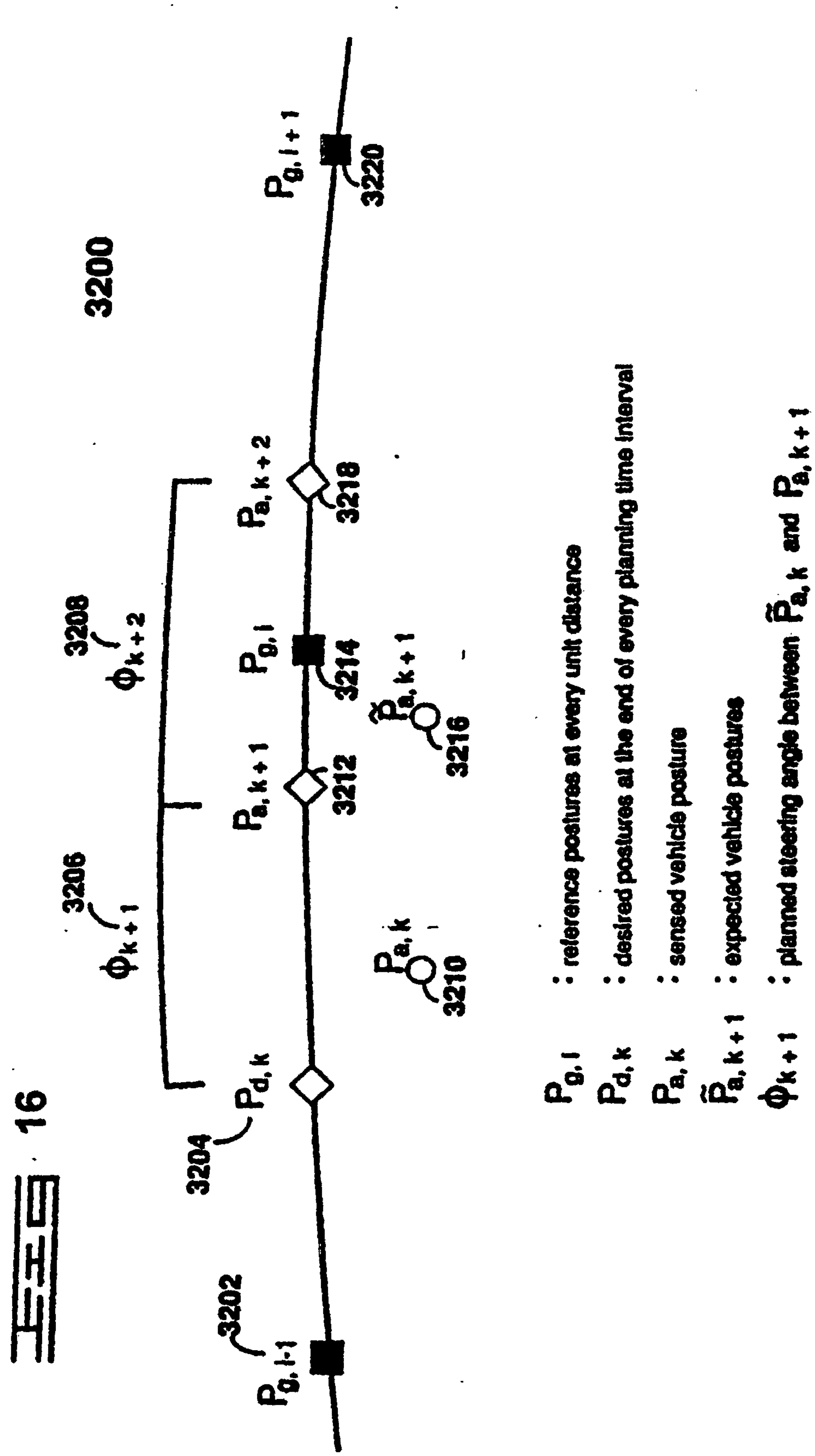
FIG. 16
3200
3202
3204
3206
3208
3210
3212
3214
3216
3218
3220
$P_{g,l-1}$
$P_{d,k}$
$\Phi_{k+1}$
$\Phi_{k+2}$
$P_{a,k}$
$P_{a,k+1}$
$P_{g,l}$
$\tilde{P}_{a,k+1}$
$P_{a,k+2}$
$P_{g,l+1}$
$P_{g,l}$ : reference postures at every unit distance
$P_{d,k}$ : desired postures at the end of every planning time interval
$P_{a,k}$ : sensed vehicle posture
$\tilde{P}_{a,k+1}$ : expected vehicle postures
$\Phi_{k+1}$ : planned steering angle between $\tilde{P}_{a,k}$ and $P_{a,k+1}$

FIG 17

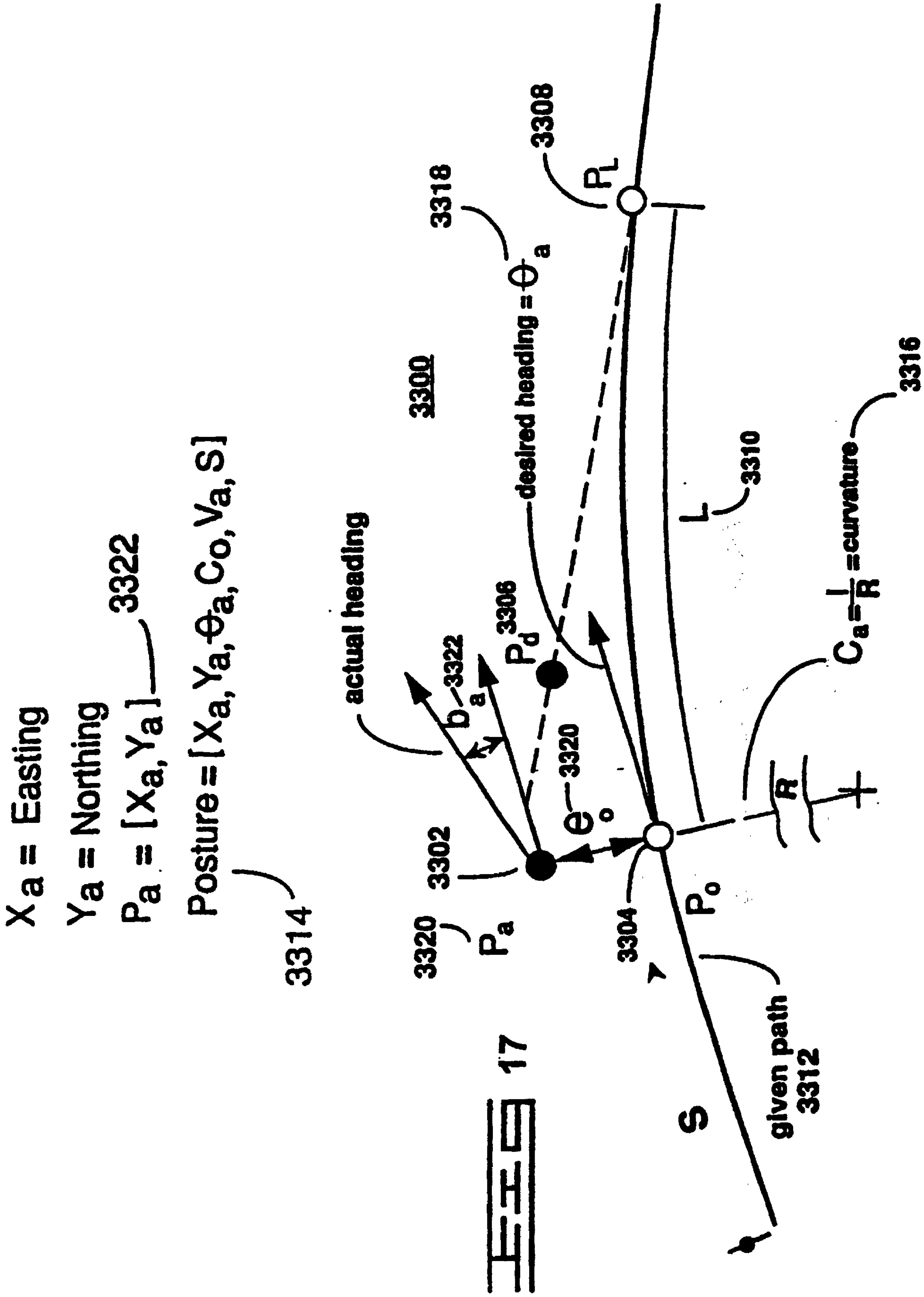

Xa = Easting
Ya = Northing
Pa = [Xa, Ya]
3322
Posture = [Xa, Ya, Φa, Co, Va, S]
3314
3300
actual heading
3322
ba
3306
Pd
desired heading = Φa
3318
3308
PL
L
3310
Ca = 1/R = curvature
3316
R
3320
eo
3302
3320
Pa
3304
Po
S
given path
3312

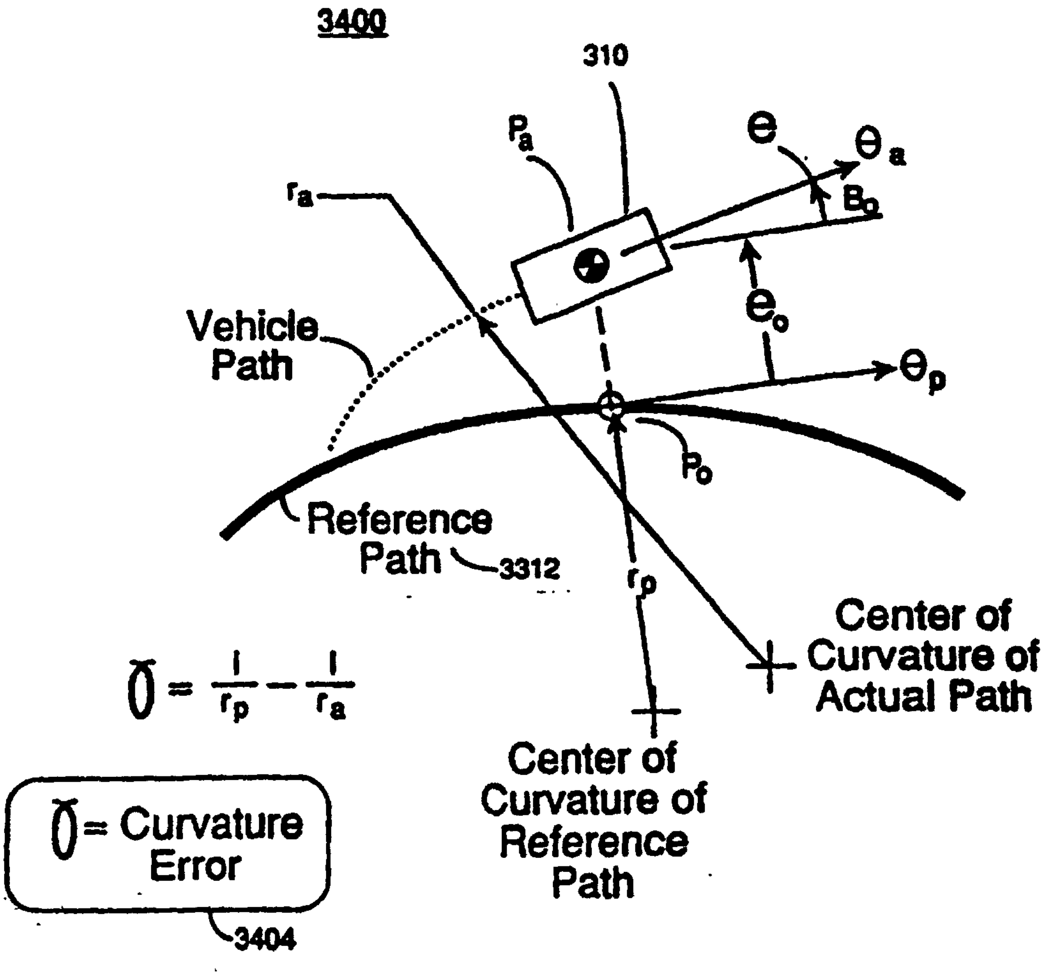
3400
310
$P_a$
e
$\theta_a$
$r_a$
$B_o$
Vehicle Path
$e_o$
$\theta_p$
$P_o$
Reference Path
3312
$r_p$
Center of Curvature of Actual Path
Center of Curvature of Reference Path
$\gamma = \frac{1}{r_p} - \frac{1}{r_a}$
$\gamma$ = Curvature Error
3404

FIG. 18

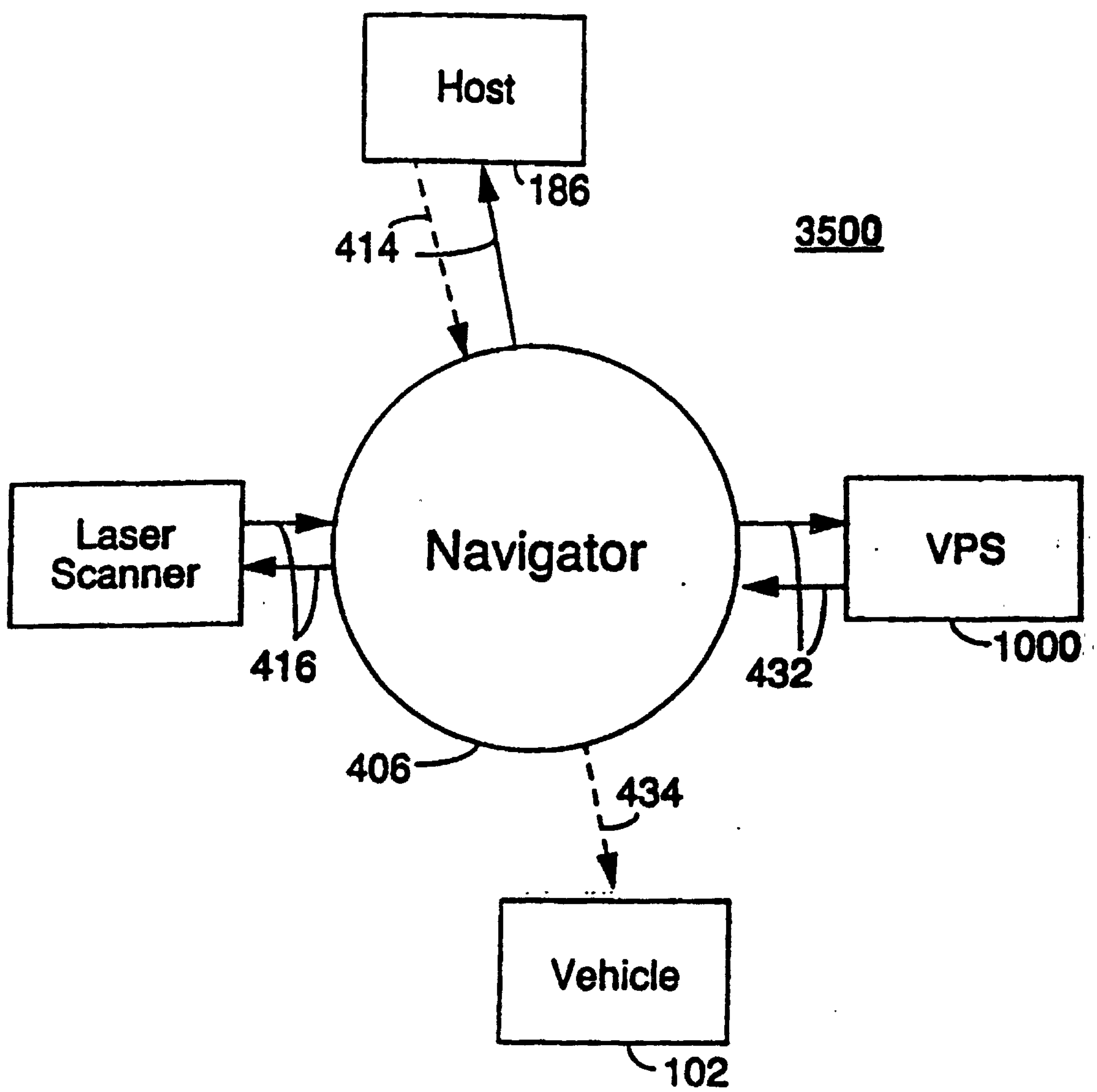
Host
186
414
3500
Laser
Scanner
Navigator
VPS
416
432
1000
406
434
Vehicle
102

FIG 19

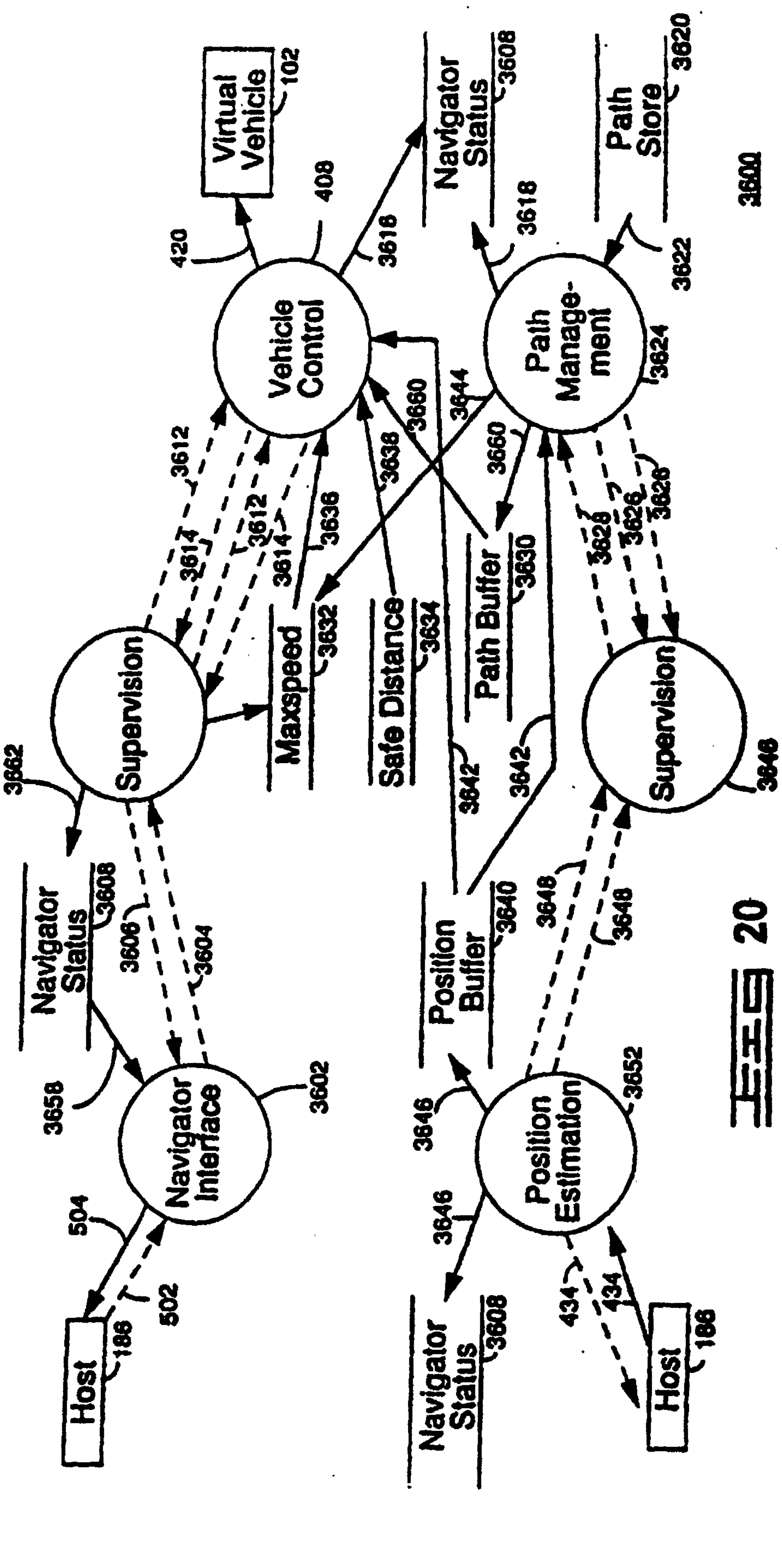

Host
186
504
502
Navigator Interface
3602
3658
Navigator Status
3608
3606
3604
Supervision
3662
Maxspeed
3632
3612
3614
3612
3614
3636
Vehicle Control
420
408
Virtual Vehicle
102
3618
Navigator Status
3608
3618
Path Store
3620
3622
Path Management
3624
3644
3660
3660
3638
Safe Distance
3634
Path Buffer
3630
3628
3626
3626
Supervision
3646
3642
3642
Position Buffer
3640
3648
3648
Position Estimation
3652
3646
3646
434
434
Host
186
Navigator Status
3608
3600


FIG. 20

## Navigator Data Flow Summary

The purpose of this summary is to list all of the data flows defined in the Navigator Architecture. Where the flow is defined, whether it is control or data, how it is used and what it is made up of is listed in this summary. A list of abreviations used in this list is included at the end of the list.

| Data Flow | Title (DFD diagram) | Ctrl/ Data | Flow Direction |
|---|---|---|---|
| 502 | Host Cmds and Queries (NI(2)) = {follow path n I set scan speed I set speed limit I start tracking I restart tracking I shutdown} | C | Host - > NI |
| 504 | Replies to Host (NI(2)) = {navigator status summary I VPS Packet I Exception Condition n I ACK I Nack I Invalid command/query } | D | NI - > Host |
| 3604 | Supervisor Instr. (NI(2)) = {FOLLOW_PATH n I SPEED_LIMIT I START_TRACKING I RESTART_TRACKING ISHUTDOWN} | C | NI - >TC |
| 3658 | Navigator Status (NI(2)) = {21 + 37 + 69 + 71 + 84} | D | /Nav Status/ - > NI |
| 432 | Position Data (Context (0)) = {VPS packet} | D | VPS - > PE |
| 3702 | CK Status (OD(2)) = {RUNNING I WAINTING I SLOW I STOP} | C | CC - >/NavStatus/ |
| 3704 | Obs. det. Instr. (ALL(1)) = {38 + 39 + 42} | C | SUPER - > OD |
| 416 | Scanner Data (CONTEXT(0)) | D | Scanner - > SIO |
| 3638 | Safe_Dis (OD(2)) | D | CC - > /Safe_Dis/ - > SP |
| 3636 | Min (MaxSpeeds) (VC (2)) = min { 18 & 25 & 29 } (not implemented) | D | /MaxSpeed/ - > SP |
| 3628 | Path Man Inst. (PM (2)) { INIT_TASK I START_TASK I STOP -TASK } | C | TC - > PM |

Fig 21A

| Data Flow | Title (DFD diagram) | Ctrl/ Data | Flow Direction |
|---|---|---|---|
| 3614 | Vehicle Control (VC(2)) = { ACK I NACK } | C | SP - > TC |
| 3612 | Veh. Ctrl. Instr. (VC(2)) = { INIT_TASK I START_TASK I stop _TASK I STOP_VEH } | C | TC - > SP |
| 3650 | Position Est. Instr. (PE(2)) = {INIT-TASK I START_TASK I STOP_TASK } | C | TC - > PE |
| 3660 | Vehicle Path (PM(2)) = { n Path Postures } | D | PM - >/Path Buf/ |
| 3612 | Exception Veh. Cmd (VC(2)) = { STOP_VEH } | C | EC - > SP |
| 3644 | Speed Limit (Path Manager) (PM(2)) | D | PM - >/MaxSpeed/ |
| 432 | VPS Control (PE(2)) (not implemented) | C | PE - > VPS |
| 416 | Scanner Ctrl (OD(2)) = {Scanner Motor Amp instructions} (not implemented) | C | SC - > Scanner |
| 4102 | Obs det Status (ALL(1)) = {6+85+86} | D | OD - >/NavStatus/ |
| 420 | Vehicle Commands (VC(2)) | C | SP - > Vehicle |
| 3622 | Path Data (PM(2)) = { n Path Postures} | D | /Path Store/ - > PM |
| 3642 | Valid VPS Packet (PE(2)) = {VPS data} | D | PE - > /Pos Buff/ |
| 3654 | Speed Limit (Task Ctrl) (TC(2)) | D | TC - > /MaxSpeed/ |

FIG 21B

| Data Flow | Title (DFD diagram) | Ctrl/ Data | Flow Direction |
|---|---|---|---|
| 3612 | Supervisor Resp. (ALL(1)) = (87 + 61) | C | SUPER -> NI |
| 3626 | Path Manager Resp. (PM(2)) = { ACK I NACK } | C | PM -> TC |
| 4104 | Speed Limit (Obs. Det.) (OD(2)) | D | CC - > /MaxSpeed/ |
| 3648 | PE Response (PE(2)) = { ACK I NACK } | C | PE - > TC |
| 3606 | Obs. Det. Resp. (ALL(1)) = { 40 + 41 + 43 } | C | OD - > SUPER |
| 3706 | Scan Done (OD(2)) = { SDAT_AVAILABLE } | C | SIO-> CC |
| 3616 | Veh. Ctrl. Status (VC(2)) = { WAITING I RUNNING } | D | SP->/NavStatus/ |
| 3616 | Veh. Ctrl. Status (VC(2)) = { WAITING I RUNNING } | D | SP->/NavStatus/ |
| 3708 | Clear Chk Instr. (OD(2)) = { START_TASK I INIT_TASK I STOP_TASK } | C | TC-> CC |
| 3710 | Scan Ctrl Instr. (OD(2)) = { START_TASK I INIT_TASK I STOP_TASK } | C | TC -> SC |
| 3712 | Scan Ctrl Resp. (OD(2)) = { ACK I NACK } (not implemented) | C | SC -> TC |
| 3714 | Clearance Chk. Resp. (OD(2)) | C | CC -> TC |
| 2716 | Scan I/O Instr. (OD(2)) (not implemented yet) | C | TC -> SIO |
| 3718 | Scan I/O Resp. (OD(2)) = { ACK I NACK } | | |
| 3720 | Tagged Scans (OD(2)) = { 8 + Scan Number } | D | SIO -> /Scan Buf/ |

FIG 21C

| Data Flow | Title (DFD diagram) | Ctrl/ Data | Flow Direction |
|---|---|---|---|
| 3614 | Tracking Exception (VC(2)) = {VEH_OFF_PATH \| PARAM_OO_BOUNDS \| PDAT_NEXIST \| SDAT_NEXIST \| PBUF_EMPTY \| PBUFF_INSUFFICIENT \| VEH_TOO_FAST \| TRACK_HEAD_ERR \| VEH_NOT_CONN \| VPS_NOT_READY \| VPS_NOT_REC \| SKIPPED_SCAN \| PBUF_EMPTY} | C | SP - > EC |
| 3722 | Collision Avoid. Except. (OD(2)) = {BAD_ANGLE \| PDAT_NEXIST \| SDAT_NEXIST \| PBUFF_INSUFFICIENT \| VEH_OFF_PATH \| VEH_TOO_FAST \| TRACK_HEAD_ERR} | C | CC - > EC |
| 3724 | Obstacle Det Except (ALL(1)) = {52+56+57} | C | OD - > SUPER |
| 3726 | Scan Ctrl Except (OD(2)) = {LASER_FAULT} (not implemented) | C | SC - > EC |
| 3728 | Scan I/O Exception (OD(2)) = {LASER_FAULT} | C | SIO - > EC |
| 3730 | Exceptions (EC(2)) = {51+52+53+57+127+130} | C | EC - > NI |
| 3732 | PE Status (PE(2)) = {WAITING \| RUNNING} | D | PE - >/NavStatus/ |
| 3618 | PM Status (PM(2)) = {WAITING \| RUNNING} | D | PM - >/NavStatus/ |
| 3662 | Supervisor Status (TC(2)) = {WAITING \| RUNNING} | D | TC - >/NavStatus/ |
| 3734 | Scan I/O Status (OD(2)) = {WAITING \| RUNNING} | D | SIO - >/NavStatus/ |
| 3736 | Scan Ctrl Status (OD(2)) = {WAITING \| RUNNING} | D | SC - >/NavStatus/ |
| 3732 | Supervisor Status (TC(2)) = {ACK \| NACK} | C | TC - >NI |
| 3636 | PM Exception (PM(2)) | C | PM - >EC |

Fig 21D

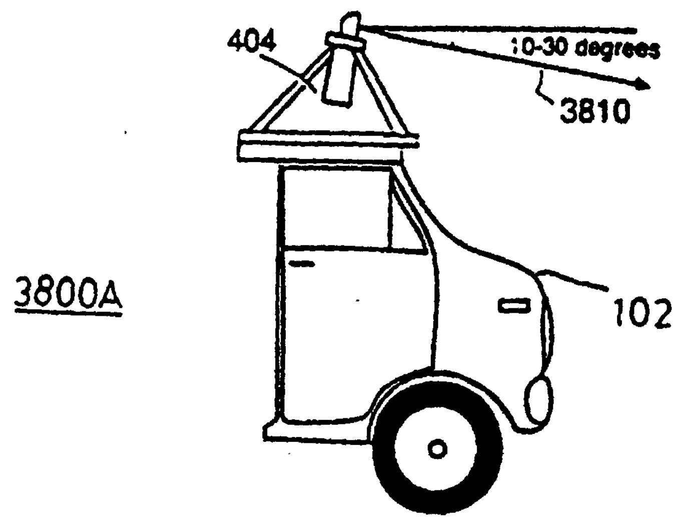


Fig 22A

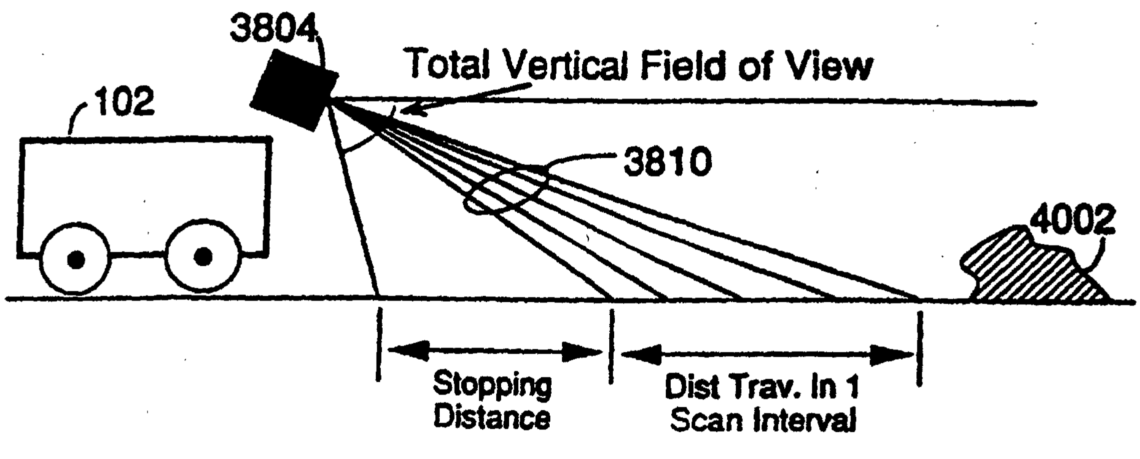


FIG 22B

3800B

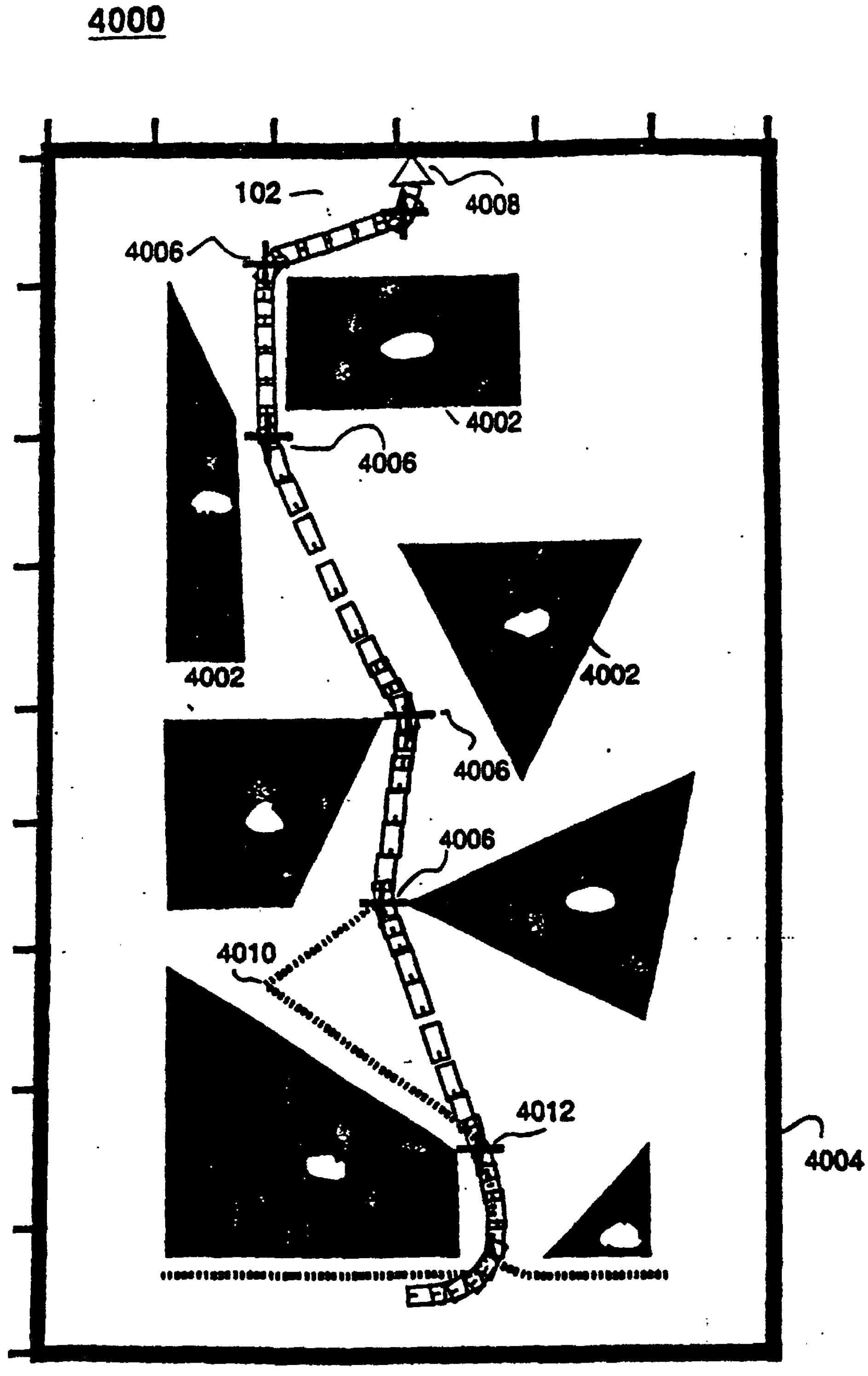
4000
102
4008
4006
4002
4006
4002
4002
4006
4006
4010
4012
4004

Fig 23

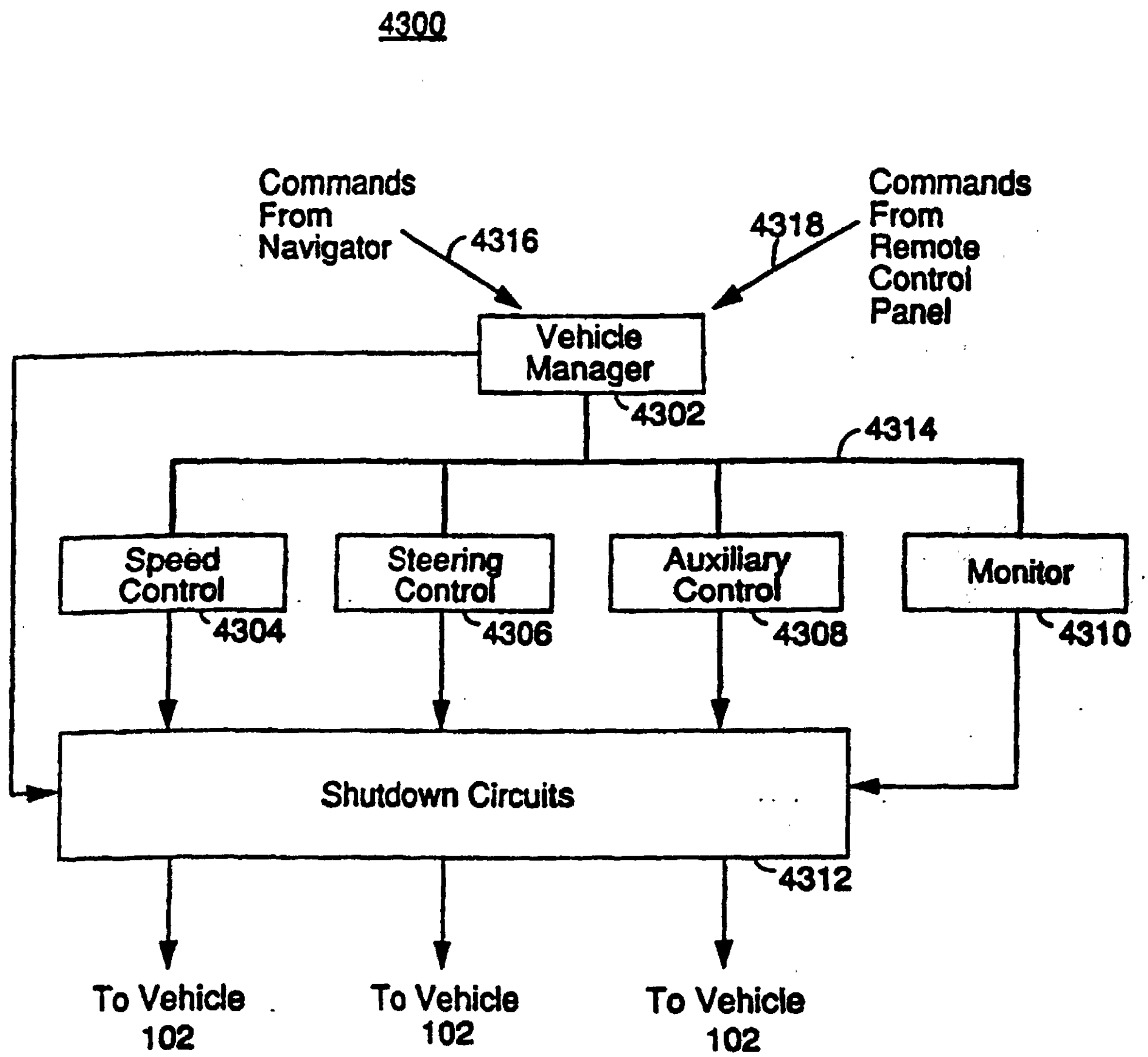
4300
Commands From Navigator
4316
4318
Commands From Remote Control Panel
Vehicle Manager
4302
4314
Speed Control
4304
Steering Control
4306
Auxiliary Control
4308
Monitor
4310
Shutdown Circuits
4312
To Vehicle 102
To Vehicle 102
To Vehicle 102

FIG. 24

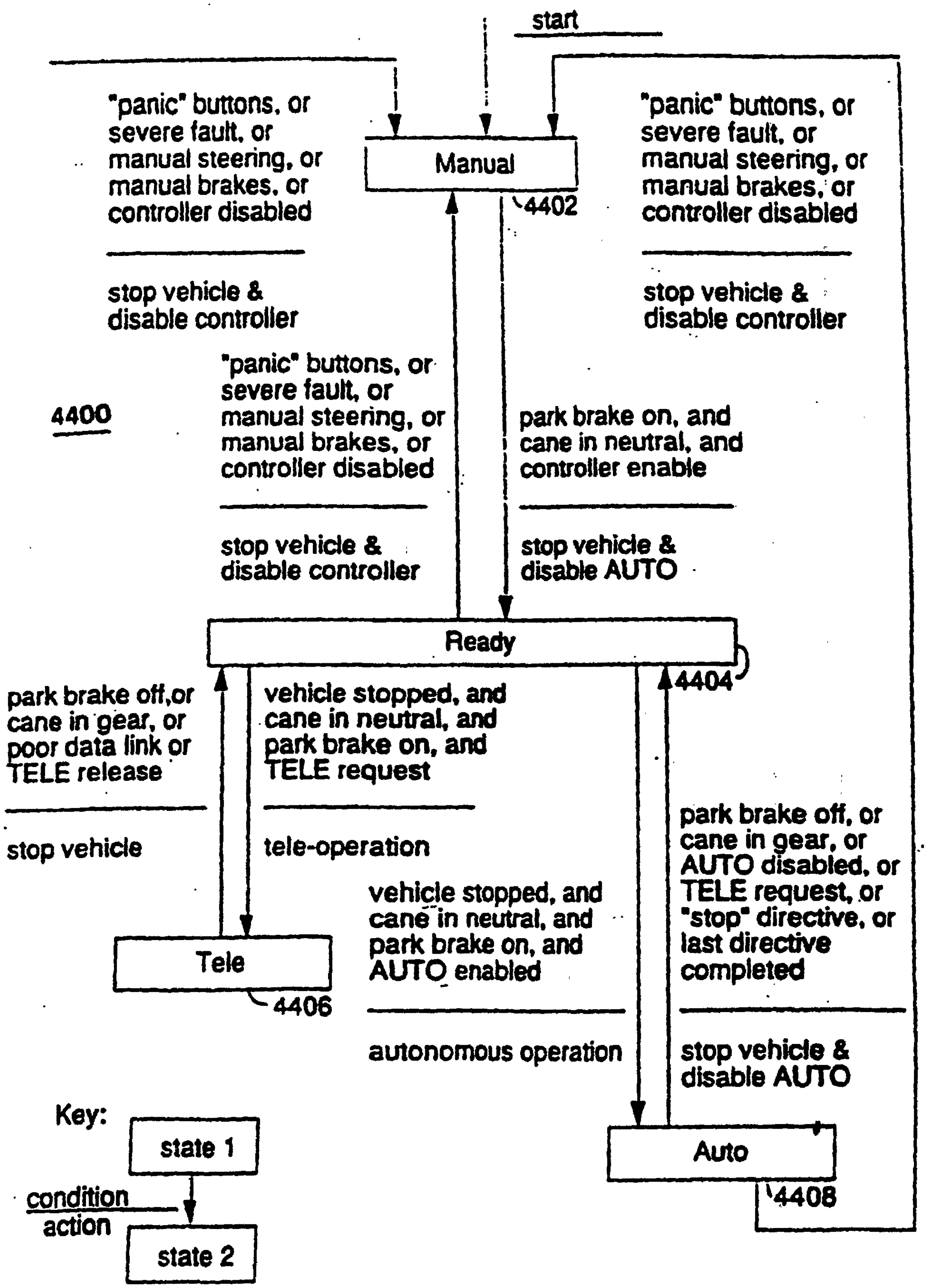
start
"panic" buttons, or severe fault, or manual steering, or manual brakes, or controller disabled
stop vehicle & disable controller
Manual
4402
"panic" buttons, or severe fault, or manual steering, or manual brakes, or controller disabled
stop vehicle & disable controller
4400
"panic" buttons, or severe fault, or manual steering, or manual brakes, or controller disabled
stop vehicle & disable controller
park brake on, and cane in neutral, and controller enable
stop vehicle & disable AUTO
Ready
4404
park brake off,or cane in gear, or poor data link or TELE release
stop vehicle
vehicle stopped, and cane in neutral, and park brake on, and TELE request
tele-operation
park brake off, or cane in gear, or AUTO disabled, or TELE request, or "stop" directive, or last directive completed
stop vehicle & disable AUTO
vehicle stopped, and cane in neutral, and park brake on, and AUTO enabled
autonomous operation
Tele
4406
Auto
4408
Key:
state 1
condition
action
state 2

FIG 25

FIG. 26

4600

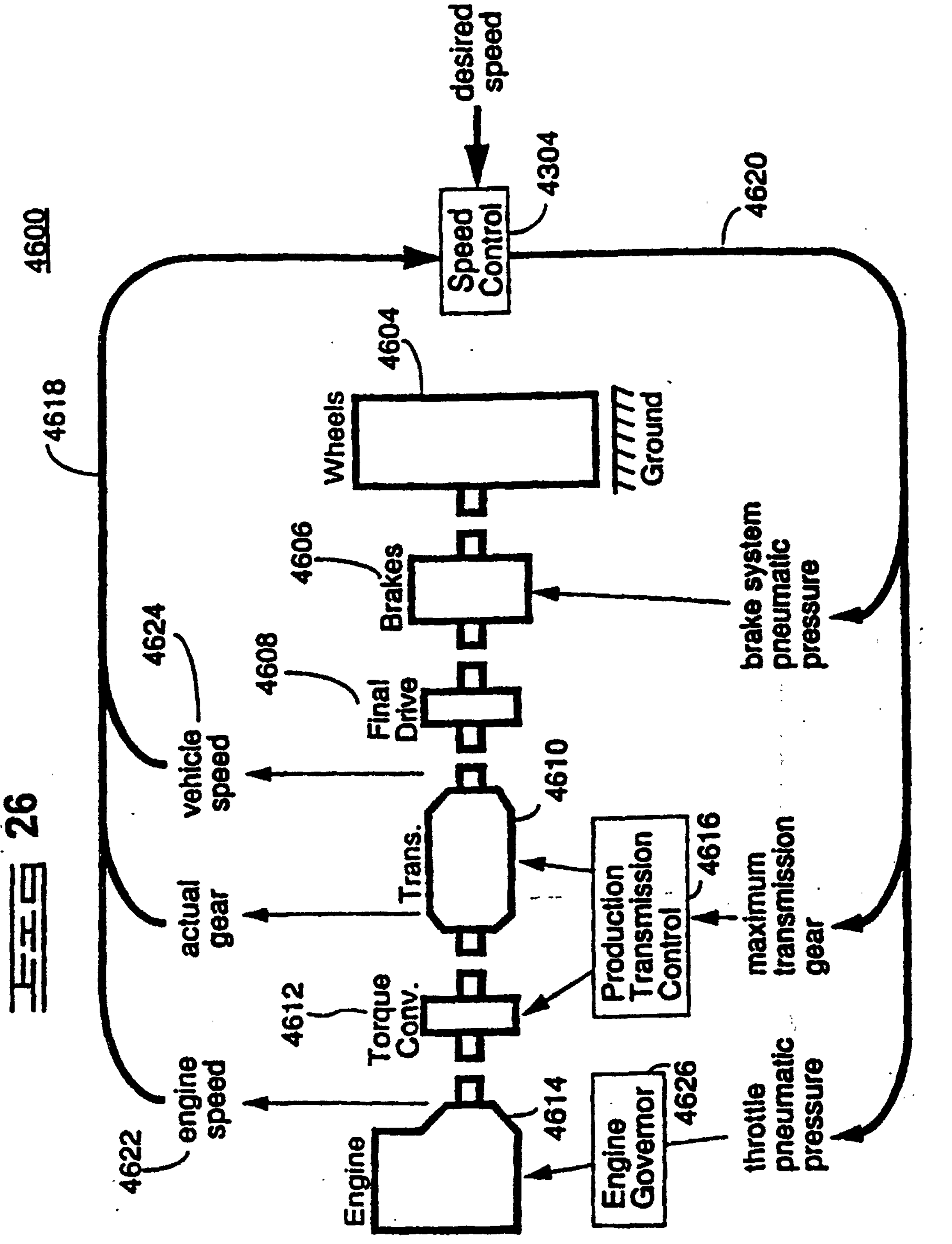
desired speed
Speed Control
4304
4620
4618
Wheels
4604
Ground
4606
Brakes
brake system pneumatic pressure
4624
4608
Final Drive
vehicle speed
4610
Trans.
actual gear
Production Transmission Control
4616
maximum transmission gear
4612
Torque Conv.
engine speed
4622
4614
Engine
Engine Governor
4626
throttle pneumatic pressure

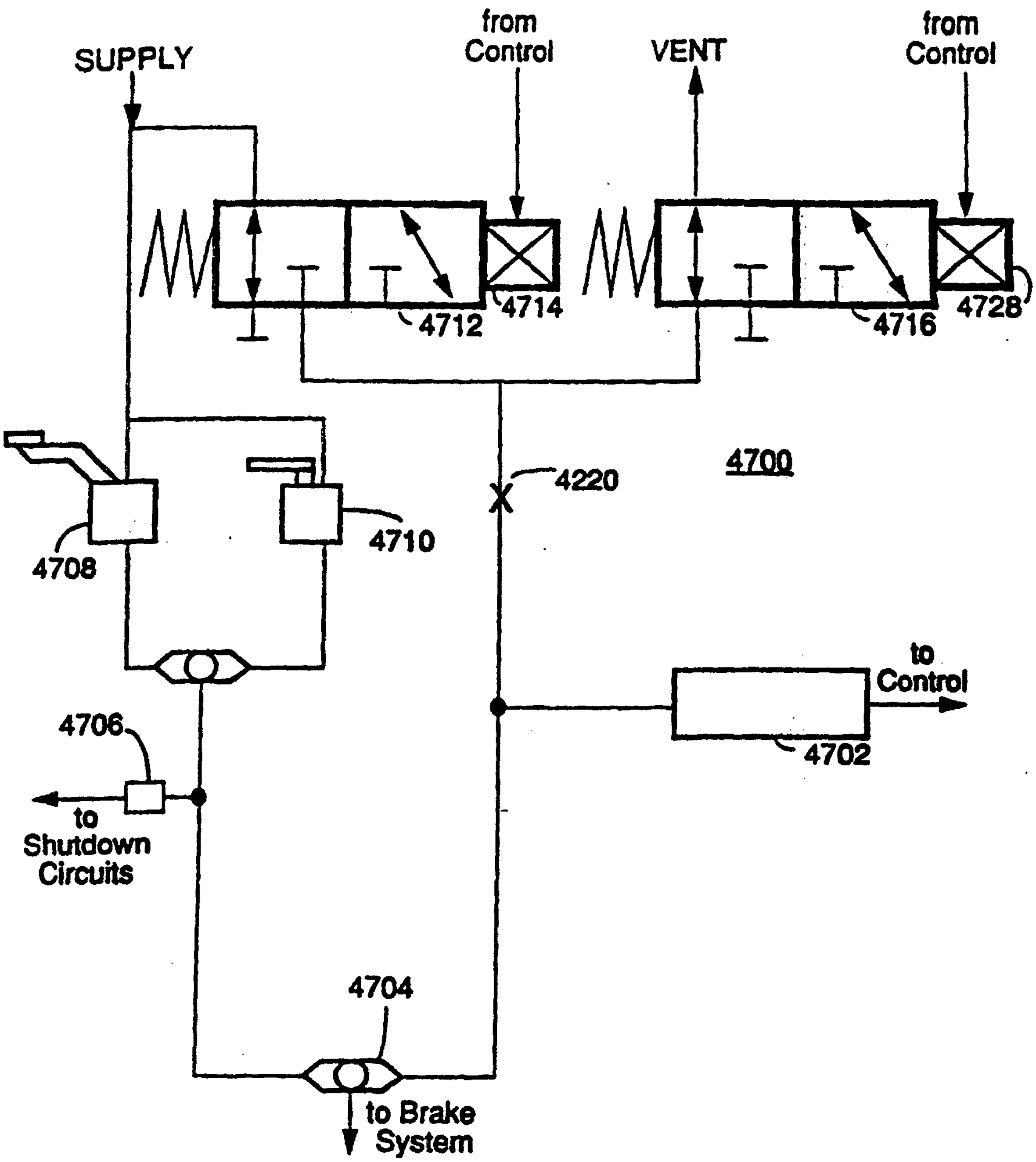
SUPPLY
from Control
VENT
from Control
4712
4714
4716
4728
4700
4220
4708
4710
to Control
4702
4706
to Shutdown Circuits
4704
to Brake System

FIG 27

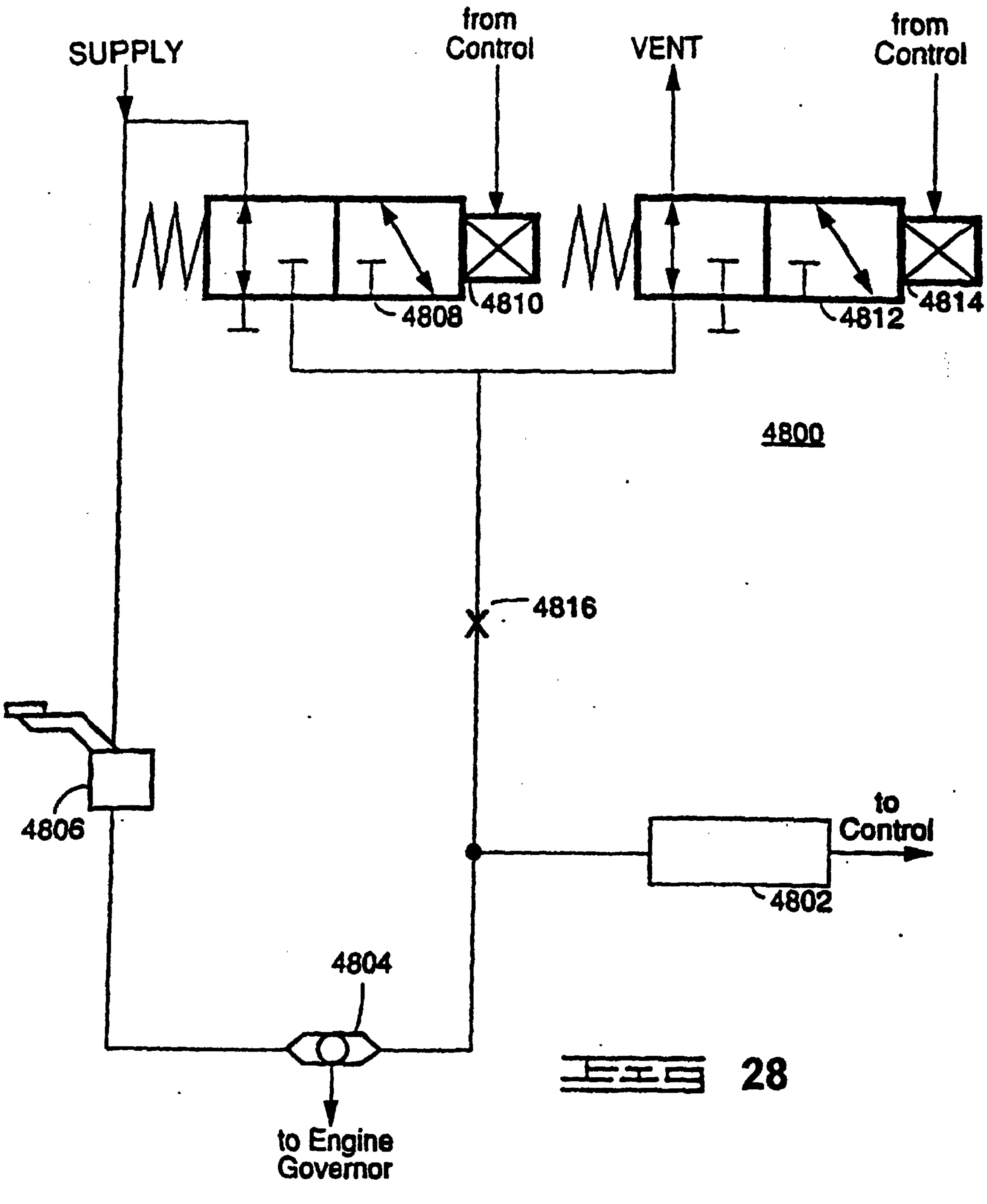
SUPPLY
from Control
VENT
from Control
4808
4810
4812
4814
4800
4816
4806
to Control
4802
4804
to Engine Governor

FIG 28

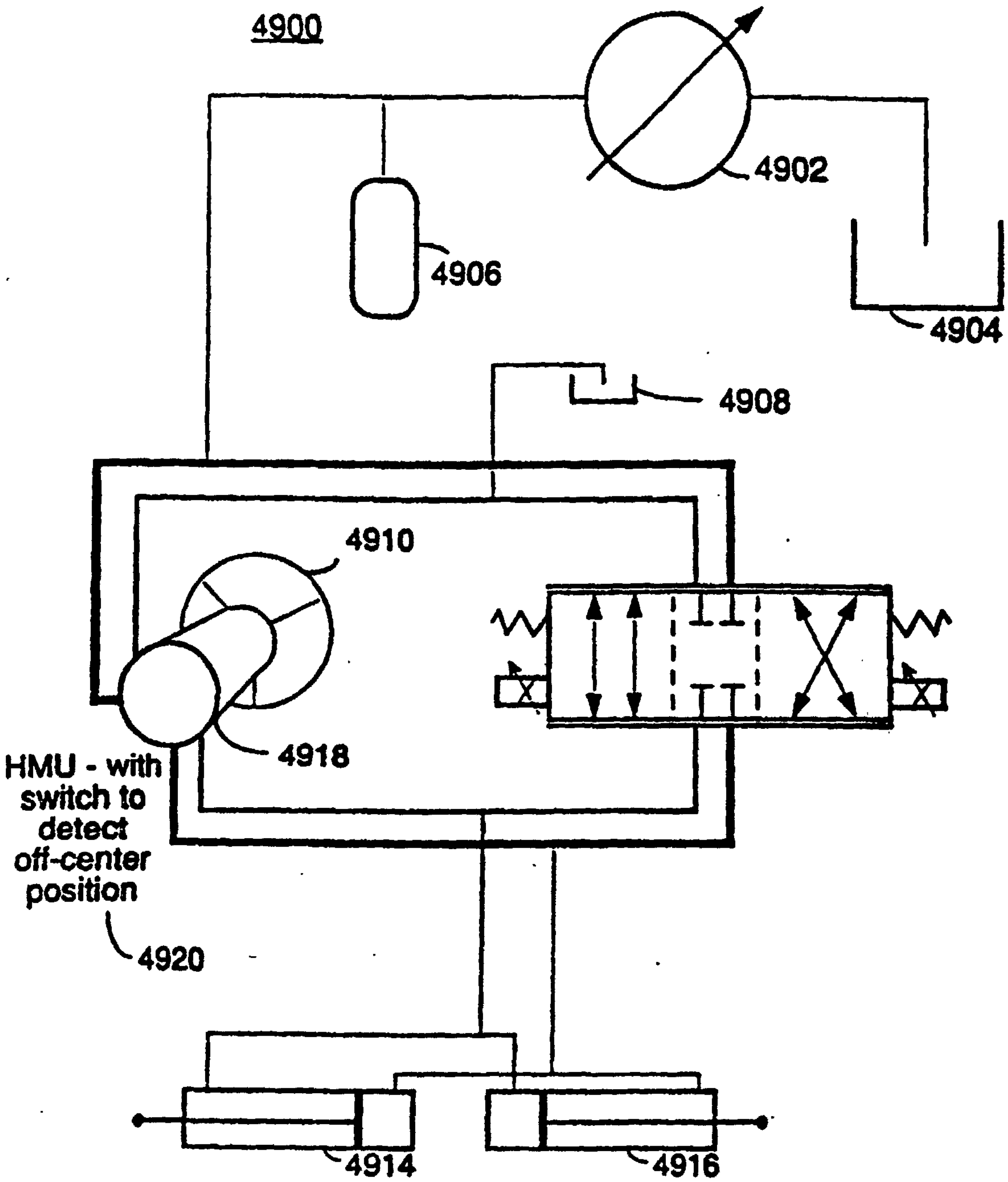
4900
4902
4906
4904
4908
4910
4918
HMU - with switch to detect off-center position
4920
4914
4916

FIG 29

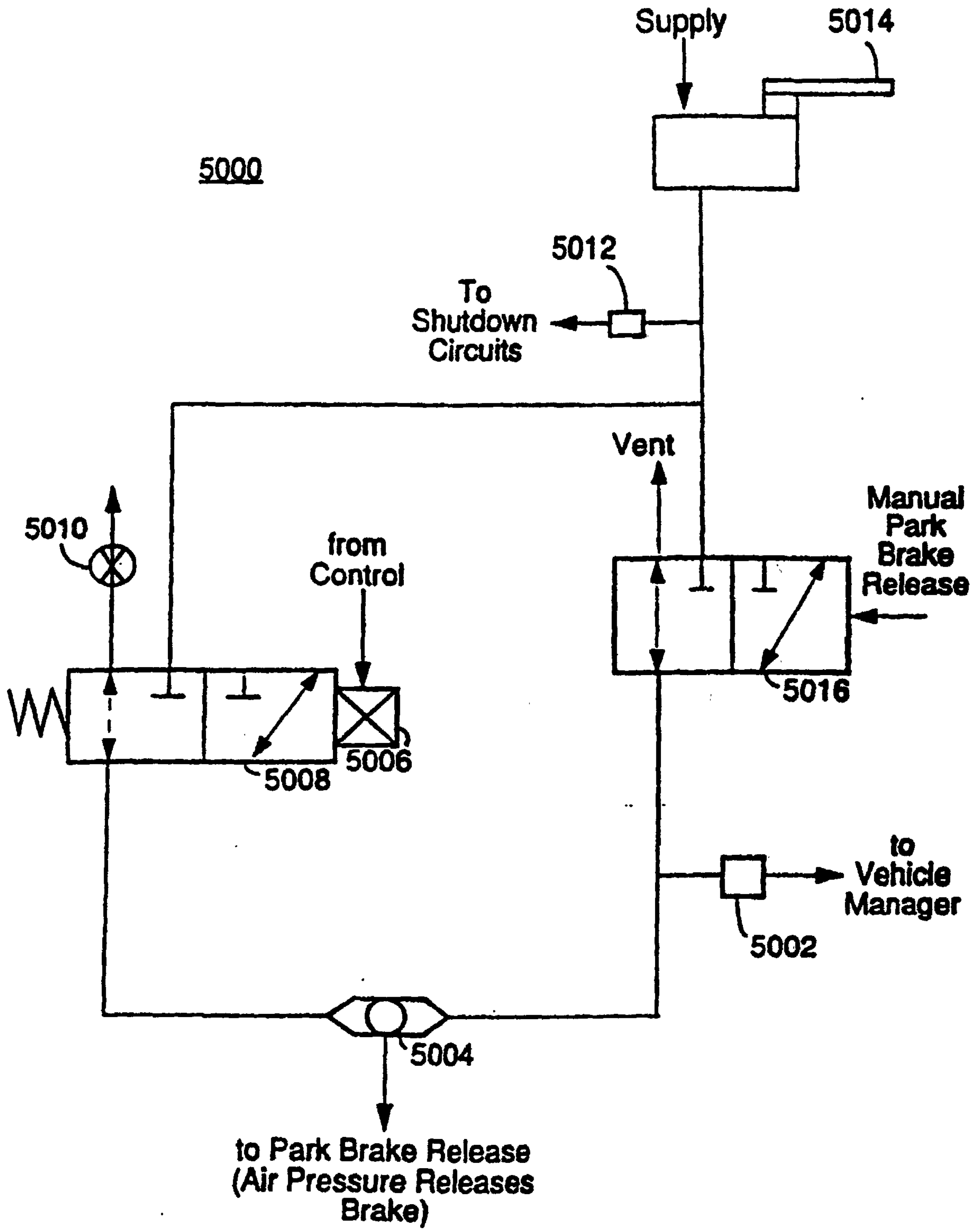
5000
Supply
5014
5012
To
Shutdown
Circuits
Vent
Manual
Park
Brake
Release
5010
from
Control
5016
5008
5006
to
Vehicle
Manager
5002
5004
to Park Brake Release
(Air Pressure Releases
Brake)

FIG 30

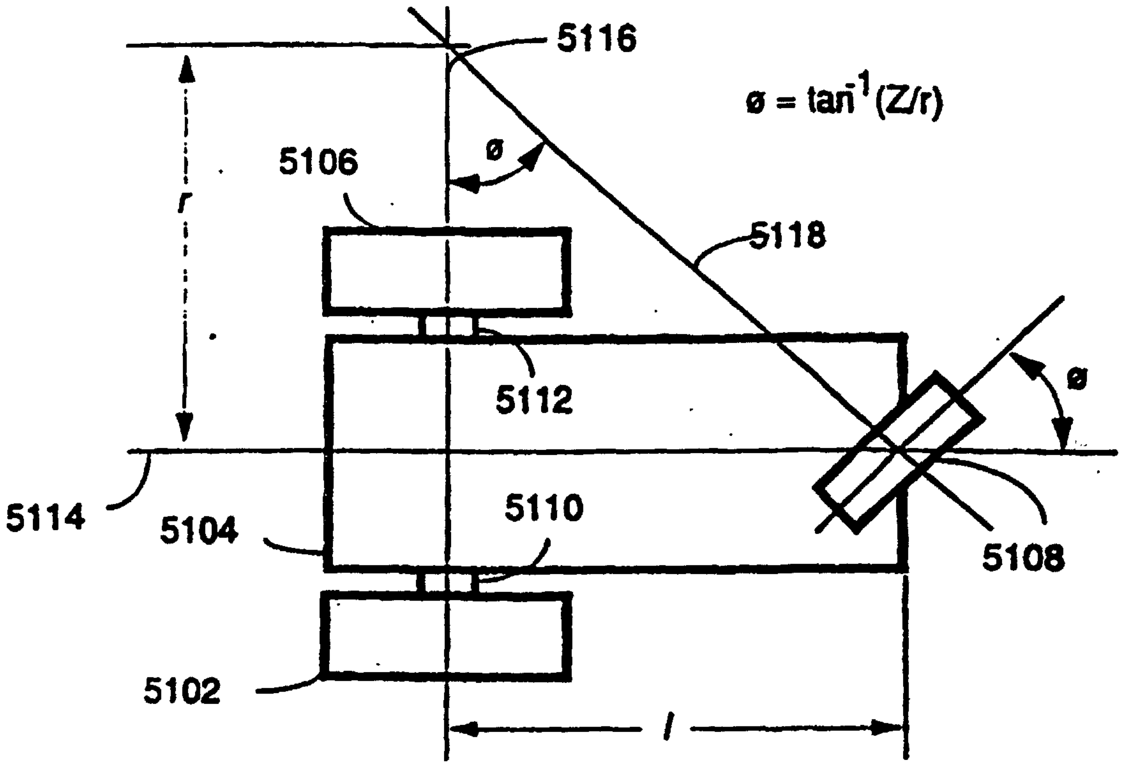


FIG 31 5100

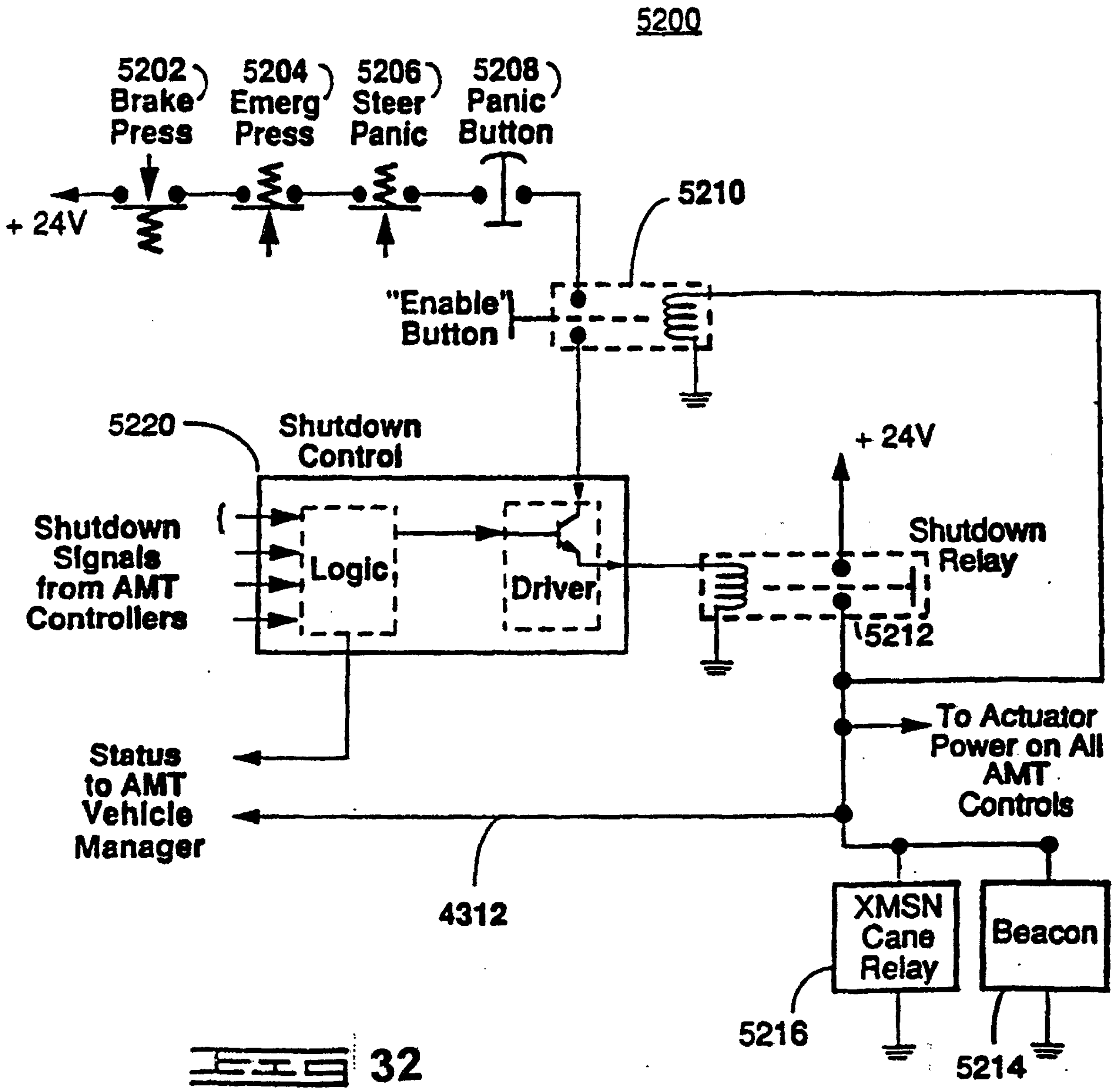
5200
5202 Brake Press
5204 Emerg Press
5206 Steer Panic
5208 Panic Button
+ 24V
5210
"Enable" Button
5220
Shutdown Control
Shutdown Signals from AMT Controllers
Logic
Driver
+ 24V
Shutdown Relay
5212
To Actuator Power on All AMT Controls
Status to AMT Vehicle Manager
4312
XMSN Cane Relay
Beacon
5216
5214

FIG 32

FIG 33

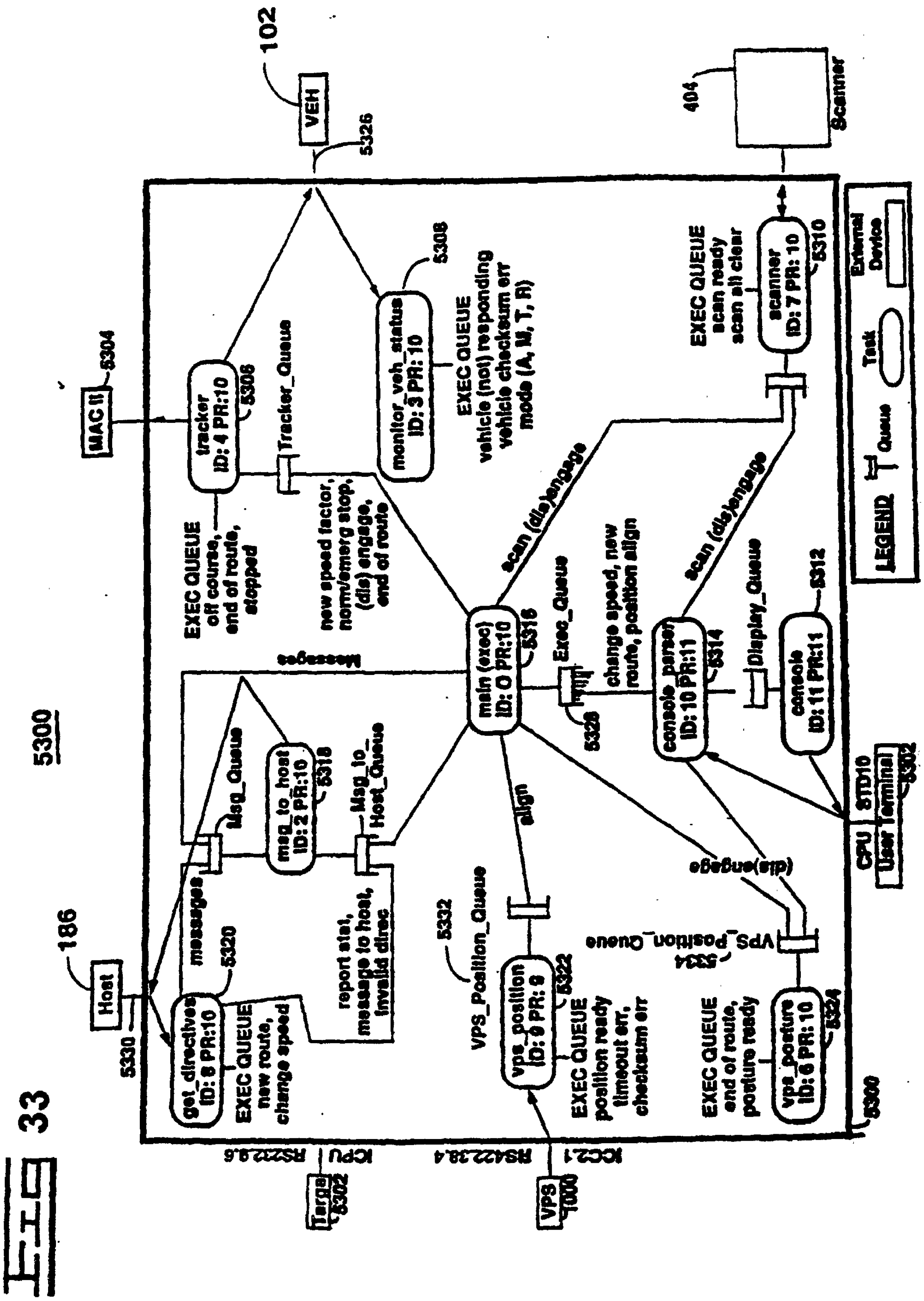
5300
102
VEH
5326
404
Scanner
MAC II
5304
186
Host
tracker
ID: 4 PR:10
5306
Tracker_Queue
monitor_veh_status
ID: 3 PR: 10
5308
EXEC QUEUE
vehicle (not) responding
vehicle checksum err
mode (A, M, T, R)
EXEC QUEUE
off course,
end of route,
stopped
new speed factor,
norm/emerg stop,
(dis) engage,
end of route
scan (dis)engage
EXEC QUEUE
scan ready
scan all clear
scanner
ID: 7 PR: 10
5310
Messages
main (exec)
ID: 0 PR:10
5316
Exec_Queue
change speed, new
route, position align
console_parser
ID: 10 PR:11
5314
Display_Queue
console
ID: 11 PR:11
5312
5328
msg_to_host
ID: 2 PR:10
5318
Msg_Queue
Msg_to_
Host_Queue
messages
5320
get_directives
ID: 8 PR:10
5330
EXEC QUEUE
new route,
change speed
report stat,
message to host,
invalid direc
align
5332
VPS_Position_Queue
vps_position
ID: 9 PR: 9
5322
EXEC QUEUE
position ready
timeout err,
checksum err
(dis)engage
VPS_Position_Queue
5334
vps_posture
ID: 6 PR: 10
5324
EXEC QUEUE
end of route,
posture ready
CPU
STD10
User terminal
5302
5300
ICPU
RS232.9.6
Targa
5302
RS422.38.4
ICC2.1
VPS
1000
LEGEND
Queue
Task
External
Device